# EUROPEAN PATENT SPECIFICATION

(11) **EP 2 043 096 B1**
(45) Date of publication and mention of the grant of the patent: **16.03.2011**
(21) Application number: 08017063.2
(22) Date of filing: 26.09.2008
(51) Int. Cl.: G11B 7/245, G11B 7/247, G11B 7/248, G11B 7/246

(54) **Two-photon absorption recording material containing dye having polymerizable group**
Zweiphotonen-Absorptions-Aufzeichnungsmedium mit Farbstoff mit einer polymerisierbaren Gruppe
Matériau d'enregistrement d'absorption à deux photons contenant un colorant disposant d'un groupe polymérisable

(30) Priority: 28.09.2007 JP 2007256178
(43) Date of publication of application: 01.04.2009
(73) Proprietor: FUJIFILM Corporation, Minato-ku Tokyo (JP)
(72) Inventor: Akiba, Masaharu, Ashigarakami-gun Kanagawa (JP); Takizawa, Hiroo, Ashigarakami-gun Kanagawa (JP)
(74) Representative: HOFFMANN EITLE

(56) References cited:
- WO-A-98/21521
- WO-A-2007/060674
- JP-A- 2004 346 238

## Description

### Background of the Invention

### 1. Field of the Invention

The present invention relates to a two-photon absorption three-dimensional optical recording medium where optical information is recorded by three-dimensionally forming pits in the inside of the recording medium through simultaneous two-photon absorption and the recording pits thus-recorded are read out. The present invention also relates to a recording material for a simultaneous two-photon absorption recording medium, where the refractive index in the recorded portion is greatly changed before and after the recording.

### 2. Description of the Related Art

In general, the non-linear optical effects indicate non-linear optical responses proportional to the square, cubic or higher power of photoelectric field applied. Known examples of the second order non-linear optical effect proportional to the square of photoelectric field applied include second harmonic generation (SHG), optical rectification, photorefractive effect, Pockels effect, parametric amplification, parametric oscillation, light sum frequency mixing and light difference frequency mixing. Examples of the third order non-linear optical effect proportional to the cube of photoelectric filed applied include third harmonic generation (THG), optical Kerr effect, self-induced refractive index change and two-photon absorption.

As for the non-linear optical materials exhibiting such non-linear optical effects, a large number of inorganic materials have been heretofore found. However, the inorganic materials can be hardly used in practice because so-called molecular design for optimizing desired non-linear optical characteristics or various properties necessary for the production of a device is difficult. On the other hand, the organic compound can realize not only optimization of desired non-linear optical characteristics by the molecular design but also control of other various properties and therefore, the probability of its practical use is high. Thus, the organic compound is attracting attention as a promising non-linear optical material.

Out of non-linear optical characteristics of the organic compound, third order non-linear optical effects are recently taken note of and above all, non-resonant two-photon absorption is receiving a lot of attention. The two-photon absorption is a phenomenon such that a molecule simultaneously absorbs two photons and forms excited state. In the case where two-photon absorption occurs in an energy region having no (linear) absorption band of the compound, this is called non-resonant two-photon absorption. In the following, even when not particularly specified, "two-photon absorption" indicates "non-resonant two-photon absorption". Also, "simultaneous two-photon absorption" is sometimes simply referred to as "two-photon absorption" by omitting the "simultaneous".

The non-resonant two-photon absorption efficiency is proportional to the square of photoelectric field applied (quadratic dependency of two-photon absorption). Therefore, when a laser is irradiated on a two-dimensional plane, two-photon absorption occurs only at a position having a strong electric field in the central part of the laser spot and does not occur in a portion having a weak electric field in the periphery. On the other hand, in three-dimensional space, two-photon absorption occurs only in a region having a strong electric field near the focus where the laser light is converged through a lens, and the two-photon absorption does not occur at all in an off-focus region because the electric field is weak. As compared with linear absorption where excitation takes place in all positions proportionally to the strength of photoelectric field applied, non-resonant two-photon absorption allows excitation to take place only at the very small region near the focus point because of the quadratic dependency of the incident light intensity and therefore, the spatial resolution is remarkably enhanced.

Usually, in the case of inducing non-resonant two-photon absorption, a short pulsed laser in a near infrared region that is longer than the wavelength region having (linear) absorption band of a compound and does not have the absorption of the compound is used. Since near infrared light in a so-called transparent region is used, the excitation light can reach the inside of a sample without involving absorption or scattering and one point inside of the sample can be excited with very high spatial resolution due to the quadratic dependency of non-resonant two-photon absorption.

Accordingly, if polymerization can be caused using the excitation energy obtained through non-resonant two-photon absorption, polymerization can be induced at an arbitrary position in three-dimensional space and this enables the application also to a three-dimensional optical recording medium, a fine three-dimensional stereo-lithography material and the like, which are considered as an ultimate high-density recording medium.

In this respect, a three-dimensional optical recording medium where multilayer recording is performed in the thickness direction is attracting attention as an ultimate ultrahigh-density recording medium, and a two-photon absorption three-dimensional recording material is attracting attention as a useful material for the three-dimensional optical recording medium.

Under these circumstances, JP-A-2004-346238 (the term "JP-A" as used herein means an "unexamined published Japanese patent application") proposes a three-dimensional optical recording medium where polymerization of a polymerizable compound present together is caused by using excitation energy obtained through non-resonant two-photon absorption of a two-photon absorbing compound and the polymerization can be brought about with a very high spatial resolution ability at an arbitrary position in three-dimensional space. This technique is found to produce an effect regarding increase in the refractive index, but more improvements are demanded.

WO 98/21521 relates to multi-photon absorbing compounds, which generally include a bridge of pi-conjugated bonds connecting electron donating or accepting groups. The bridge may also be substituted with further electron donating or accepting groups.

WO 2007/060674 concerns a multi-layer three-dimensional non-linear optical data carrier, which comprises a substance capable of being excited by two-photon absorption. The substance is required to be switchable between two different (e.g., isomeric) states by two-photon absorption, which differ with respect to their response signals to a second two-photon excitation.

### Summary of the Invention

In JP-A-2004-346238, polymerization with high spatial resolution occurs at an arbitrary place in three-dimensional space and this enables application also to a three-dimensional optical recording medium, a fine three-dimensional stereo-lithography material and the like, which are considered as an ultimate high-density recording medium. However, when the two-photon three-dimensional optical material described in JP-A-2004-346238 is used, the refractive index difference between the recorded pit area formed through a polymerization reaction and the unrecorded area is not sufficiently large and is in need of improvement.

An object of the present invention is to provide a two-photon absorbing polymerizable three-dimensional recording material succeeding in solving the problems regarding the above-described fine three-dimensional recording utilizing photopolymerization. More specifically, an object of the present invention is to provide a two-photon absorbing polymerizable three-dimensional recording material in which a large refractive index difference can be obtained between the recorded pit area (light-irradiated region) and the unrecorded area (light-unirradiated region) before and after the recording.

As a result of intensive studies, the present inventors have found that when a dye monomer obtained by bonding a dye to a polymerizable compound which performs a polymerization reaction through two-photon absorption is used, the refractive index of the recorded pit area formed during optical recording can be made large and therefore, a large refractive index difference from the unirradiated part can be created.

That is, the above-described object of the present invention has been achieved by the following inventions.
(1) A simultaneous two-photon absorption three-dimensional recording material comprising at least one kind of dye having at least one polymerizable group,
   further comprising a two-photon absorption compound, a polymerization initiator and a binder, in addition to said dye having at least one polymerizable group.
(2) The simultaneous two-photon absorption three-dimensional recording material as described in (1), wherein the dye having at least one polymerizable group has an absorption spectrum showing that linear absorption of the dye is not present in the region corresponding to the recording wavelength of recording light that induces simultaneous two-photon absorption and a wavelength region in which the molar extinction coefficient of linear absorption of the dye is 10,000 or more is present in the shorter wavelength region than the wavelength of the recording light, and the molar extinction coefficient of linear absorption of the dye at the wavelength region of readout light of a simultaneous two-photon absorption three-dimensional recording medium obtained from the two-photon recording material is 100 or less.
(3) The simultaneous two-photon absorption three-dimensional recording material as described in any one of (1) or (2), wherein the refractive index of the dye having at least one polymerizable group at a readout wavelength of a two-photon recording medium obtained from the simultaneous two-photon absorption three-dimensional recording material is larger than the refractive index of the binder.
(4) The simultaneous two-photon absorption three-dimensional recording material as described in any one of (2) to (3), which further contains a compound not having absorption properties specified in (2) above and having at least one polymerizable group, in addition to the dye having at least one polymerizable group specified in (2) above.
(5) The simultaneous two-photon absorption three-dimensional recording material as described (4), wherein the refractive index of the compound not having absorption properties specified in (2) above and having at least one polymerizable group at a readout wavelength is larger than the refractive index of the binder at that wavelength.
(6) The simultaneous two-photon absorption three-dimensional recording material as described in any one of (1) to (5), wherein the binder does not contain an aryl group, an aromatic heterocyclic group, a chlorine atom, a bromine atom, an iodine atom or a sulfur atom.
(7) The simultaneous two-photon absorption three-dimensional recording material as described in any one of (1) to (6), wherein the binder contains at least one polymer compound selected from the group consisting of cellulose esters, polyvinyl alcohols, polyvinyl acetate, polyvinyl butyral, polyvinyl formal, and fluorine-containing polymer compounds.
(8) The simultaneous two-photon absorption three-dimensional recording material as described in any one of (1) to (6), wherein the binder is a polymer compound having a three-dimensional crosslinked structure formed from a thermal crosslinking compound.
(9) The simultaneous two-photon absorption three-dimensional recording material as described in any one of (1) to (6) and (8), wherein the binder is a polymer compound having a three-dimensional crosslinked structure of a polyurethane compound obtained by thermal crosslinking of polyisocyanates and polyalcohols.
(10) A simultaneous two-photon absorption three-dimensional recording medium made from the simultaneous two-photon absorption three-dimensional recording material as described in any one of (1) to (9), which has a recording layer where the coexisting compound having a polymerizable group is polymerized by energy or electron transfer between the polymerization initiator and the excited state of a two-photon absorption compound produced by simultaneous two-photon absorption of recording light in the light-irradiated portion and a refractive index difference is thereby created between the light-irradiated portion and the light-unirradiated portion.
(11) The simultaneous two-photon absorption three-dimensional recording material as described in (10), wherein the refractive index modulation amount formed by the refractive index difference is 0.005 or more.
(12) The simultaneous two-photon absorption three-dimensional recording material as described in any one of (1) to (11), wherein the two-photon absorption compound is an organic dye.
(13) The simultaneous two-photon absorption three-dimensional recording material as described in any one of (1) to (12), wherein the two-photon absorption compound is a methine dye or a phthalocyanine dye.
(14) The simultaneous two-photon absorption three-dimensional recording material as described in any one of (1) to (13), wherein the two-photon absorption compound is a cyanine dye, a merocyanine dye, an oxonol dye, a phthalocyanine dye or a compound represented by the following formula (1): 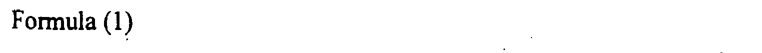 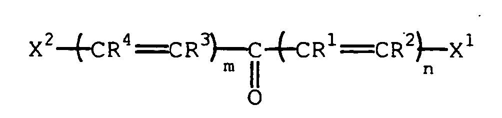 wherein R¹, R², R³ and R⁴ each independently represents a hydrogen atom or a substituent and some of R¹, R², R³ and R⁴ may combine with each other to form a ring; n and m each independently represents an integer of 0 to 4 and when n and m each is 2 or more, the plurality of R^{1'}s, R^{2'}s, R^{3'}s or R^{4'}s may be the same or different, provided that n and m are not 0 at the same time; and X¹ and X² each independently represents an aryl group, a heterocyclic group or a group represented by formula (2): 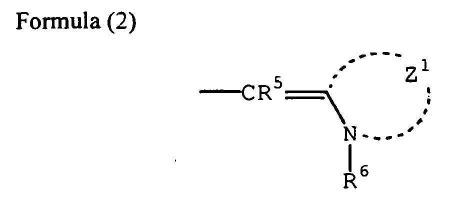 wherein R⁵ represents a hydrogen atom or a substituent, R⁶ represents a hydrogen atom, an alkyl group, an alkenyl group, an aryl group or a heterocyclic group, and Z¹ represents an atomic group for forming a 5- or 6-membered ring.
(15) The simultaneous two-photon absorption three-dimensional recording material as described in (14), wherein in the compound represented by formula (1), X¹ and X² each is a group represented by formula (2).
(16) The simultaneous two-photon absorption three-dimensional recording material as described in (14) or (15), wherein in the compound represented by formula (1), R¹ and R³ are combined to form a ring.
(17) The simultaneous two-photon absorption three-dimensional recording material as described in any one of (14) to (16), wherein in the compound represented by formula (1), R¹ and R³ are combined to form a cyclopentanone ring together with the carbonyl group.
(18) The simultaneous two-photon absorption three-dimensional recording material as described in any one of (14) to (17), wherein in the compound represented by formula (1), X¹ and X² each is a group represented by formula (2), R⁶ is an alkyl group, and the ring formed by Z¹ is an indolenine ring, an azaindolenine ring, a pyrazoline ring, a benzothiazole ring, a thiazole ring, a thiazoline ring, a benzoxazole ring, an oxazole ring, an oxazoline ring, a benzimidazole ring, a thiadiazole ring or a quinoline ring.
(19) The simultaneous two-photon absorption three-dimensional recording material as described in (18), wherein in the compound represented by formula (1), X¹ and X² each is a group represented by formula (2), R⁶ is an alkyl group, and the ring formed by Z¹ is an indolenine ring, an azaindolenine ring, a benzothiazole ring, a benzoxazole ring or a benzimidazole ring.
(20) The simultaneous two-photon absorption three-dimensional recording material as described in (14), wherein the cyanine dye is represented by the following formula (3), the merocyanine dye is represented by the following formula (4) and the oxonol dye is represented by formula (5): 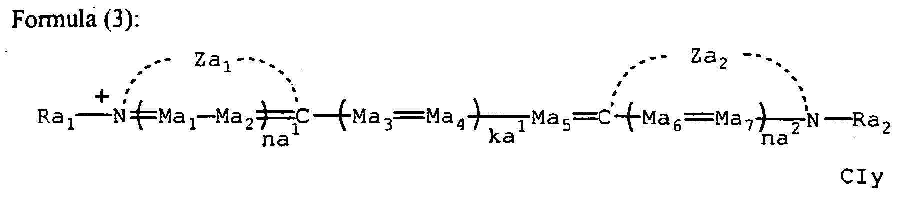 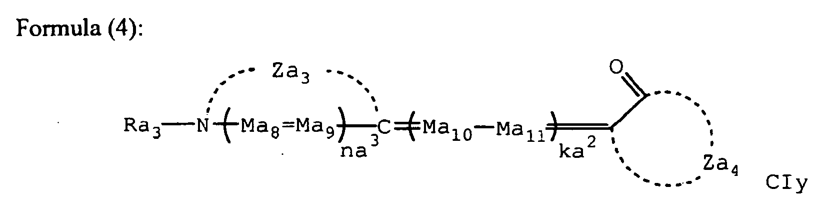 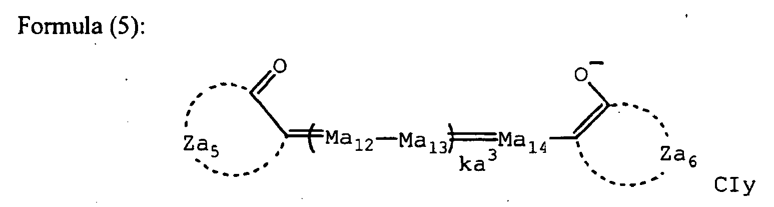 wherein Za₁, Za₂ and Za₃ each represents an atomic group for forming a 5- or 6-membered nitrogen-containing heterocyclic ring, Za₄, Za₅ and Za₆ each represents an atomic group for forming a 5- or 6-membered ring, Ra₁, Ra₂ and Ra₃ each independently represents a hydrogen atom, an alkyl group, an alkenyl group, an aryl group or a heterocyclic group, Ma₁ to Ma₁₄ each independently represents a methine group which may have a substituent or may form a ring together with another methine group, na¹, na² and na³ each represents 0 or 1, ka¹ and ka³ each represents an integer of 0 to 3, provided that when ka¹ is 2 or more, the plurality of Ma₃'s or Ma₄'s may be the same or different and when ka³ is 2 or more, the plurality of Ma₁₂'s or Ma₁₃'s may be the same or different, ka² represents an integer of 0 to 8, provided that when ka² is 2 or more, the plurality of Ma₁₀'s or Ma₁₁'s may be the same or different, Cl represents an ion for neutralizing the electric charge, and y represents a number necessary for the neutralization of electric charge.
(21) The simultaneous two-photon absorption three-dimensional recording material as described in (20), wherein in (20) above, the cyanine dye is represented by the following formula (3), the merocyanine dye is represented by the following formula (4) and the oxonol dye is represented by formula (5): 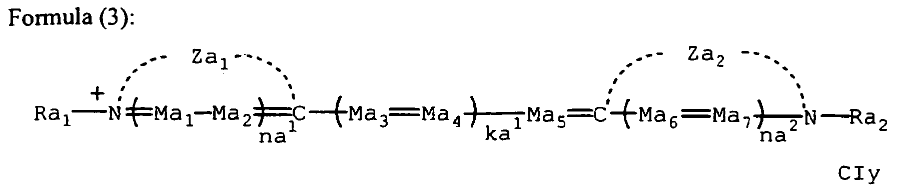 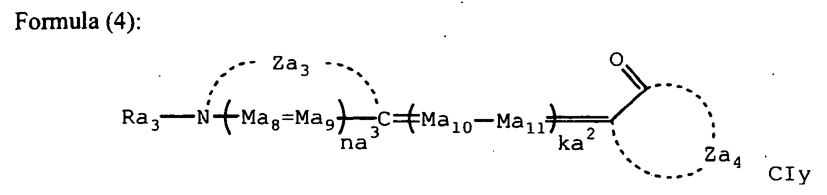 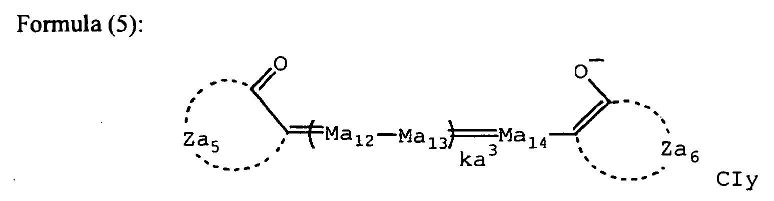 wherein Za₁, Za₂ and Za₃ each represents an oxazole nucleus, an indazole nucleus, a thiazole nucleus or an indolenine ring, Za₄, Za₅ and Za₆ each represents an atomic group for forming a 5- or 6-membered ring, Ra₁, Ra₂ and Ra₃ each independently represents a hydrogen atom, an alkyl group having a carbon number of 1 to 20, an alkenyl group having a carbon number of 2 to 20, an aryl group having a carbon number of 3 to 20, or a heterocyclic group having a carbon number of 1 to 20, Ma₁ to Ma₁₄ each independently represents a methine group which may have a substituent or may form a ring together with another methine group, na¹, na² and na³ each represents 0 or 1, ka¹ and ka³ represent an integer of 1 to 3 and an integer of 0 to 3, respectively, provided that when ka¹ is 2 or more, the plurality of Ma₃'s or Ma₄'s may be the same or different and when ka³ is 2 or more, the plurality of Ma₁₂'s or Ma₁₃'s may be the same or different, ka² represents an integer of 2 to 4, the plurality of Ma₁₀'s or Ma₁₁'s may be the same or different, CI represents an ion for neutralizing the electric charge, and y represents a number necessary for the neutralization of electric charge.
(22) The simultaneous two-photon absorption three-dimensional recording material as described in any one of (1) to (21), wherein the polymerization initiator is any one of 1) a ketone-based polymerization initiator, 2) an organic peroxide-based polymerization initiator, 3) a bisimidazole-based polymerization initiator, 4) a trihalomethyl-substituted triazine-based polymerization initiator, 5) a diazonium salt-based polymerization initiator, 6) a diaryliodonium salt-based polymerization initiator, 7) a sulfonium salt-based polymerization initiator, 8) a triphenylalkyl borate-based polymerization initiator, 9) a diaryliodonium organic boron complex-based polymerization initiator, 10) a sulfonium organic boron complex-based polymerization initiator, 11) a cationic two-photon absorption compound organic boron complex-based polymerization initiator, 12) an anionic two-photon absorption compound onium salt complex-based polymerization initiator, 13) a metal arene complex-based polymerization initiator, and 14) a sulfonic acid ester-based polymerization initiator.
(23) The simultaneous two-photon absorption three-dimensional recording material as described in (22), which can effect three-dimensional refractive index modulation by causing photopolymerization through non-resonant two-photon absorption, wherein the polymerization initiator is any one of 1) a ketone-based polymerization initiator, 3) a bisimidazole-based polymerization initiator, 4) a trihalomethyl-substituted triazine-based polymerization initiator, 6) a diaryliodonium salt-based polymerization initiator, 7) a sulfonium salt-based polymerization initiator, 11) a cationic two-photon absorption compound organic boron complex-based polymerization initiator, and 12) an anionic two-photon absorption compound onium salt complex-based polymerization initiator.
(24) The simultaneous two-photon absorption three-dimensional recording material as described in any one of (1) to (23), wherein the polymerization initiator contains a polymerization initiator that generates at least one kind of a radical and the polymerizable compound contains a radical polymerizable compound that is polymerized under the action of at least one kind of a radical.
(25) The simultaneous two-photon absorption three-dimensional recording material as described in (24), wherein in (24) above, the radical polymerization initiator that generates at least one kind of a radical is any one of 1) a ketone-based polymerization initiator, 2) an organic peroxide-based polymerization initiator, 3) a bisimidazole-based polymerization initiator, 4) a trihalomethyl-substituted triazine-based polymerization initiator, 5) a diazonium salt-based polymerization initiator, 6) a diaryliodonium salt-based polymerization initiator, 7) a sulfonium salt-based polymerization initiator, 8) a triphenylalkyl borate-based polymerization initiator, 9) a diaryliodonium organic boron complex-based polymerization initiator, 10) a sulfonium organic boron complex-based polymerization initiator, 11) a cationic two-photon absorption compound organic boron complex-based polymerization initiator, 12) an anionic two-photon absorption compound onium salt complex-based polymerization initiator, and 13) a metal arene complex-based polymerization initiator.
(26) The simultaneous two-photon absorption three-dimensional recording material as described in (25), which can effect three-dimensional refractive index modulation by causing photopolymerization through non-resonant two-photon absorption, wherein in (25), the radical polymerization initiator that generates at least one kind of a radical is any one of 1) a ketone-based polymerization initiator, 3) a bisimidazole-based polymerization initiator, 4) a trihalomethyl-substituted triazine-based polymerization initiator, 6) a diaryliodonium salt-based polymerization initiator, 7) a sulfonium salt-based polymerization initiator, 11) a cationic two-photon absorption compound organic boron complex-based polymerization initiator, and 12) an anionic two-photon absorption compound onium salt complex-based polymerization initiator.
(27) The simultaneous two-photon absorption three-dimensional recording material as described in (25), which can effect three-dimensional refractive index modulation by causing photopolymerization through non-resonant two-photon absorption, wherein in (25), the radical polymerization initiator that generates at least one kind of a radical is any one of 3) a bisimidazole-based polymerization initiator, 6) a diaryliodonium salt-based polymerization initiator, 7) a sulfonium salt-based polymerization initiator, 11) a cationic two-photon absorption compound organic boron complex-based polymerization initiator, and 12) an anionic two-photon absorption compound onium salt complex-based polymerization initiator.
(28) The simultaneous two-photon absorption three-dimensional recording material as described in any one of (1) to (27), wherein the polymerization initiator contains a polymerization initiator that generates at least one kind of an acid and the polymerizable compound contains a cationic polymerizable compound that is polymerized under the action of at least one kind of an acid.
(29) The simultaneous two-photon absorption three-dimensional recording material as described in (28), which can effect three-dimensional refractive index modulation by causing photopolymerization through non-resonant two-photon absorption, wherein in (28), the radical polymerization initiator that generates both at least one kind of a radical and at least one kind of an acid is either 6) a diaryliodonium salt-based polymerization initiator, or 7) a sulfonium salt-based polymerization initiator.
(30) The simultaneous two-photon absorption three-dimensional recording material as described in any one of (1) to (29), wherein the two-photon absorption compound has at least one hydrogen bonding group.
(31) The simultaneous two-photon absorption three-dimensional recording material as described in (31), wherein the hydrogen bonding group is a -COOH group or a -CONH₂ goup.
(32) A modulation method for effecting three-dimensional refractive index modulation, including causing photopolymerization through two-photon absorption induced by irradiating the simultaneous two-photon absorption three-dimensional recording material described in any one of (1) to (32) with laser light at a wavelength being longer than the linear absorption band of the two-photon absorption compound and not having linear absorption.
(33) A three-dimensional recording method utilizing three-dimensional refractive index modulation caused by simultaneous two-photon absorption induced polymerization of the recording material described in any one of (1) to (31) with simultaneous two-photon excitation by laser light at the wavelength that is longer than the linear absorption bands of the two-photon absorption compound and that linear absorption of the recording material is no present at, and generated by change of the compositional ratio of the polymerizable compound and its polymerization reaction product to the binder between the laser-irradiated portion and the laser unirradiated portion.
(34) A three-dimensional optical recording medium containing the simultaneous two-photon absorption three-dimensional recording material described in any one of (1) to (31).

### Detailed Description of the Invention

The simultaneous two-photon absorption three-dimensional recording material (strictly, the "non-resonant simultaneous two-photon absorption three-dimensional recording material", but in the present invention, this is sometimes referred to by omitting "non-resonant" or further omitting "simultaneous") capable of effecting three-dimensional refractive index modulation by causing photopolymerization through simultaneous two-photon absorption is described in detail below.

The two-photon absorption three-dimensional recording material of the present invention contains, as an essential component, a dye having a polymerizable monomer (sometimes referred to as a "dye monomer") and further contains a two-photon absorption compound, a radical or cationic polymerization initiator that generates a radical or an acid by using excitation energy of the two-photon absorption compound, a binder composed of a polymer compound, and, if desired, additives such as chain transfer agent, heat stabilizer, plasticizer and solvent.

The two-photon absorption three-dimensional recording material contains a dye having a polymerizable group, that is, a dye monomer, where in the area irradiated with laser light, an excited state is produced through non-resonant two-photon absorption by the two-photon absorption compound and a radical or an acid is subsequently generated from the initiator by utilizing the excited state, as a result, polymerization of the dye monomer proceeds and the refractive index is changed. This series of photoreactions produce a refractive index difference from the unirradiated part and so-called pits are formed. The pit as used in the present invention is a pit having a concept commonly employed in the information recording material and indicates a unit element for carrying information recording. The recorded pit produced by photopolymerization through non-resonant two-photon absorption is excellent in the stability and enables recording of high-definition information with excellent preservability.

In a preferred embodiment, the two-photon absorption three-dimensional recording material of the present invention contains the above-described photopolymerizable dye monomer, a two-photon absorption compound, a polymerization initiator, a polymerizable compound and a binder composed of a polymer compound. In particular, it is preferred that the refractive index at a readout wavelength greatly differs between the dye monomer and the binder. In this case, photopolymerization brought about through non-resonant two-photon absorption causes the compositional ratio of the dye monomer and its polymerization product to the binder to be non-uniformized between the laser focus area and the laser non-focus area, as a result, three-dimensional refractive index modulation is intensified.

The refractive index modulation formed is preferably more than 0.005, more preferably more than 0.01, still more preferably more than 0.05.

As for the refractive index difference between the polymerizable compound and the binder, either the polymerizable compound or the binder may be larger in the refractive index, but the refractive index of the polymerizable compound is preferably larger than the refractive index of the binder.

The two-photon absorption three-dimensional recording material of the present invention is described in detail below.

### <Dye Monomer>

First, the dye monomer is described.

The two-photon absorption three-dimensional recording material of the present invention is characterized by containing at least one kind of a dye having a polymerizable group. The "dye" in the dye monomer as used in the present invention indicates a compound that absorbs ultraviolet light, visible light or infrared light at a wavelength of 300 to 2,000 nm, preferably a compound that absorbs ultraviolet light or visible light at a wavelength of 330 to 700 nm, more preferably a compound that absorbs visible light at a wavelength of 400 to 700 nm. The molar extinction coefficient in this region is preferably 5,000 or more, more preferably 10,000 or more, and most preferably 20,000 or more.

The two-photon absorption three-dimensional recording material of the present invention contains at least a sensitizing dye, a polymerization initiator and a binder, in addition to the dye having a polymerizable group, and preferably further contains a polymerizable compound not having a dye moiety. It is more preferred that at least one polymerizable compound not having a dye moiety is a liquid having a boiling point of 100°C or more.

The two-photon absorption three-dimensional recording method of the present invention is characterized in that polymerization of the dye having a polymerizable group and the polymerizable compound not having a dye moiety is caused resulting from the polymerization initiator being activated by electron or energy transfer in the two-photon absorption compound excited state produced through light absorption upon irradiation of two-photon recording light, refractive index modulation is effected on this occasion by moving mainly the dye having a polymerizable group and the polymerizable compound not having a dye moiety in the light-irradiated part and expelling mainly the binder to the light-unirradiated part, and recording pits are thereby recorded.

Accordingly, in the present invention, the refractive index of the dye having a polymerizable group at a readout wavelength is preferably larger than that of the binder.

In general, as for the refractive index of the dye, a high value is taken in a region from a wavelength near the absorption maximum wavelength (λmax) to a wavelength longer than that. In particular, a very high value is taken in a region from λ max to a wavelength about 200 nm longer than λmax, and depending on the dye, a high value exceeding 2, further exceeding 2.5, is taken.

On the other hand, the refractive index of an organic compound which is not a dye, such as binder polymer, is usually on the order of 1.4 to 1.6.

In this respect, the two-photon absorption three-dimensional recording material of the present invention uses a dye having a large refractive index for the refractive index modulation and is advantageous in view of obtaining high sensitivity. For obtaining high sensitivity, the dye having a polymerizable group preferably gives an absorption spectrum having λmax shorter by 10 to 200 nm, more preferably λmax shorter by 30 to 130 nm, than the hologram readout wavelength and showing that ε is 10,000 or more, more preferably 20,000 or more.

Furthermore, in the two-photon absorption three-dimensional recording material of the present invention, also when using a polymerizable compound not having a dye moiety, the refractive index of the polymerizable compound not having a dye moiety at a readout wavelength is preferably larger than that of the binder.

In this regard, it is preferred that the polymerizable compound not having a dye moiety contains at least one or more aryl group, aromatic heterocyclic group, chlorine atom, bromine atom, iodine atom or sulfur atom and the binder does not contain these groups and atoms.

As for the polymerization reaction in the present invention, the polymerization reaction is preferably radical polymerization, cationic polymerization or anionic polymerization, more preferably radial polymerization or cationic polymerization.

As regards the polymerizable group of the dye having a polymerizable group or the polymerizable compound not having a dye moiety, in the case of radical polymerization, the polymerizable group contained is preferably an ethylenically unsaturated group moiety such as acryloyl group, methacryloyl group, styryl group or vinyl group, more preferably an acryloyl group or a methacryloyl group, and in the case of cationic polymerization or anionic polymerization, the polymerizable group contained is preferably an oxirane ring, an oxetane ring, a vinyl ether group or an N-vinylcarbazole moiety, more preferably an oxirane ring or an oxetane ring.

The dye having a polymerizable group for use in the present invention is described in detail below.

Out of the dyes having a polymerizable group for use in the present invention, preferred examples of the dye moiety include a cyanine dye, a squarylium cyanine dye, a styryl dye, a pyrylium dye, a merocyanine dye, an arylidene dye, an oxonol dye, an azulenium dye, a coumarin dye, a ketocoumarin dye, a styryl coumarin dye, a pyran dye, a xanthene dye, a thioxanthene dye, a phenothiazine dye, a phenoxazine dye, a phenazine dye, a phthalocyanine dye, an azaporphyrin dye, a porphyrin dye, a condensed aromatic dye, a perylene dye, an azomethine dye, an anthraquinone dye, a metal complex dye and an azo dye. Among these, more preferred are a cyanine dye, a squarylium cyanine dye, a styryl dye, a merocyanine dye, an arylidene dye, an oxonol dye, a coumarin dye, a xanthene dye, a phenothiazine dye, a condensed aromatic dye and an azo dye, still more preferred are a cyanine dye, a merocyanine dye, an arylidene dye, an oxonol dye, a coumarin dye, a xanthene dye and an azo dye.

Other than these, coloring matters and dyes described in Shinya Ohkawara (compiler), Shikiso Handbook (Handbook of Coloring Matters), Kodansha (1986), Shinya Ohkawara (compiler), Kinosei Shikiso no Kagaku (Chemistry of Functional Coloring Matters), CMC (1981), and Chuzaburo Ikemori et al. (compilers), Tokushu Kino Zairyo (special Functional Materials), CMC (1986) can also be used as the dye moiety for use in the present invention.

The polymerizable group of the dye having a polymerizable group for use in the present invention is as described above, and the polymerizable group may be substituted at any portion of the dye.

Specific examples of the dye having a polymerizable group for use in the present invention are set forth below, but the present invention is not limited thereto.

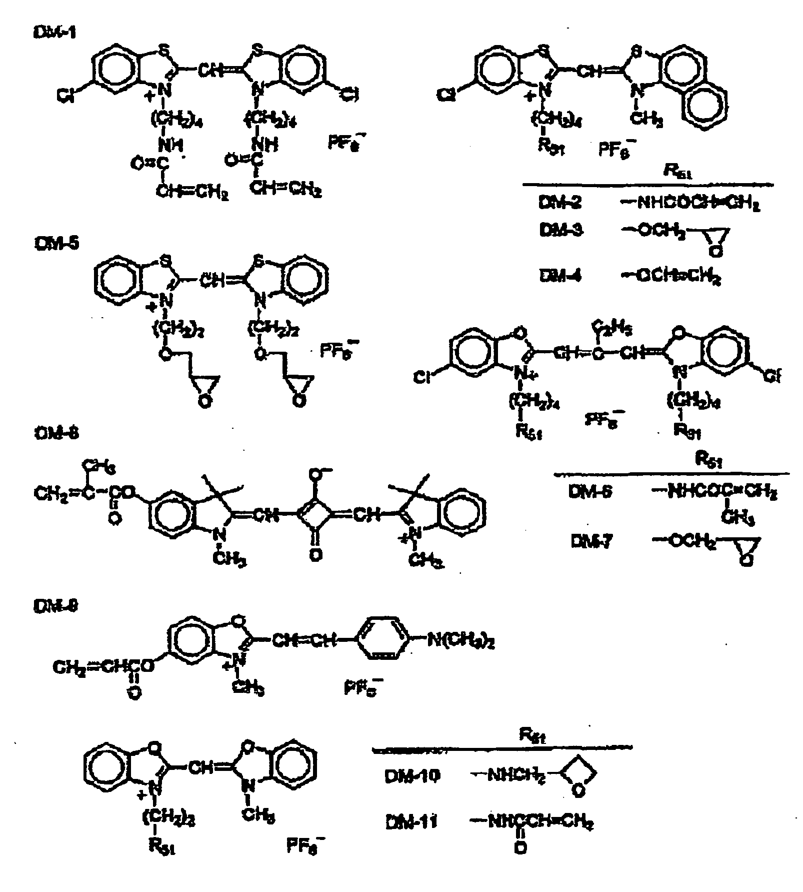

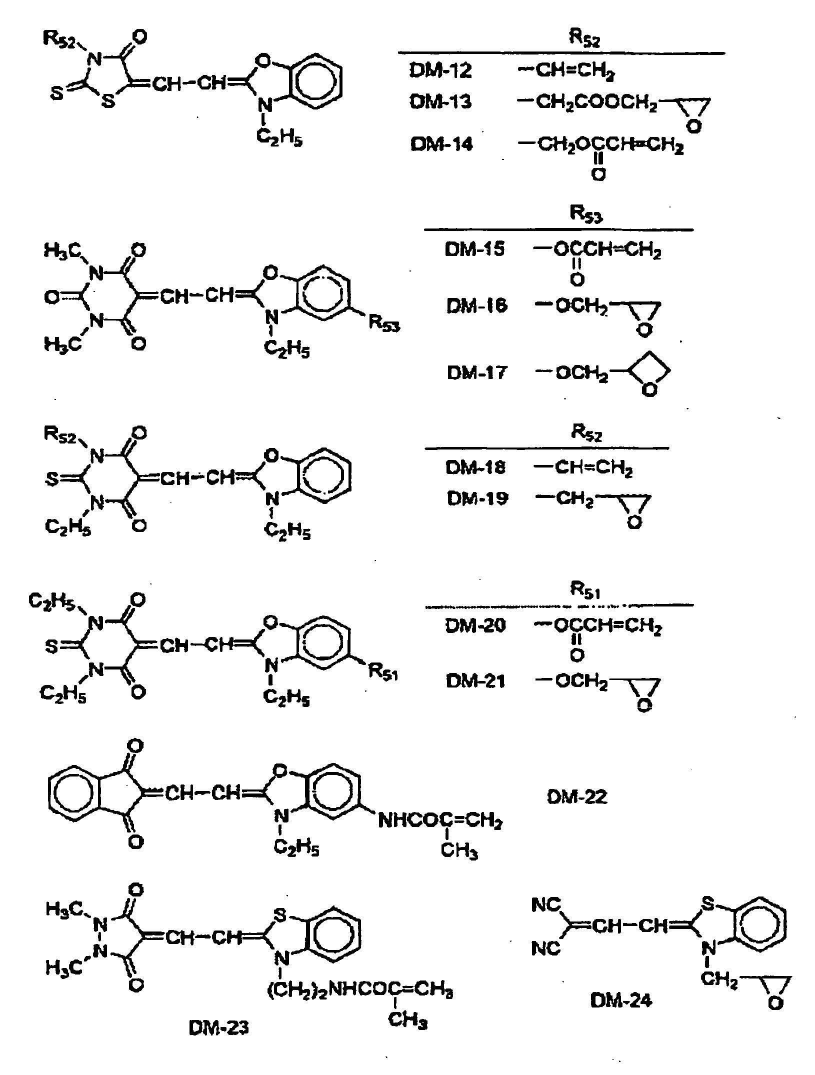

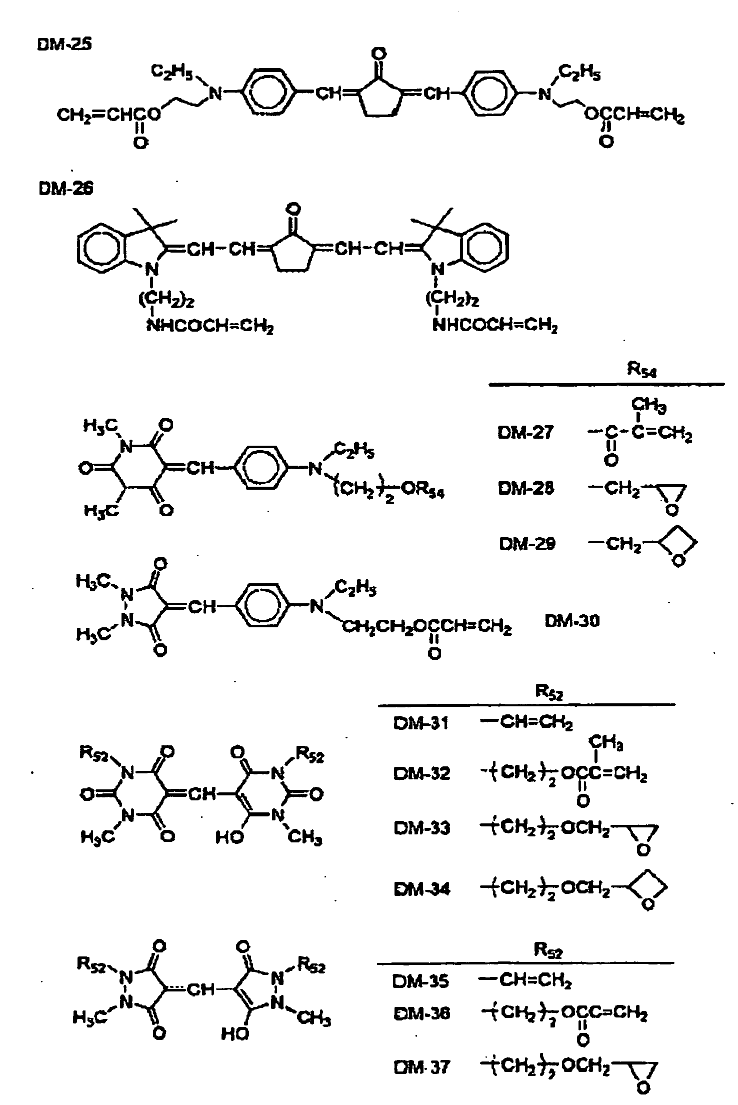

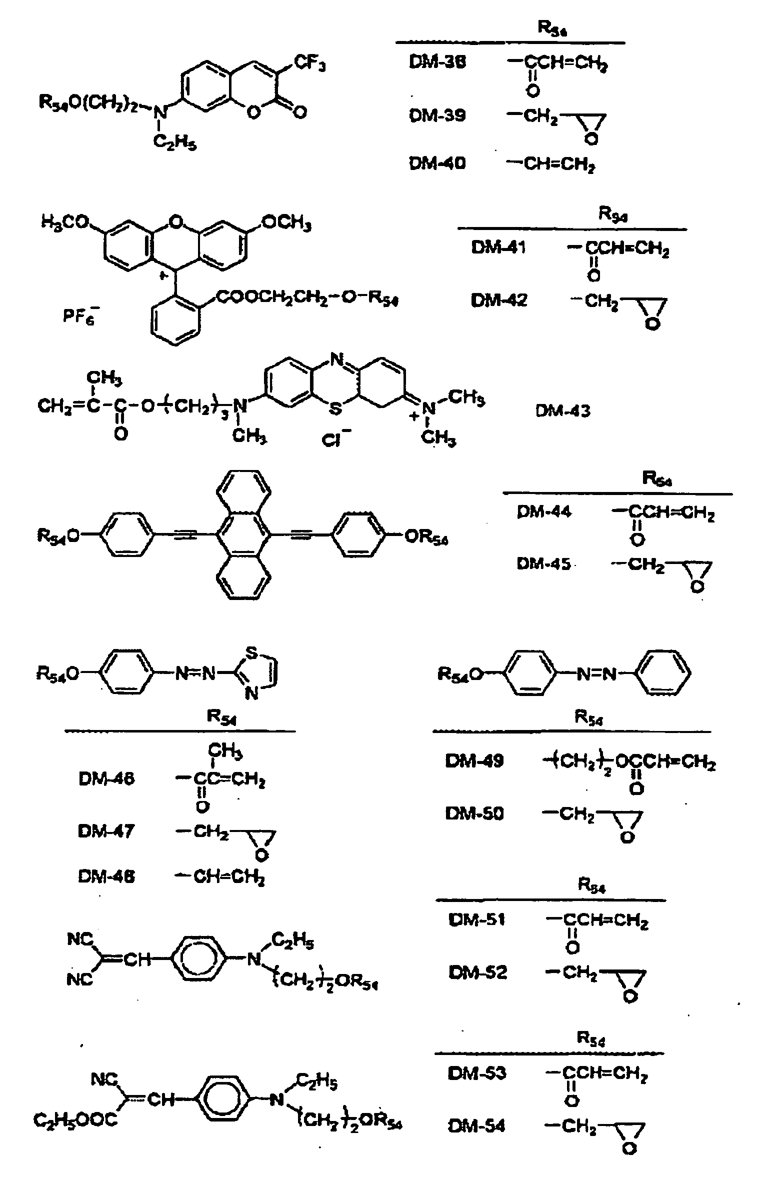

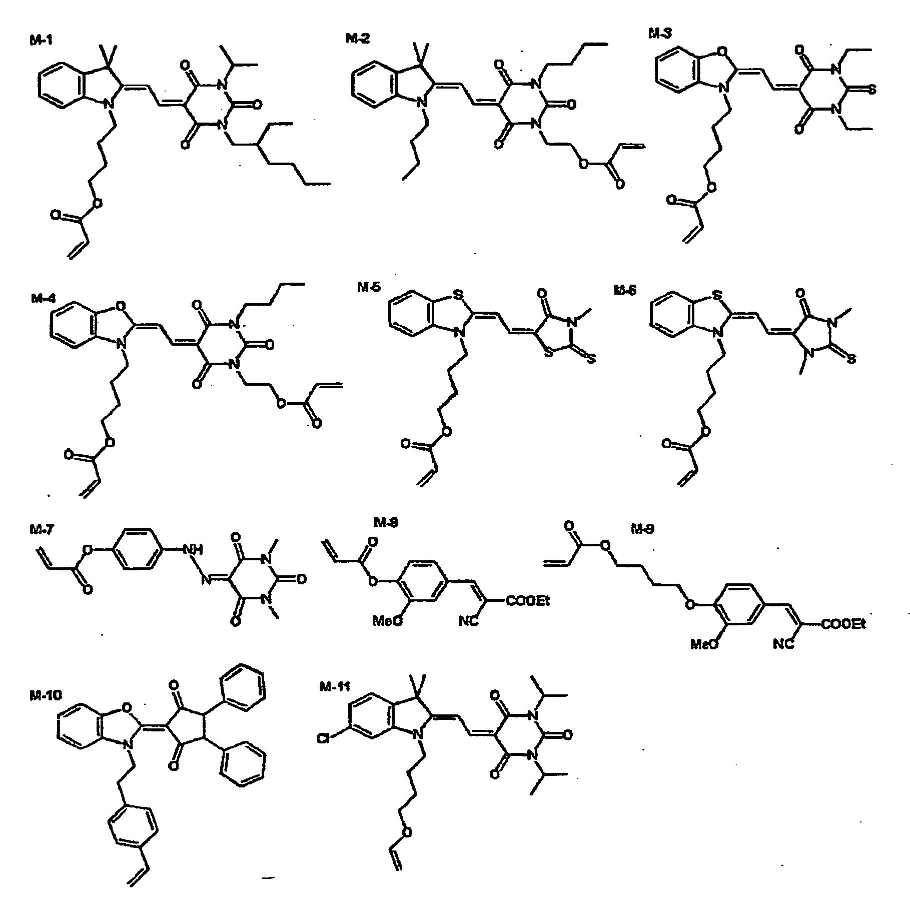

### <Binder>

The binder for use in the two-photon absorption three-dimensional recording material of the present invention is described below.

The binder is usually used for the purpose of enhancing the film-forming property of the composition before polymerization, the uniformity of film thickness, the stability during storage, or the like. The binder preferably has good compatibility with the polymerizable compound, polymerization initiator and two-photon absorption compound.

The binder is preferably a solvent-soluble thermoplastic polymer, and one of these polymers may be used alone or several kinds thereof may be used in combination.

As described above, the refractive index of the binder for use in the present invention preferably differs from that of the polymerizable compound, and the polymerizable compound may have a larger refractive index or the binder may have a larger refractive index, but the refractive index of the polymerizable compound is preferably larger than that of the binder.

To this end, it is preferred that either one of the polymerizable compound or the binder contains at least one aryl group, aromatic heterocyclic group, chlorine atom, bromine atom, iodine atom or sulfur atom and the remaining does not contain these groups and atoms, and it is more preferred that the polymerizable group contains at least one aryl group, aromatic heterocyclic group, chlorine atom, bromine atom, iodine atom or sulfur tom and the binder does not contain these groups and atoms.

Preferred examples of the binder when the refractive index of the polymerizable compound is larger than the refractive index of the binder are described below.

Specific preferred examples of the low refractive index binder include an acrylate-α-alkyl acrylate ester-acidic polymer-interpolymer (for example, a copolymer of polymethyl methacrylate, polyethyl methacrylate and methyl methacrylate with another alkyl (meth)acrylate), a polyvinyl ester (e.g., polyvinyl acetate, polyvinyl acetate/acrylate, polyvinyl acetate/methacrylate, hydrolyzable polyvinyl acetate), an ethylene/vinyl acetate copolymer, a saturated or unsaturated polyurethane, a high molecular weight polyethylene oxide of butadiene and isoprene polymer or copolymer or polygycol having an average molecular weight of about 4,000 to 1,000,000, an epoxidized product (for example, an epoxidized product having an acrylate or methacrylate group), a polyamide (e.g., N-methoxymethylpolyhexamethylene adipamide), a cellulose ester (e.g., cellulose acetate, cellulose acetate succinate, cellulose acetate butyrate), a cellulose ether (e.g., methyl cellulose, ethyl cellulose, ethylbenzyl cellulose), a polycarbonate, a polyvinyl acetal (e.g., polyvinyl butyral, polyvinyl formal), a polyvinyl alcohol, a polyvinylpyrrolidone, acid-containing polymers and copolymers disclosed in U.S. Patents 3,458,311 and 4,273,857, and amphoteric polymer binders disclosed in U.S. Patent 4,293,635. More preferred examples of the binder include a cellulose acetate butyrate polymer, a cellulose acetate lactate polymer, an acrylic polymer or interpolymer containing polymethyl methacrylate and methyl methacrylate/methacrylic acid and methyl methacrylate/acrylic acid copolymers, a terpolymer of methyl methacrylate/C2-C4 alkyl acrylate or methacrylate/acrylic or methacrylic acid, polyvinyl acetate, polyvinyl acetal, polyvinyl butyral, polyvinyl formal, and a mixture thereof.

A fluorine atom-containing polymer is also preferred as the low refractive index binder. The fluorine atom-containing polymer is preferably an organic solvent-soluble polymer containing, as the essential component, a fluoroolefin and containing, as the copolymerization component, one unsaturated monomer or two or more unsaturated monomers selected from an alkyl vinyl ether, an alicyclic vinyl ether, a hydroxy vinyl ether, an olefin, a haloolefin, an unsaturated carboxylic acid or an ester thereof, and a vinyl carboxylate. This polymer preferably has a weight average molecular weight of 5,000 to 200,000 and a fluorine atom content of 5 to 70 mass%.

Examples of the fluoroolefin in the fluorine atom-containing polymer include tetrafluoroethylene, chlorotrifluoroethylene, vinyl fluoride and vinylidene fluoride. Examples of the alkyl vinyl ether as the other copolymerization component include ethyl vinyl ether, isobutyl vinyl ether and n-butyl vinyl ether. Examples of the alicyclic vinyl ether include cyclohexyl vinyl ether and its derivatives. Examples of the hydroxy vinyl ether include hydroxybutyl vinyl ether. Examples of the olefin and haloolefin include ethylene, propylene, isobutylene, vinyl chloride and vinylidene chloride. Examples of the vinyl carboxylate include vinyl acetate and n-vinyl butyrate. Examples of the unsaturated carboxylic acid or an ester thereof include an unsaturated carboxylic acid such as (meth)acrylic acid and crotonic acid; C1-C18 alkyl esters of (meth)acrylic acid, such as methyl (meth)acrylate, ethyl (meth)acrylate, propyl (meth)acrylate, isopropyl (meth)acrylate, butyl (meth)acrylate, hexyl (meth)acrylate, octyl (meth)acrylate and lauryl (meth)acrylate; C2-C8 hydroxyalkyl esters of (meth)acrylic acid, such as hydroxyethyl (meth)acrylate and hydroxypropyl (meth)-acrylate; an N,N-dimethylaminoethyl (meth)acrylate; and an N,N-diethylaminoethyl (meth)acrylate. One of these radical polymerizable monomers may be used alone, or two or more kinds thereof may be used in combination. Furthermore, if desired, a part of the monomer may be replaced by another radical polymerizable monomer, for example, a vinyl compound such as styrene, α-methylstyrene, vinyltoluene and (meth)acrylonitrile. Also, other monomer derivatives such as carboxylic acid group-containing fluoroolefin and glycidyl group-containing vinyl ether may be used.

Specific examples of the above-described fluorine atom-containing polymer include "Lumifron" series having a hydroxyl group and being soluble in an organic solvent (for example, Lumifron LF200, weight average molecular weight: about 50,000, produced by Asahi Glass Company, Ltd.). In addition, organic solvent-soluble fluorine atom-containing polymers are commercially available from Daikin Kogyo Co., Ltd., Central Glass Co., Ltd., Penwalt and the like and these can also be used.

Many of these binders form a non-three-dimensional crosslinked structure. The binder having a construction that forms a three-dimensional crosslinked structure is described below.

### Binder That Forms Three-Dimensional Crosslinked Structure:

In the recording layer of the optical recording medium, a binder that forms a three-dimensional crosslinked structure is also used. This type of binder includes a monomer concerned in the recording or storage, generally called a matrix, and a polymer for holding a photopolymerization initiator. The matrix is used for the purpose of increasing the effect of enhancing the film coatability, film strength and hologram recording properties. The optical recording composition of the present invention may contain a curable compound which is a matrix-forming component. As for the curable component, a photocurable compound that is cured by using a catalyst or the like and irradiating light may be used, and a thermal crosslinking compound is preferred.

The thermal crosslinking matrix contained in the recording layer is not particularly limited and may be appropriately selected according to the purpose, but examples thereof include a urethane resin formed from an isocyanate compound and an alcohol compound, an epoxy compound formed from an oxirane compound, and a polymer obtained by polymerizing a melamine compound, a formalin compound, an ester compound of unsaturated acid such as (meth)acrylic acid or itaconic acid, or an amide compound. Above all, a polyurethane matrix formed from an isocyanate compound and an alcohol compound is preferred and in consideration of recording preservability, a three-dimensional polyurethane matrix formed from a polyisocyanate and a polyfunctional alcohol is most preferred.

Specific examples of the polyisocyanate and polyalcohol which can form a polyurethane matrix are described below.

Specific examples of the polyisocyanate include biscyclohexylmethane diisocyanate, hexamethylene diisocyanate, phenylene-1,3-diisocyanate, phenylene-1,4-diisocyanate, 1-methoxyphenylene-2,4-diisocyanate, 1-methylphenylene-2,4-diisocyanate, 2,4-tolylene diisocyanate, 2,6-tolylene diisocyanate, 1,3-xylylene diisocyanate, 1,4-xylylene diisocyanate, biphenylene-4,4'-diisocyanate, 3,3'-dimethoxybiphenylene-4,4'-diisocyanate, 3,3'-dimethylbiphenylene-4,4'-diisocyanate, diphenylmethane-2,4'-diisocyanate, diphenylmethane-4,4'-diisocyanate, 3,3'-dimethoxydiphenylmethane-4,4'-diisocyanate, 3,3'-dimethyldiphenylmethane-4,4'-diisocyanate, naphthylene-1,5-diisocyanate, cyclobutylene-1,3-diisocyanate, cyclopentylene-1,3-diisocyanate, cyclohexylene-1,3-diisocyanate, cyclohexylene-1,4-diisocyanate, 1-methylcyclohexylene-2,4-diisocyanate, 1-methylcyclohexylene-2,6-diisocyanate, 1-isocyanate-3,3,5-trimethyl-5-isocyanatemethylcyclohexane, cyclohexane-1,3-bis(methylisocyanate), cyclohexane-1,4-bis(methylisocyanate), isophorone diisocyanate, dicyclohexylmethane-2,4'-diisocyanate, dicyclohexylmethane-4,4'-diisocyanate, ethylene diisocyanate, tetramethylene-1,4-diisocyanate, hexamethylene-1,6-diisocyanate, dodecamethylene-1,12-diisocyanate,phenyl-1,3,5-triisocyanate, diphenylmethane-2,4,4'-triisocyanate, diphenylmethane-2,5,4'-triisocyanate, triphenylmethane-2,4',4"-triisocyanate, triphenylmethane-4,4',4"-triisocyanate, diphenylmethane-2,4,2',4'-tetraisocyanate, diphenylmethane-2,5,2',5'-tetraisocyanate, cyclohexane-1,3,5-triisocyanate, cyclohexane-1,3,5-tris(methylisocyanate), 3,5-dimethylcyclohexane-1,3,5-tris(methylisocyanate), 1,3,5-trimethylcyclohexane-1,3,5-tris(methylisocyanate), dicyclohexylmethane-2,4,2'-triisocyanate, dicyclohexylmethane-2,4,4'-triisocyanatelysine diisocyanate methyl ester, and a prepolymer with isocyanate at both ends obtained by reacting such an organic isocyanate compound in excess of the stoichiometric amount with a polyfunctional active hydrogen-containing compound. Among these, biscyclohexylmethane diisocyanate and hexamethylene diisocyanate are preferred. One of these polyisocyanates may be used alone, or two or more kinds thereof may be used in combination.

The polyalcohol may be a polyalcohol alone or a mixture with other polyalcohols. Examples of the polyalcohol include glycols such as ethylene glycol, triethylene glycol, diethylene glycol, polyethylene glycol, propylene glycol, polypropylene glycol and neopentyl glycol; diols such as butanediol, pentanediol, hexanediol, heptanediol and tetramethylene glycol; bisphenols or compounds obtained by modifying these polyfunctional compounds with a polyethyleneoxy or polypropyleneoxy chain; glycerin; trimethylolpropane; and triols such as butanetriol, pentanetriol, hexanetriol and decanetriol or compounds obtained by modifying these polyalcohols with a polyethyleneoxy or polypropyleneoxy chain.

The content of the matrix-forming component in the optical recording composition for use in the present invention is preferably from 10 to 95 mass%, more preferably from 35 to 90 mass%. When the content is 10 mass% or more, a stable interference image can be easily obtained, and when the content is 95 mass% or less, a preferred performance in view of diffraction efficiency can be obtained.

### <Two-photon absorption Compound>

The two-photon absorption compound in the two-photon absorption polymerizable composition for use in the present invention is described below.

The two-photon absorption compound for use in the present invention is a compound of undergoing non-resonant two-photon absorption (a phenomenon that two photons are simultaneously absorbed in the energy region having no (linear) absorption band of the compound to cause excitation).

The two-photon absorption compound for use in the present invention is preferably an organic compound.

In the present invention, when a specific moiety is called "a group", unless otherwise indicated, this means that the group may or may not be substituted by one or more (up to the maximum possible number) substituents. For example, "an alkyl group" means a substituted or unsubstituted alkyl group. The substituent which can be used for the compound in the present invention may be any substituent irrespective of the presence or absence of substituent.

In the present invention, when a specific moiety is called "a ring" or when "a ring" is contained in "a group", unless otherwise indicated, the ring may be a monocyclic ring or a condensed ring or may or may not be substituted.

For example, "an aryl group" may be a phenyl group or a naphthyl group or may be a substituted phenyl group.

The two-photon absorption compound for use in the present invention is a methine dye. Incidentally, the dye as used herein is a generic term of compounds having a part of the absorption in the visible region (400 to 700 nm) or near infrared region (700 to 2,000 nm).

The methine dye for use in the present invention may be any methine dye, but examples thereof include a cyanine dye, a hemicyanine dye, a streptocyanine dye, a styryl dye, a merocyanine dye, a trinuclear merocyanine dye, a tetranuclear merocyanine dye, a rhodacyanine dye, a complex cyanine dye, a complex merocyanine dye, an allopolar dye, an oxonol dye, a hemioxonol dye, a squalium dye, an arylidene dye, and a polyene dye.

Among these methine dyes, preferred are a cyanine dye, a hemicyanine dye, a streptocyanine dye, a styryl dye, a merocyanine dye, a trinuclear merocyanine dye, a tetranuclear merocyanine dye, a rhodacyanine dye, an oxonol dye, a squalium dye and an arylidene dye, more preferred are a cyanine dye, a merocyanine dye and an oxonol dye.

These dyes are described in detail, for example, in F.M. Harmer, Heterocyclic Compounds-Cyanine Dyes and Related Compounds, John Wiley & Sons, New York, London (1964), D.M. Sturmer, Heterocyclic Compounds - Special topics in heterocyclic chemistry, Chap. 18, Section 14, pp. 482-515, John Wiley & Sons, New York, London (1977), and Rodd's Chemistry of Carbon Compounds, 2nd ed., Vol. IV, Part B, Chap. 15, pp. 369-422, Elsevier Science Publishing Company Inc., New York (1977).

Specific examples of the cyanine dye, merocyanine dye and oxonol dye include those described in F.M. Harmer, Heterocyclic Compounds-Cyanine Dyes and Related Compounds, John Wiley & Sons, New York, London (1964).

As for the formulae of the cyanine and merocyanine dyes, those represented by formulae (XI) and (XII) at pages 21 and 22 of U.S. Patent 5,340,694 are preferred (however, the numbers represented by n12 and n15 are not limited and each is allowed to take an integer of 0 or more (preferably an integer of 0 to 4)).

In the case where the two-photon absorption compound for use in the present invention is a cyanine dye, the cyanine dye is preferably represented by formula (3).

In formula (3), Za₁ and Za₂ each represents an atomic group for forming a 5- or 6-membered nitrogen-containing heterocyclic ring. Preferred examples of the 5- or 6-membered nitrogen-containing heterocyclic ring formed include an oxazole nucleus having a number of carbon atoms (hereinafter referred to as "a carbon number") of 3 to 25 (e.g., 2-3-methyloxazolyl, 2-3-ethyloxazolyl, 2-3,4-diethyloxazolyl, 2-3-methylbenzoxazolyl, 2-3-ethylbenzoxazolyl, 2-3-sulfoethylbenzoxazolyl, 2-3-sulfopropylbenzoxazolyl, 2-3-methylthioethylbenzoxazolyl, 2-3-methoxyethylbenzoxazolyl, 2-3-sulfobutylbenzoxazolyl, 2-3-methyl-β-naphthoxazolyl 2-3-methyl-α-naphthoxazolyl, 2-3-sulfopropyl-β-naphthoxazolyl, 2-3-sulfopropyl-β-naphthoxazolyl, 2-3-(3-naphthoxyethyl)benzoxazolyl, 2-3,5-dimethylbenzoxazolyl, 2-6-chloro-3-methylbenzoxazolyl, 2-5-bromo-3-methylbenzoxazolyl, 2-3-ethyl-5-methoxybenzoxazolyl, 2-5-phenyl-3-sulfopropylbenzoxazolyl, 2-5-(4-bromophenyl)-3-sulfobutylbenzoxazolyl, 2-3-dimethyl-5,6-dimethylthiobenzoxazolyl), a thiazole nucleus having a carbon number of 3 to 25 (e.g., 2-3-methylthiazolyl, 2-3-ethylthiazolyl, 2-3-sulfopropylthiazolyl, 2-3-sulfobutylthiazolyl, 2-3,4-dimethylthiazolyl, 2-3,4,4-trimethylthiazolyl, 2-3-carboxyethylthiazolyl, 2-3-methylbenzothiazolyl, 2-3-ethylbenzothiazolyl, 2-3-butylbenzothiazolyl, 2-3-sulfopropylbenzothiazolyl, 2-3-sulfobutylbenzothiazolyl, 2-3-methyl-β-naphthothiazolyl, 2-3-sulfopropyl-γ-naphthothiazolyl, 2-3-(1-naphthoxyethyl)benzothiazolyl, 2-3,5-dimethylbenzothiazolyl, 2-6-chloro-3-methylbenzothiazolyl, 2-6-iodo-3-ethylbenzothiazolyl, 2-5-bromo-3-methylbenzothiazolyl, 2-3-ethyl-5-methoxybenzothiazolyl, 2-5-phenyl-3-sulfopropylbenzothiazolyl, 2-5-(4-bromophenyl)-3-sulfobutylbenzothiazolyl, 2-3-dimethyl-5,6-dimethylthiobenzothiazolyl), an imidazole nucleus having a carbon number of 3 to 25 (e.g., 2-1,3-diethylimidazolyl, 2-1,3-dimethylimidazolyl, 2-1-methylbenzimidazolyl, 2-1,3,4-triethylimidazolyl, 2-1,3-diethylbenzimidazolyl, 2-1,3,5-trimethylbenzimidazolyl, 2-6-chloro-1,3-dimethylbenzimidazolyl, 2-5,6-dichloro-1,3-diethylbenzimidazolyl, 2-1,3-disulfopropyl-5-cyano-6-chlorobenzimidazolyl), an indolenine nucleus having a carbon number of 10 to 30 (e.g., 3,3-dimethylindolenine), a quinoline nucleus having a carbon number of 9 to 25 (e.g., 2-1-methylquinolyl, 2-1-ethylquinolyl, 2-1-methyl-6-chloroquinolyl, 2-1,3-diethylquinolyl, 2-1-methyl-6-methylthioquinolyl, 2-1-sulfopropylquinolyl, 4-1-methylquinolyl, 4-1-sulfoethylquinolyl, 4-1-methyl-7-chloroquinolyl, 4-1,8-diethylquinolyl, 4-1-methyl-6-methylthioquinolyl, 4-1-sulfopropylquinolyl), a selenazole nucleus having a carbon number of 3 to 25 (e.g., 2-3-methylbenzoselenazolyl), a pyridine nucleus having a carbon number of 5 to 25 (e.g., 2-pyridyl), a thiazoline nucleus, an oxazoline nucleus, a selenazoline nucleus, a tellurazoline nucleus, a tellurazole nucleus, a benzotellurazole nucleus, an imidazoline nucleus, an imidazo[4,5-quinoxaline] nucleus, an oxadiazole nucleus, a thiadiazole nucleus, a tetrazole nucleus, and a pyrimidine nucleus.

The heterocyclic ring may be substituted, and preferred examples of the substituent include an alkyl group (preferably having a carbon number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a carbon number of 2 to 20, e.g., vinyl, allyl, 2-butenyl, 1,3-butadienyl), a cycloalkyl group (preferably having a carbon number of 3 to 20, e.g., cyclopentyl, cyclohexyl), an aryl group (preferably having a carbon number of 6 to 20, e.g., phenyl, 2-chlorophenyl, 4-methoxyphenyl, 3-methylphenyl, 1-naphthyl), a heterocyclic group (preferably having a carbon number of 1 to 20, e.g., pyridyl, thienyl, furyl, thiazolyl, imidazolyl, pyrazolyl, pyrrolidino, piperidino, morpholino), an alkynyl group (preferably having a carbon number of 2 to 20, e.g., ethynyl, 2-propynyl, 1,3-butadynyl, 2-phenylethynyl), a halogen atom (e.g., F, Cl, Br, I), an amino group (preferably having a carbon number of 0 to 20, e.g., amino, dimethylamino, diethylamino, dibutylamino, anilino), a cyano group, a nitro group, a hydroxyl group, a mercapto group, a carboxyl group, a sulfo group, a phosphonic acid group, an acyl group (preferably having a carbon number of 1 to 20, e.g., acetyl, benzoyl, salicyloyl, pivaloyl), an alkoxy group (preferably having a carbon number of 1 to 20, e.g., methoxy, butoxy, cyclohexyloxy), an aryloxy group (preferably having a carbon number of 6 to 26, e.g., phenoxy, 1-naphthoxy), an alkylthio group (preferably having a carbon number of 1 to 20, e.g., methylthio, ethylthio), an arylthio group (preferably having a carbon number of 6 to 20, e.g., phenylthio, 4-chlorophenylthio), an alkylsulfonyl group (preferably having a carbon number of 1 to 20, e.g., methanesulfonyl, butanesulfonyl), an arylsulfonyl group (preferably having a carbon number of 6 to 20, e.g., benzenesulfonyl, paratoluenesulfonyl), a sulfamoyl group (preferably having a carbon number of 0 to 20, e.g., sulfamoyl, N-methylsulfamoyl, N-phenylsulfamoyl), a carbamoyl group (preferably having a carbon number of 1 to 20, e.g., carbamoyl, N-methylcarbamoyl, N,N-dimethylcarbamoyl, N-phenylcarbamoyl), an acylamino group (preferably having a carbon number of 1 to 20, e.g., acetylamino, benzoylamino), an imino group (preferably having a carbon number of 2 to 20, e.g., phthalimino), an acyloxy group (preferably having a carbon number of 1 to 20, e.g., acetyloxy, benzoyloxy), an alkoxycarbonyl group (preferably having a carbon number of 2 to 20, e.g., methoxycarbonyl, phenoxycarbonyl) and a carbamoylamino group (preferably having a carbon number of 1 to 20, e.g., carbamoylamino, N-methylcarbamoylamino, N-phenylcarbamoylamino). Among these, more preferred are an alkyl group, an aryl group, a heterocyclic group, a halogen atom, a cyano group, a carboxyl group, a sulfo group, an alkoxy group, a sulfamoyl group, a carbamoyl group and an alkoxycarbonyl group.

The heterocyclic ring may be further condensed with another ring. Preferred examples of the ring with which the heterocyclic ring is condensed include a benzene ring, a benzofuran ring, a pyridine ring, a pyrrole ring, an indole ring and a thiophene ring.

The 5- or 6-membered nitrogen-containing heterocyclic ring formed by Za₁ and Za₂ is more preferably an oxazole nucleus, an imidazole nucleus, a thiazole nucleus or an indolenine ring, still more preferably an oxazole nucleus, an imidazole nucleus or an indolenine ring, and most preferably an oxazole nucleus.

Ra₁ and Ra₂ each independently represents a hydrogen atom, an alkyl group (preferably having a carbon number of 1 to 20, e.g., methyl, ethyl, n-propyl, isopropyl, n-butyl, n-pentyl, benzyl, 3-sulfopropyl, 4-sulfobutyl, 3-methyl-3-sulfopropyl, 2'-sulfobenzyl, carboxymethyl, 5-carboxypentyl), an alkenyl group (preferably having a carbon number of 2 to 20, e.g., vinyl, allyl), an aryl group (preferably having a carbon number of 6 to 20, e.g., phenyl, 2-chlorophenyl, 4-methoxyphenyl, 3-methylphenyl, 1-naphthyl) or a heterocyclic group (preferably having a carbon number of 1 to 20, e.g., pyridyl, thienyl, furyl, thiazolyl, imidazolyl, pyrazolyl, pyrrolidino, piperidino, morpholino), preferably an alkyl group (preferably an alkyl group having a carbon number of 1 to 6) or a sulfoalkyl group (preferably 3-sulfopropyl, 4-sulfobutyl, 3-methyl-3-sulfopropyl or 2'-sulfobenzyl).

Ma₁ to Ma₇ each represents a methine group, and the methine group may have a substituent (preferred examples of the substituent are the same as examples of the substituent on Za₁ and Za₂). The substituent is preferably an alkyl group, a halogen atom, a nitro group, an alkoxy group, an aryl group, a nitro group, a heterocyclic group, an aryloxy group, an acylamino group, a carbamoyl group, a sulfo group, a hydroxy group, a carboxy group, an alkylthio group or a cyano group, more preferably an alkyl group.

Ma₁ to Ma₇ each is preferably an unsubstituted methine group or an alkyl group (preferably having a carbon number of 1 to 6)-substituted methine group, more preferably an unsubstituted methine group, an ethyl group-substituted methine group or a methyl group-substituted methine group.

Ma₁ to Ma₇ may combine with each other to form a ring, and preferred examples of the ring formed include a cyclohexene ring, a cyclopentene ring, a benzene ring and a thiophene ring.

na¹ and na² each is 0 or 1, preferably both are 0.

ka¹ represents an integer of 0 to 3, preferably 1 to 3, more preferably 1 or 2.

When ka¹ is 2 or more, the plurality of Ma₃'s or Ma₄'s may be the same or different.

CI represents an ion for neutralizing the electric charge, and y represents a number necessary for the neutralization of electric charge.

In the case where the two-photon absorption compound for use in the present invention is a merocyanine dye, the merocyanine dye is preferably represented by formula (4).

In formula (4), Za₃ represents an atomic group for forming a 5- or 6-membered nitrogen-containing heterocyclic ring (preferred examples are the same as those for Za₁ and Za₂) and the heterocyclic group may be substituted (preferred examples of the substituent are the same as examples of the substituent on Za₁ and Za₂) or may be further condensed with another ring.

The 5- or 6-membered nitrogen-containing heterocyclic ring formed by Za₃ is more preferably an oxazole nucleus, an imidazole nucleus, a thiazole nucleus or an indolenine ring, still more preferably an oxazole nucleus or an indolenine ring.

Za₄ represents an atomic group for forming a 5- or 6-membered ring. The ring formed by Za₄ is a moiety generally called an acidic nucleus, which is defined in James (compiler), The Theory of the Photographic Process, 4th ed., page 198, Macmillan (1977). The ring formed by Za₄ is preferably a nucleus such as 2-pyrazolon-5-one, pyrazolidine-3,5-dione, imidazolin-5-one, hydantoin, 2- or 4-thiohydantoin, 2-iminooxazolidin-4-one, 2-oxazolin-5-one, 2-thiooxazoline-2,4-dione, isorhodanine, rhodanine, indane-1,3-dione, thiophen-3-one, thiophen-3-one-1,1-dioxide, indolin-2-one, indolin-3-one, 2-oxoindazolium, 5,7-dioxo-6,7-dihydrothiazolo[3,2-a]pyrimidine, 3,4-dihydroisoquinolin-4-one, 1,3-dioxane-4,6-dione, barbituric acid, 2-thiobarbituric acid, coumarin-2,4-dione, indazolin-2-one, pyrido[1,2-a]pyrimidine-1,3-dione, pyrazolo[1,5-b]quinazolone and pyrazolopyridone.

The ring formed by Za₄ is more preferably 2-pyrazolon-5-one, pyrazolidine-3,5-dione, rhodanine, indane-1,3-dione, thiophen-3-one, thiophen-3-one-1,1-dioxide, 1,3-dioxane-4,6-dione, barbituric acid, 2-thiobarbituric acid or coumarin-2,4-dione, still more preferably pyrazolidine-3,5-dione, indane-1,3-dione, 1,3-dioxane-4,6-dione, barbituric acid or 2-thiobarbituric acid, and most preferably pyrazolidine-3,5-dione, barbituric acid or 2-thiobarbituric acid.

The ring formed by Za₄ may be substituted (preferred examples of the substituent are the same as examples of the substituent on Za₃), and the substituent is more preferably an alkyl group, an aryl group, a heterocyclic group, a halogen atom, a cyano group, a carboxyl group, a sulfo group, an alkoxy group, a sulfamoyl group, a carbamoyl group or an alkoxycarbonyl group.

The heterocyclic ring may be further condensed with another ring. Preferred examples of the ring with which the heterocyclic ring is condensed include a benzene ring, a benzofuran ring, a pyridine ring, a pyrrole ring, an indole ring and a thiophene ring.

Each Ra₃ independently represents a hydrogen atom, an alkyl group, an alkenyl group, an aryl group or a heterocyclic group (preferred examples of these groups are the same as those for Ra₁ and Ra₂), preferably an alkyl group (preferably an alkyl group having a carbon number of 1 to 6) or a sulfoalkyl group (preferably 3-sulfopropyl, 4-sulfobutyl, 3-methyl-3-sulfopropyl or 2'-sulfobenzyl).

Ma₈ to Ma₁₁ each represents a methine group, and the methine group may have a substituent (preferred examples of the substituent are the same as examples of the substituent on Za₁ and Za₂). The substituent is preferably an alkyl group, a halogen atom, a nitro group, an alkoxy group, an aryl group, a nitro group, a heterocyclic group, an aryloxy group, an acylamino group, a carbamoyl group, a sulfo group, a hydroxy group, a carboxy group, an alkylthio group or a cyano group, more preferably an alkyl group.

Ma₈ to Ma₁₁ each is preferably an unsubstituted methine group or an alkyl group (preferably having a carbon number of 1 to 6)-substituted methine group, more preferably an unsubstituted methine group, an ethyl group-substituted methine group or a methyl group-substituted methine group.

Ma₈ to Ma₁₁ may combine with each other to form a ring, and preferred examples of the ring formed include a cyclohexene ring, a cyclopentene ring, a benzene ring and a thiophene ring.

na³ is 0 or 1, preferably 0.

ka² represents an integer of 0 to 8, preferably 0 to 4, more preferably 2 to 4.

When ka² is 2 or more, the plurality of Ma₁₀'s or Ma₁₁'s may be the same or different.

CI represents an ion for neutralizing the electric charge, and y represents a number necessary for the neutralization of electric charge.

In the case where the two-photon absorption compound for use in the present invention is an oxonol dye, the oxonol dye is preferably represented by formula (5).

In formula (5), Za₅ and Za₆ each represents an atomic group for forming a 5- or 6-membered ring (preferred examples are the same as those for Za₄), and the heterocyclic ring may be substituted (preferred examples of the substituent are the same as examples of the substituent on Za₄) or may be further condensed with another ring.

The ring formed by Za₅ and Za₆ is preferably 2-pyrazolon-5-one, pyrazolidine-3,5-dione, rhodanine, indane-1,3-dione, thiophen-3-one, thiophen-3-one-1,1-dioxide, 1,3-dioxane-4,6-dione, barbituric acid, 2-thiobarbituric acid or coumarin-2,4-dione, more preferably barbituric acid or 2-thiobarbituric acid, and most preferably barbituric acid.

Ma₁₂ to Ma₁₄ each represents a methine group, and the methine group may have a substituent (preferred examples of the substituent are the same as examples of the substituent on Za₅ and Za₆). The substituent is preferably an alkyl group, a halogen atom, a nitro group, an alkoxy group, an aryl group, a nitro group, a heterocyclic group, an aryloxy group, an acylamino group, a carbamoyl group, a sulfo group, a hydroxy group, a carboxy group, an alkylthio group or a cyano group, more preferably an alkyl group, a halogen atom, an alkoxy group, an aryl group, a heterocyclic group, a carbamoyl group or a carboxy group, still more preferably an alkyl group, an aryl group or a heterocyclic group.

Ma₁₂ to Ma₁₄ each is preferably an unsubstituted methine group.

Ma₁₂ to Ma₁₄ may combine with each other to form a ring, and preferred examples of the ring formed include a cyclohexene ring, a cyclopentene ring, a benzene ring and a thiophene ring.

ka³ represents an integer of 0 to 3, preferably 0 to 2, more preferably 1 or 2, and most preferably 2.

When ka³ is 2 or more, the plurality of Ma₁₂'s or Ma₁₃'s may be the same or different.

CI represents an ion for neutralizing the electric charge, and y represents a number necessary for the neutralization of electric charge.

The compound for use in the present invention is also preferably represented by formula (1).

In formula (1), R¹, R², R³ and R⁴ each independently represents a hydrogen atom or a substituent, and the substituent is preferably an alkyl group (preferably having a carbon number of 1 to 20, e.g., methyl, ethyl, n-propyl, isopropyl, n-butyl, n-pentyl, benzyl, 3-sulfopropyl, 4-sulfobutyl, 3-methyl-3-sulfopropyl, 2'-sulfobenzyl, carboxymethyl, 5-carboxypentyl), an alkenyl group (preferably having a carbon number of 2 to 20, e.g., vinyl, allyl), a cycloalkyl group (preferably having a carbon number of 3 to 20, e.g., cyclopentyl, cyclohexyl), an aryl group (preferably having a carbon number of 6 to 20, e.g., phenyl, 2-chlorophenyl, 4-methoxyphenyl, 3-methylphenyl, 1-naphthyl) or a heterocyclic group (preferably having a carbon number of 1 to 20, e.g., pyridyl, thienyl, furyl, thiazolyl, imidazolyl, pyrazolyl, pyrrolidino, piperidino, morpholino).

R¹, R², R³ and R⁴ each is preferably a hydrogen atom or an alkyl group. Some (preferably two) members out of R¹, R², R³ and R⁴ may combine with each other to form a ring. In particular, R¹ and R³ preferably combine to form a ring and at this time, the ring formed together with the carbon atom of carbonyl is preferably a 6-, 5- or 4-membered ring, more preferably a 5- or 4-membered ring, and most preferably a 5-membered ring.

In formula (1), n and m each independently represents an integer of 0 to 4, preferably 1 to 4, but n and m are not 0 at the same time.

When n and m each is 2 or more, the plurality of R¹_{'}s, R²'s, R³'s or R⁴'s may be the same or different.

X¹ and X² each independently represents an aryl group [preferably having a carbon number of 6 to 20 and preferably a substituted aryl group (for example, a substituted phenyl group or a substituted naphthyl group, and preferred examples of the substituent are the same as those of the substituent for Ma₁ to Ma₇), more preferably an aryl group substituted by an alkyl group, an aryl group, a heterocyclic group, a halogen atom, an amino group, a hydroxyl group, an alkoxy group, an aryloxy group or an acylamino group, still more preferably an aryl group substituted by an alkyl group, an amino group, a hydroxyl group, an alkoxy group or an acylamino group, and most preferably a phenyl group substituted by a dialkylamino or diarylamino group at the 4-position; a plurality of substituents may combine to form a ring, and preferred examples of the ring formed include a julolidine ring], a heterocyclic group (preferably having a carbon number of 1 to 20 and preferably a 3- to 8- membered ring, more preferably a 5- or 6-membered ring, for example, pyridyl, thienyl, furyl, thiazolyl, imidazolyl, pyrazolyl, pyrrolyl, indolyl, carbazolyl, phenathiazino, pyrrolidino, piperidino or morpholino with indolyl, carbazolyl, pyrrolyl and phenathiazino being preferred; the heterocyclic ring may be substituted, and preferred examples of the substituent are the same as those described above for the aryl group), or a group represented by formula (2).

In formula (2), R⁵ represents a hydrogen atom or a substituent (preferred examples are the same as those for R¹ to R⁴), preferably a hydrogen atom or an alkyl group, more preferably a hydrogen atom.

R⁶ represents a hydrogen atom, an alkyl group, an alkenyl group, an aryl group or a heterocyclic group (preferred examples of the substituent for these groups are the same as those for R¹ to R⁴), preferably an alkyl group (preferably an alkyl group having a carbon number of 1 to 6).

Z¹ represents an atomic group for forming a 5- or 6-membered ring.

The heterocyclic ring formed is preferably an indolenine ring, an azaindolenine ring, a pyrazoline ring, a benzothiazole ring, a thiazole ring, a thiazoline ring, a benzoxazole ring, an oxazole ring, an oxazoline ring, a benzimidazole ring, an imidazole ring, a thiadiazole ring, a quinoline ring or a pyridine ring, more preferably an indolenine ring, an azaindolenine ring, a pyrazoline ring, a benzothiazole ring, a thiazole ring, a thiazoline ring, a benzoxazole ring, an oxazole ring, an oxazoline ring, a benzimidazole ring, a thiadiazole ring or a quinoline ring, and most preferably an indolenine ring, an azaindolenine ring, a benzothiazole ring, a benzoxazole ring or a benzimidazole ring.

The heterocyclic ring formed by Z¹ may have a substituent (preferred examples of the substituent are the same as examples of the substituent on Za₁ and Za₂), and the substituent is more preferably an alkyl group, an aryl group, a heterocyclic group, a halogen atom, a carboxyl group, a sulfo group, an alkoxy group, a carbamoyl group or an alkoxycarbonyl group.

X¹ and X² each is preferably an aryl group or a group represented by formula (2), more preferably an aryl group substituted by a dialkylamino or diarylamino group at the 4-position, or a group represented by formula (2).

The two-photon absorption compound for use in the present invention preferably contains a hydrogen bonding group in the molecule. The hydrogen bonding group as used herein means a group of donating or accepting hydrogen in the hydrogen bonding, and a group having both properties of donating and accepting hydrogen is preferred.

The compound having a hydrogen bonding group for use in the present invention preferably exhibits an aggregating interaction in the solution or solid state by causing interaction of hydrogen bonding groups with each other. The interaction may be intramolecular interaction or intermolecular interaction but is preferably intermolecular interaction.

The hydrogen bonding group for use in the present invention is preferably -COOH, -CONHR¹¹, -SO₃H, -SO₂NHR¹², -P(O)(OH)OR¹³, -OH, -SH, NHR¹⁴, -NHCOR¹⁵ or -NR¹⁶C(O)NHR¹⁷, wherein R¹¹ and R¹² each independently represents a hydrogen atom, an alkyl group (preferably having a carbon number (hereinafter referred to as "a C number") of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e.g., vinyl, allyl), an aryl group (preferably having a C number of 6 to 20, e.g., phenyl, 2-chlorophenyl, 4-methoxyphenyl, 3-methylphenyl, 1-naphthyl), a heterocyclic group (preferably having a C number of 1 to 20, e.g., pyridyl, thienyl, furyl, thiazolyl, imidazolyl, pyrazolyl, pyrrolidino, piperidino, morpholino), -COR¹⁸ or -SO₂R¹⁹, and R¹³ to R¹⁹ each independently represents a hydrogen atom, an alkyl group, an alkenyl group, an aryl group or a heterocyclic group (preferred examples of these groups are the same as those for R¹¹ and R¹²)

R¹¹ is preferably a hydrogen atom, an alkyl group, an aryl group, a -COR¹⁸ group or a -SO₂R¹⁹ group and at this time, R¹⁸ and R¹⁹ each is preferably an alkyl group or an aryl group. -

R¹¹ is more preferably a hydrogen atom, an alkyl group or a -SO₂R¹⁹ group, and most preferably a hydrogen atom.

R¹² is preferably a hydrogen atom, an alkyl group, an aryl group, a -COR¹⁸ group or a -SO₂R¹⁹ group and at this time, R¹⁸ and R¹⁹ each is preferably an alkyl group or an aryl group.

R¹² is more preferably a hydrogen atom, an alkyl group or a -COR¹⁸ group, and most preferably a hydrogen atom.

R¹³ is preferably a hydrogen atom, an alkyl group or an aryl group, more preferably a hydrogen atom.

R¹⁴ is preferably a hydrogen atom, an alkyl group or an aryl group.

R¹⁵ is preferably an alkyl group or an aryl group.

R¹⁶ is preferably a hydrogen atom, and R¹⁷ is preferably a hydrogen atom, an alkyl group or an aryl group.

The hydrogen bonding group is more preferably -COOH, -CONHR¹¹, -SO₂NHR¹², -NHCOR¹⁵ or -NR¹⁶C(O)NHR¹⁷, still more preferably -COOH, -CONHR¹¹ or -SO₂NHR¹², and most preferably -COOH or -CONH₂.

The two-photon absorption compound for use in the present invention may be used in a monomer state or in an aggregated state.

Incidentally, a state where dye chromophores are fixed to each other into a specific spatial configuration by a bonding force such as covalent bonding, coordinate bonding or various intermolecular forces (e.g., hydrogen bonding, van der Waals force, Coulomb force) is generally called an associated (or aggregated) state.

The two-photon absorption compound for use in the present invention may be used in an intermolecular aggregation state or in a state where two or more chromophores of undergoing two-photon absorption are present in the molecule and allowed to undergo two-photon absorption in an intramolecular aggregation state.

For reference, the aggregate is described below. The aggregate is described in detail, for example, in James (compiler), The Theory of the Photographic Process, 4th ed., Chap. 8, pp. 218-222, Macmillan (1977), and Takayoshi Kobayashi, J-Aggregates, World Scientific Publishing Co. Pte. Ltd. (1996).

The monomer means a one-molecule form. From the standpoint of absorption wavelength of the aggregate, an aggregate where the absorption shifts to the shorter wavelength with respect to the monomer absorption is called an H-aggregate (a two-molecule form is specially called a dimer), and an aggregate where the absorption shifts to the longer wavelength is called a J-aggregate.

From the standpoint of structure of the aggregate, in the case of a brickwork aggregate, an aggregate having a small shear angle is called a J-aggregate and an aggregate having a large shear angle is called an H-aggregate. The brickwork aggregate is described in detail in Chemical Physics Letters, Vol. 6, page 183 (1970). As an aggregate having a structure similar to the brickwork aggregate, an aggregate having a ladder or staircase structure is known. The aggregate having a ladder or staircase structure is described in detail in Zeitschrift fur Physikalische Chemie, Vol. 49, page 324 (1941).

Also, as an aggregate that forms a structure other than the brickwork structure, there is known an aggregate taking a herringbone structure (this aggregate can be called a herringbone aggregate).

The herringbone aggregate is described in Charles Reich, Photographic Science and Engineering, Vol. 18, No. 3, page 335 (1974). The herringbone aggregate has two absorption maximums attributable to the aggregate.

As described above, whether the dye is taking an aggregated state can be confirmed by the change in the absorption (absorption λmax, ε, absorption form) from the monomer state.

The compound for use in the present invention may be shifted by aggregation to either or both of shorter wavelength (H-aggregate) and longer wavelength (J-aggregate) but preferably forms a J-aggregate.

The intermolecular aggregation state of the compound can be formed by various methods.

Examples of the method in a solution system include a method of dissolving the compound in an aqueous solution having added thereto a matrix such as gelatin (for example, an aqueous 0.5 wt% gelatino•10⁻⁴ M compound solution) or in an aqueous solution having added thereto a salt such as KCl (for example, an aqueous 5% KCl•2×10⁻³ M compound solution), and a method of dissolving the compound in a good solvent and then adding thereto a bad solvent (for example, DMF-water system or chloroform-toluene system).

Examples of the method in a film system include methods such as polymer dispersion system, amorphous system, crystal system and LB film system.

Furthermore, the intermolecular aggregation state may also be formed by the adsorption, chemical bonding or self-organization to a bulk or fine particle (from µm to nm size) semiconductor (for example, silver halide or titanium oxide) or to a bulk or fine particle metal (for example, gold, silver or platinum). The spectral sensitization by J-aggregation adsorption of a cyanine dye on a silver halide crystal, which is employed in the field of silver salt color photography, utilizes this technique.

As for the number of compounds participating in the intermolecular aggregation, two compounds may be used or a very large number of compounds may be used.

Specific preferred examples of the two-photon absorption compound for use in the present invention are set forth below, but the present invention is not limited thereto.

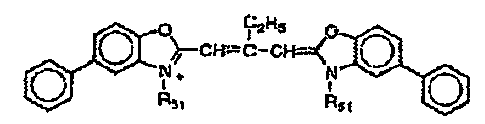

| | R₅₁ | Cl |
|---|---|---|
| D-1 | 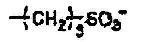 | Nₐ⁺ |
| D-2 | -C₂H₅ | I⁻ |
| D-3 | 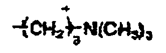 | (Br⁻) |

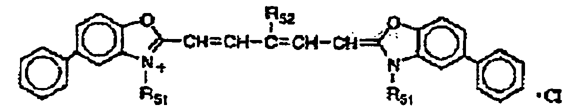

| | R₅₁ | R₅₂ | Cl |
|---|---|---|---|
| D-4 | 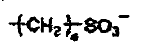 | -H | 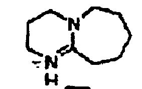 |
| D-5 | -C₂H₅ | " | 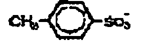 |
| D-6 | 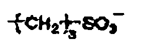 | -C₂H₅ | K⁺ |
| D-7 | 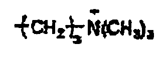 | -CH₃ | (Br⁻)₅ |
| D-8 | 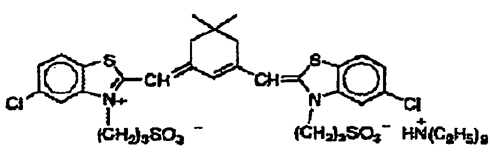 | | |
| D-9 | 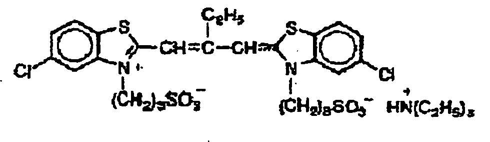 | | |
| D-10 | 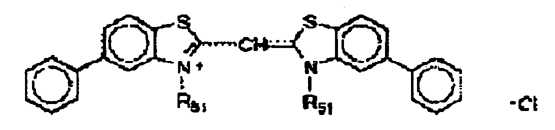 | | |

| | R₅₁ | Cl |
|---|---|---|
| D-11 | 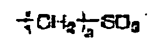 | 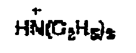 |
| D-12 | C₂H₅ | 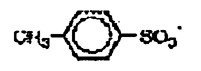 |
| D-13 | 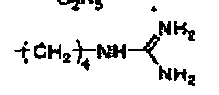 | (Br⁻)₃ |

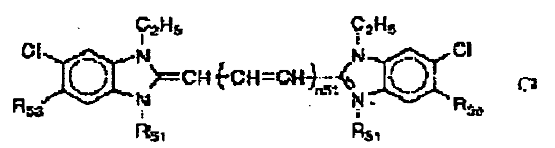

| | R₅₁ | R₅₅ | R₅₁ | Cl |
|---|---|---|---|---|
| D-14 | 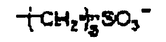 | Cl | 1 | Nₐ⁺ |
| D-15 | -C₂H₅ | | 1 | I |
| D-16 | 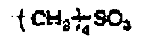 | -CF₅ | " | K⁺ |
| D-17 | " | -CN | " | 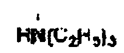 |
| D-18 | " | -Cl | 2 | H 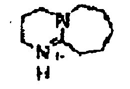 |
| D-19 | 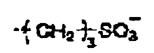 | -CN | " | " |
| D-20 | -C₂H₃ | " | " | 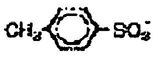 |

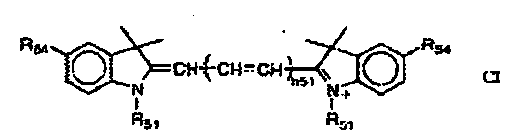

| | R₅₁ | R₅₂ | R₅₁ | Cl |
|---|---|---|---|---|
| D-21 | 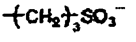 | -H | 1 | 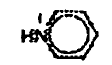 |
| D-22 | -C₄H₉ | -COOH | " | 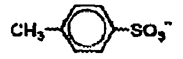 |
| D-23 | -CH₃ | -H | 2 | I⁻ |
| D-24 | 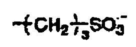 | -COOH | " | Na⁻ |
| D-25 | 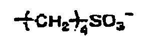 | -H | 3 | K⁺ |
| D-26 | 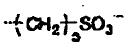 | -COOH | " | " |
| D-27 | -CH₃ | -CONH₂ | " | 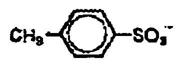 |
| D-28 | 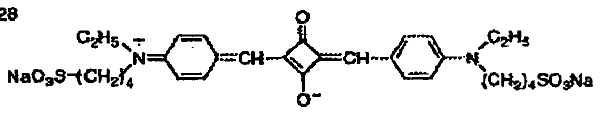 | | | |
| D-29 | 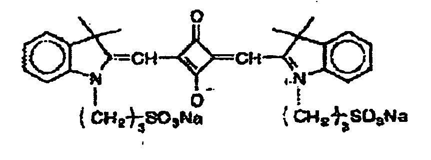 | | | |

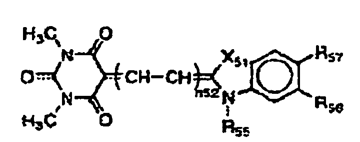

| | R₅₅ | R₅₈ | R₅₇ | X₅₁ | n₅₂ |
|---|---|---|---|---|---|
| D-30 | 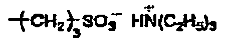 | -Cl | -H | -O- | 1 |
| D-31 | -C₂H₅ | -H | -COOH | " | 2 |
| D-32 | 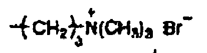 | " | -H | " | " |
| D-33 | 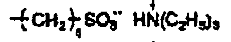 | -CH₃ | -CH₃ | -S- | " |
| D-34 | 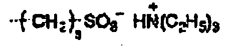 | -H | -H | -C(CH₃)₂- " | " |
| | -CH₈ | " | " | " | " |
| D-35 D-36 | 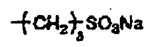 | " | -COOH | " | " |
| D-37 | -CH₃ | " | -CONH₂ | " | " |
| D-38 | 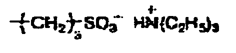 | " | -H | " | 3 |

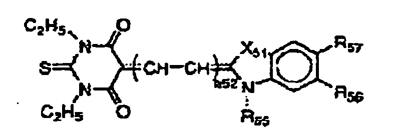

| | R₅₅ | R₅₆ | R₅₇ | X₅₁ | A₅₂ |
|---|---|---|---|---|---|
| D-39 | 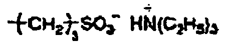 | -Cl | -H | -S- | 1 |
| D-40 | -C₂H₅ | -H | -CONH₂ | -O- | 2 |
| D-41 | 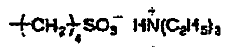 | -CH₃ | -CH₃ | -S- | " |
| D-42 | 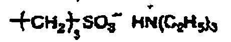 | -H | -H | -C(CH₃)₂⁻ | " |
| D-43 | 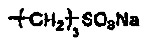 | " | -COOH | " | " |
| D-44 | -CH₅ | " | -CORH₂ | " | " |
| D-45 | " | " | " | " | 3 |

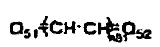

| | Q₅₁ | Q₆₃ | |
|---|---|---|---|
| D-46 | 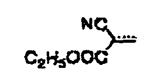 | 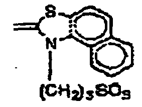 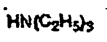 | 2 |
| D-47 | 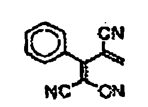 | 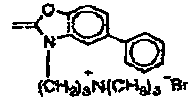 | 1 |
| D-48 | 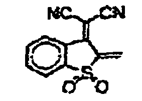 | 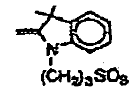 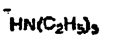 | 1 |
| D-49 | 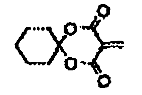 | 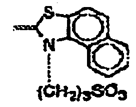 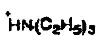 | 2 |
| D-50 | 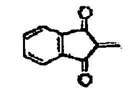 | 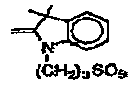 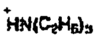 | 2 |
| D-51 | 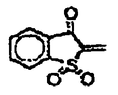 | " | 3 |
| D-52 | 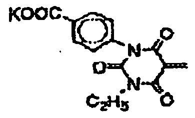 | 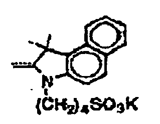 | 3 |
| D-53 | 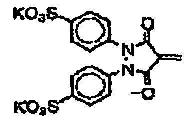 | 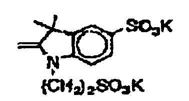 | 3 |
| D-54 | 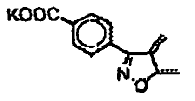 | 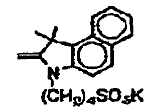 | 3 |
| D-55 | 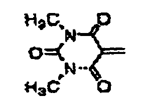 | 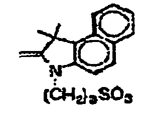 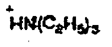 | 2 |

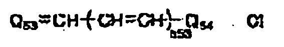

| | Q₅₃ | Q₅₄ | n₆₃ | Cl |
|---|---|---|---|---|
| D-56 | 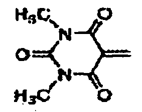 | 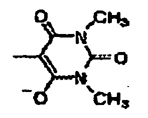 | 2 | H⁺ |
| D-57 | 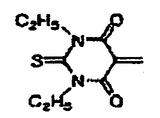 | 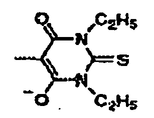 | 1 | 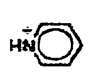 |
| D-58 | " | " | 2 | 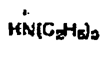 |
| D-59 | 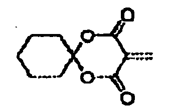 | 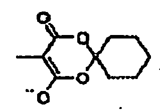 | 2 | |
| D-60 | 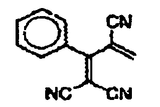 | 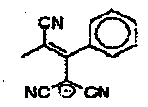 | 1 | 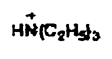 |
| D-61 | 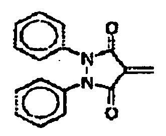 | 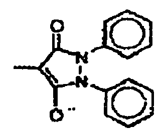 | 2 | H⁺ |
| D-62 | 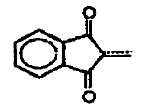 | 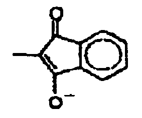 | 2 | 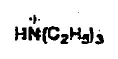 |
| D-63 | 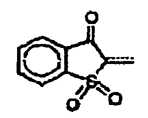 | 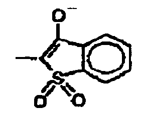 | 2 | " |
| D-64 | 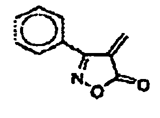 | 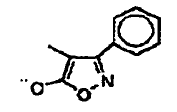 | 2 | H⁺ |
| D-65 | 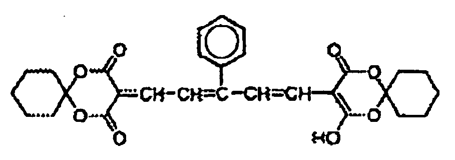 | | | |
| D-66 | 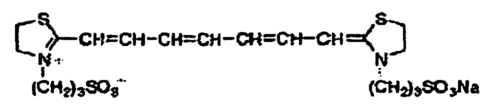 | | | |
| D-67 | 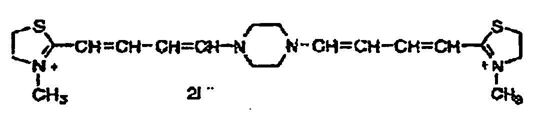 | | | |
| D-68 | 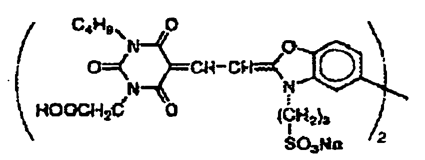 | | | |
| D-69 | 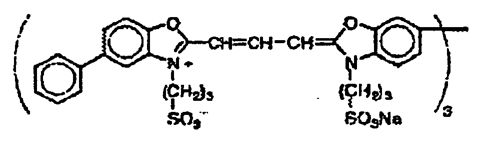 | | | |
| D-70 | 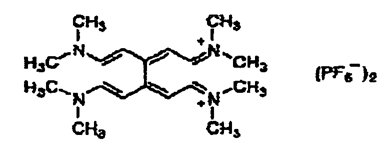 | | | |
| D-71 | 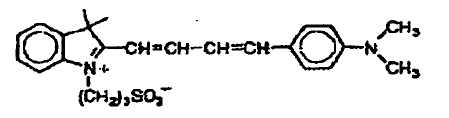 | | | |
| D-72 | 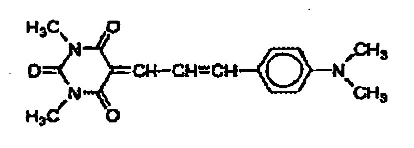 | | | |

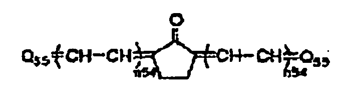

| | Q₅₅ | n₅₄ |
|---|---|---|
| 0-73 | 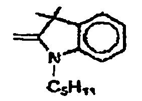 | 2 |
| D-74 | 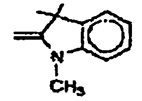 | 1 |
| D-75 | 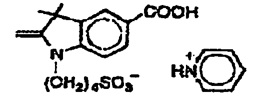 | 1 |
| D-76 | 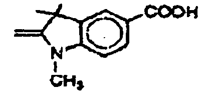 | 2 |
| D-77 | 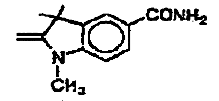 | 2 |
| D-78 | 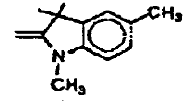 | 2 |
| D-79 | 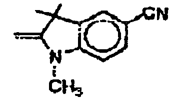 | 2 |
| D-80 | 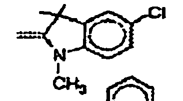 | 2 |
| D-81 | 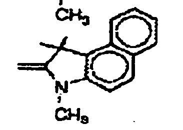 | 2 |
| D-82 | 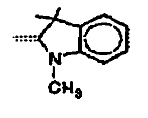 | 2 |

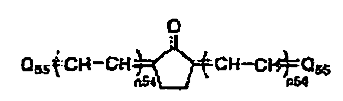

| | Q₅₅ | n₅₄ |
|---|---|---|
| D-83 | 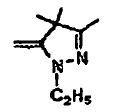 | 2 |
| D-84 | 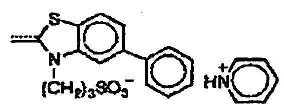 | 1 |
| D-85 | 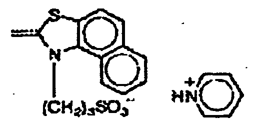 | 1 |
| D-86 | 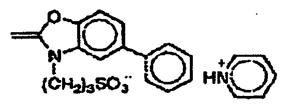 | 1 |
| D-87 | 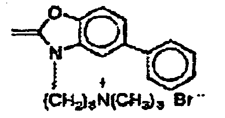 | 1 |
| D-88 | 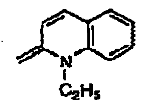 | 1 |
| D-89 | 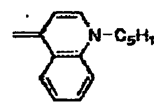 | 1 |

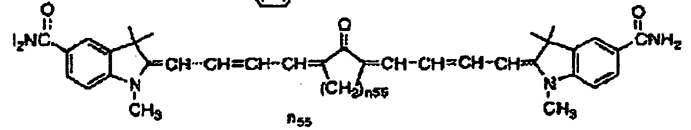

| | n₅₅ |
|---|---|
| D-90 | 0 |
| D-91 | 1 |
| D-92 | 3 |

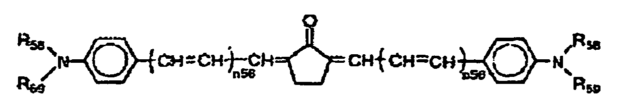

| | R₅₈ | R₅₉ | n₅₆ |
|---|---|---|---|
| D-93 | -C₂H₅ | -C₂H₅ | 0 |
| D-94 | -CH₃ | -CH₃ | 1 |
| | " | 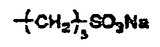 | 4 |
| D-96 | " | -CH₃ | 2 |
| D-97 | " | -COOH | " |
| D-98 | " | -CH₃ | 3 |
| D-93 | 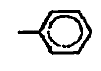 | 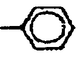 | 2 |

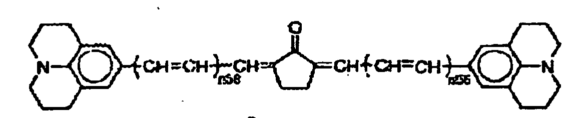

| | n₅₈ |
|---|---|
| D-100 | 1 |
| D-101 | 2 |
| D-102 | 3 |

| | | |
|---|---|---|
| 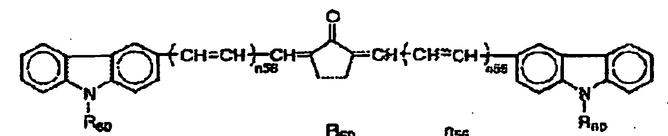 | | |

| | R₆₀ | n₅₆ |
|---|---|---|
| D-103 | -C₂H₅ | 0 |
| D-104 | " | 1 |
| D-105 | " | 2 |
| D-106 | -CH₂COOH | " |
| D-107 | 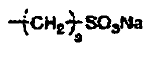 | " |

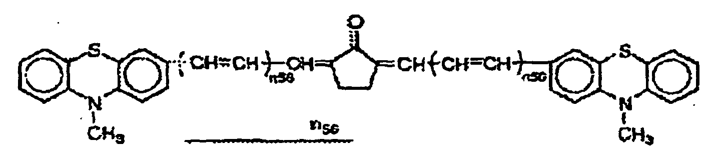

| | n₅₆ |
|---|---|
| D-108 | 1 |
| D-109 | 2 |

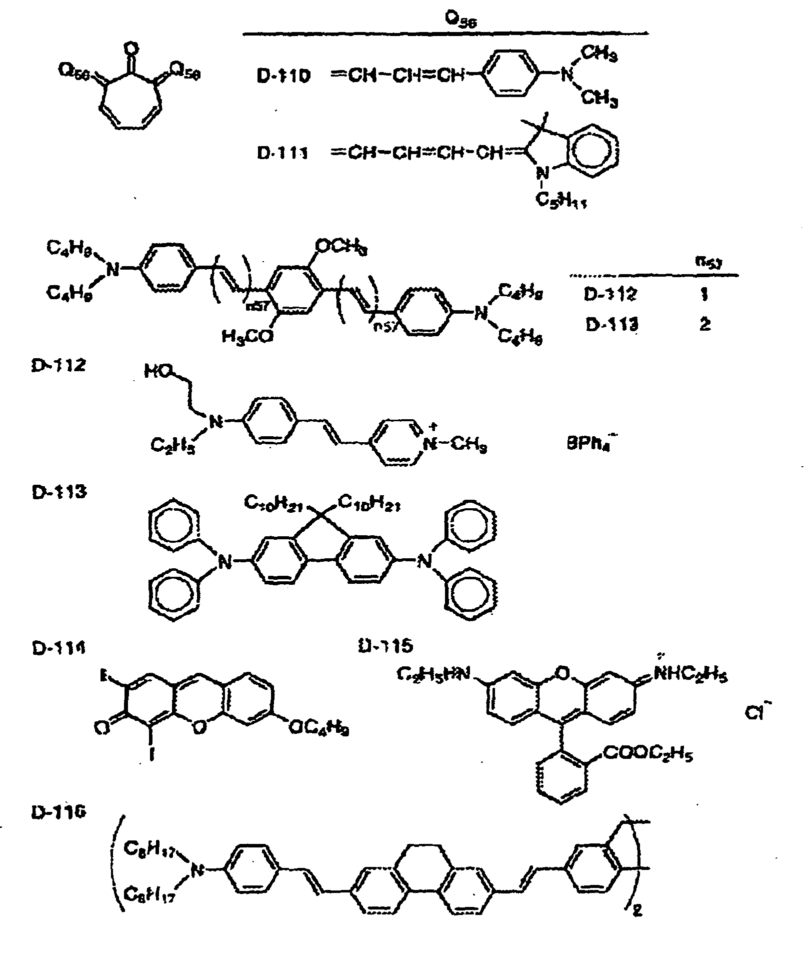

### <Polymerization Initiator>

The polymerization initiator for use in the two-photon absorption three-dimensional recording material of the present invention is described below.

The polymerization initiator for use in the present invention is a compound which can undergo energy transfer or electron transfer (give an electron or accept an electron) from the excited state of the two-photon absorption compound, produced through non-resonant two-photon absorption, to generate a radical or an acid (Broensted acid or Lewis acid) and thereby initiate the polymerization of the polymerizable compound.

The polymerization initiator for use in the present invention is preferably a radical polymerization initiator capable of generating a radical to initiate the radical polymerization of the polymerizable compound, a cationic polymerization initiator capable of generating only an acid without generating a radical and thereby initiating only the cationic polymerization of the polymerizable compound, or a polymerization initiator capable of generating both a radical and an acid to initiate both the radical polymerization and the cationic polymerization.

The preferred polymerization initiator for use in the present invention includes the following 14 systems. If desired, these polymerization initiators may be used as a mixture of two or more thereof which are mixed at an arbitrary ratio.
1) Ketone-based polymerization initiator
2) Organic peroxide-based polymerization initiator
3) Bisimidazole-based polymerization initiator
4) Trihalomethyl-substituted triazine-based polymerization initiator
5) Diazonium salt-based polymerization initiator
6) Diaryliodonium salt-based polymerization initiator
7) Sulfonium salt-based polymerization initiator
8) Borate-based polymerization initiator
9) Diaryliodonium organic boron complex-based polymerization initiator
10) Sulfonium organic boron complex-based polymerization initiator
11) Cationic two-photon absorption compound organic boron complex-based polymerization initiator
12) Anionic two-photon absorption compound onium salt complex-based polymerization initiator
13) Metal arene complex-based polymerization initiator
14) Sulfonic acid ester-based polymerization initiator

These preferred systems are specifically described below.

### 1) Ketone-Based Polymerization Initiator

The ketone-based polymerization initiator preferably includes an aromatic ketone, aromatic diketone and the like.

Preferred examples thereof include a benzophenone derivative (e.g., benzophenone, Michler's ketone), a benzoin derivative (e.g., benzoin methyl ether, benzoin ethyl ether, α-methylbenzoin, α-allylbenzoin, α-phenylbenzoin), an acetoin derivative (e.g., acetoin, pivaloin, 2-hydroxy-2-methylpropiophenone, 1-hydroxycyclohexyl phenyl ketone), an acyloin ether derivative (e.g., diethoxyacetophenone), an α-diketone derivative (e.g., diacetyl, benzyl, 4,4'-dimethoxybenzyl, benzyldimethylketal, 2,3-bornanedione (camphor quinone), 2,2,5,5-tetramethyltetrahydro-3,4-furoic acid (imidazoletrione)), a xanthone derivative (e.g., xanthone), a thioxanthone derivative (e.g., thioxanthone, 2-chlorothioxanthone), and a ketocoumarin derivative.

Examples of the commercial product include Irgacure 184, 651 and 907 represented by the following formula, which are commercially available from Ciba Geigy.
Irgacure 907: 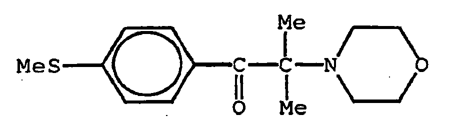 Irgacure 184: 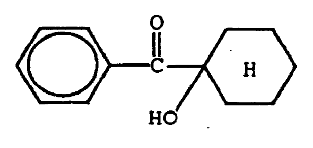 Irgacure 651:

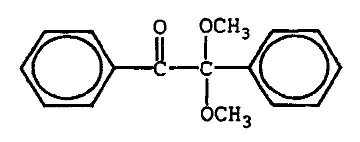

Other preferred examples include a quinone-based polymerization initiator (e.g., 9,10-anthraquinone, 1-chloroanthraquinone, 2-chloroanthraquinone, 2-methylanthraquinone, 2-ethylanthraquinone, 2-tert-butylanthraquinone, octamethylanthraquinone, 1,4-naphthoquinone, 9,10-phenandirenequinone, 1,2-benzanthraquinone, 2,3-benzanthraquinone, 2-methyl-1,4-naphthoquinone, 2,3-dichloronaphthoquinone, 1,4-dimethylanthraquinone, 2,3-dimethylanthraquinone, 2-phenylanthraquinone, 2,3-dimethylanthraquinone, sodium anthraquinone-α-sulfonate, 3-chloro-2-methylanthraquinone,retenequinone, 7,8,9,10-tetrahydronaphthacenequinone, 1,2,3,4-tetrahydrobenz(a)-anthracene-7,12-dione). 2) Organic Peroxide-Based Polymerization Initiator

Preferred examples of this system include benzoyl peroxide, di-tert-butyl peroxide, and 3,3',4,4'-tetra(tert-butylperoxycarbonyl)benzophenone described in JP-A-59-189340 and JP-A-60-76503. 3) Bisimidazole-Based Polymerization Initiator

The bisimidazole-based polymerization initiator is preferably a bis(2,4,5-triphenyl)imidazole derivative and examples thereof include bis(2,4,5-triphenyl)imidazole, 2-(o-chlarophenyl)-4,5-bis(m-methoxyphenyl)-imidazole dimer (CDM-HABI), 1,1'-biimidazole, 2,2'-bis(o-chlorophenyl)-4,4',5,5'-tetraphenyl (o-Cl-HABI), 1H-imidazole, and 2,5-bis(o-chlorophenyl)-4-[3,4-dimethoxyphenyl]-dimer (TCTM-HABI).

The bisimidazole-based polymerization initiator is preferably used together with a hydrogen donor. Preferred examples of the hydrogen donor include 2-mercaptobenzoxazole, 2-mercaptobenzothiazole and 4-methyl-4H-1,2,4-triazole-3-thiol. 4) Trihalomethyl-Substituted Triazine-Based Polymerization Initiator

The trihalomethyl-substituted triazine-based polymerization initiator is preferably represented by the following formula (11):

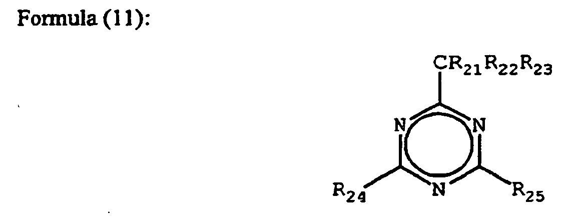

In formula (11), R₂₁, R₂₂ and R₂₃ each independently represents a hydrogen atom, preferably a chlorine atom, and R₂₄ and R₂₅ each independently represents a hydrogen atom, -CR₂₁R₂₂R₂₃ or a substituent (preferred examples of the substituent are the same as the substituent on Za¹). R₂₄ is preferably -CR₂₁R₂₂R₂₃, more preferably -CCl₃, and R₂₅ is preferably -CR₂₁R₂₂R₂₃, an alkyl group, an alkenyl group or an aryl group.

Specific examples of the trihalomethyl-substituted triazine-based polymerization initiator include 2-methyl-4,6-bis(trichloromethyl)-1,3,5-triazine, 2,4,6-tris(trichloromethyl)-1,3,5-triazine, 2-phenyl-4,6-bis(trichloromethyl)-1,3,5-triazine, 2-(4'-methoxyphenyl)-4,6-bis(trichloromethyl)-1,3,5-triazine, 2-(4'-trifluoromethylphenyl)-4,6-bis(trichloromethyl)-1,3,5-triazine, 2,4-bis(trichloromethyl)-6-(p-methoxyphenylvinyl)-1,3,5-triazine, and 2-(4'-methoxy-1'-naphthyl)-4,6-bis(trichloromethyl)-1,3,5-triazine. Preferred examples thereof also include the compounds described in British Patent 1,388,492 and JP-A-53-133428. 5) Diazonium Salt-Based Polymerization Initiator

The diazonium salt-based polymerization initiator is preferably represented by the following formula (12):

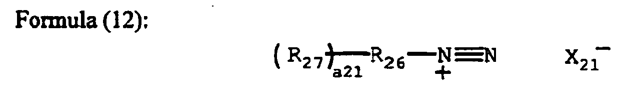

In the formula above, R₂₆ represents an aryl group or a heterocyclic group (preferred examples of these groups are the same as those of the substituent on Za¹), preferably an aryl group, more preferably a phenyl group.

R₂₇ represents a substituent (preferred examples of the substituent are the same as those of the substituent on Za¹), and a21 represents an integer of 0 to 5, preferably from 0 to 2. When a21 is an integer of 2 or more, the plurality of R₂₇'s may be the same or different or may combine with each other to form a ring.

X₂₁⁻ is an anion such that HX₂₁ becomes an acid having a pKa of 4 or less (in water, at 25°C), preferably 3 or less, more preferably 2 or less, and preferred examples thereof include chloride, bromide, iodide, tetrafluoroborate, hexafluorophosphate, hexafluoroarcenate, hexafluoroantimonate, perchlorate, trifluoromethanesulfonate, 9,10-dimethoxyanthracene-2-sulfonate, methanesulforate, benzenesulfonate, 4-trifluoromethylbenzenesulfonate, tosylate, and tetra(pentafluorophenyl)borate.

Specific examples of the diazonium-based polymerization initiator include the above-described X₂₁⁻ salts of benzenediazonium, 4-methoxydiazonium and 4-methyldiazonium. 6) Diaryliodonium Salt-Based Polymerization Initiator

The diaryliodonium salt-based polymerization initiator is preferably represented by the following formula (13):

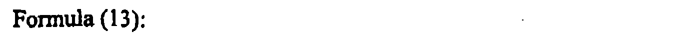

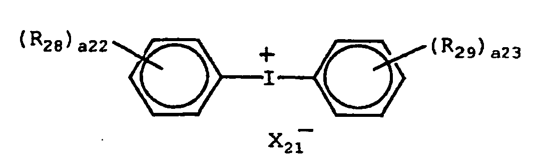

In formula (13), X₂₁⁻ has the same meaning as in formula (12), R₂₈ and R₂₉ each independently represents substituent (preferred examples thereof are the same as those of the substituent on Za¹), preferably an alkyl group, an alkoxy group, a halogen atom, a cyano group or a nitro group, a22 and a23 each independently represents an integer of 0 to 5, preferably 0 to 1, and when a22 and a23 each is an integer of 2 or more, the plurality of R₂₈'s or R₂₉'s may be the same or different and may combine with each other to form a ring.

Specific examples of the diaryliodonium salt-based polymerization initiator include chloride, bromide, iodide, tetrafluoroborate, hexafluorophosphate, hexafluoroarcenate, hexafluoroantimonate, perchlorate, trifluoromethanesulfonate, 9,10-dimethoxyanthracene-2-sulfonate, methanesulforate, benzenesulfonate, 4-trifluoomethylbenzenesulfonate, tosylate and tetra(pentafluorophenyl)borate of diphenyliodonium, 4,4'-dichlorodiphenyliodonium, 4,4'-dimethoxydiphenyliodonium, 4,4'-dimethyldiphenyliodonium, 4,4'-tert-butyldiphenyliodonium, 3,3'-dinitrodiphenyliodonium, phenyl(p-methoxyphenyl)iodonium and bis(p-cyanophenyl)iodonium.

Other examples include compounds described in Macromolecules, Vol. 10, page 1307 (1977), and diaryliodonium salts described in JP-A-58-29803, JP-A-1-287105 and Japanese Patent Application No. 3-5569. 7) Sulfonium Salt-Based Polymerization Initiator

The sulfonium salt-based polymerization initiator is preferably represented by the following formula (14):

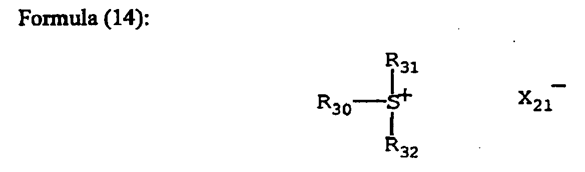

In formula (14), X₂₁⁻ has the same meaning as in formula (12), and R₃₀, R₃₁ and R₃₂ each independently represents an alkyl group, an aryl group or a heterocyclic group (preferred examples of these groups are the same as those of the substituent on Za¹), preferably an alkyl group, a phenacyl group or an aryl group.

Specific examples of the sulfonium salt-based polymerization initiator include chloride, bromide, tetrafluoroborate, hexafluorophosphate, hexafluoroarcenate, hexafluoroantimonate, perchlorate, trifluoromethanesulfonate, 9,10-dimethoxyanthracene-2-sulfonate, methanesulforate, benzenesulfonate, 4-trifluoomethylbenzenesulfonate, tosylate and tetra(pentafluorophenyl)borate of a sulfonium salt such as triphenylsulfonium, diphenylphenacylsulfonium, dimethylphenacylsulfonium, benzyl-4-hydroxyphenylmethylsulfonium, 4-tert-butyltriphenylsulfonium, tris(4-methylphenyl)sulfonium, tris(4-methoxyphenyl)sulfonium, 4-thiophenyltriphenylsulfonium and bis-1-(4-(diphenylsulfonium)phenyl)sulfide. 8) Borate-Based Polymerization Initiator

The borate-based polymerization initiator is preferably represented by the following formula (15):

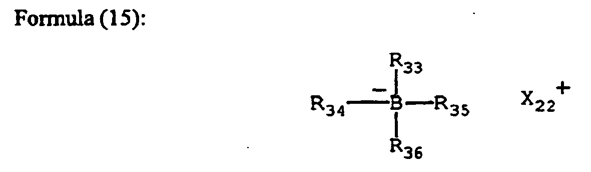

In formula (15), R₃₃, R₃₄, R₃₅ and R₃₆ each independently represents an alkyl group, an alkenyl group, an alkynyl group, a cycloalkyl group or an aryl group (preferred examples of these groups are the same as those of the substituent on Za¹), preferably an alkyl group or an aryl group, provided that R₃₃, R₃₄, R₃₅ and R₃₆ all are not an aryl group at the same time, and X₂₂⁺ represents a cation.

A compound where R₃₃, R₃₄ and R₃₅ are an aryl group and R₃₆ is an alkyl group is more preferred, and a compound where R₃₃, R₃₄ and R₃₅ are a phenyl group and R₃₆ is an n-butyl group is most preferred.

Specific examples of the borate-based polymerization initiator include tetrabutylammonium n-butyltriphenylborate and tetramethylammonium sec-butyltriphenylborate. 9) Diaryliodonium Organic Boron Complex-Based Polymerization Initiator

The diaryliodonium organic boron complex-based polymerization initiator is preferably represented by the following formula (16):

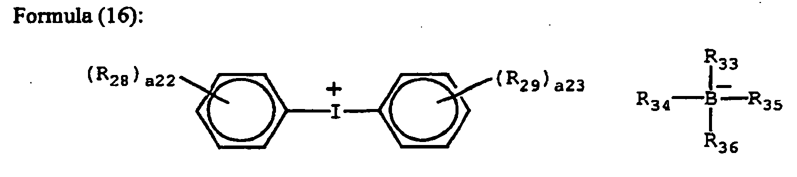

In formula (16), R₂₈, R₂₉, a22 and a23 have the same meanings as in formula (13), and R₃₃, R₃₄, R₃₅ and R₃₆ have the same meanings as in formula (15).

Specific examples of the diaryliodonium organic boron complex-based polymerization initiator include the following I-1 to I-3.

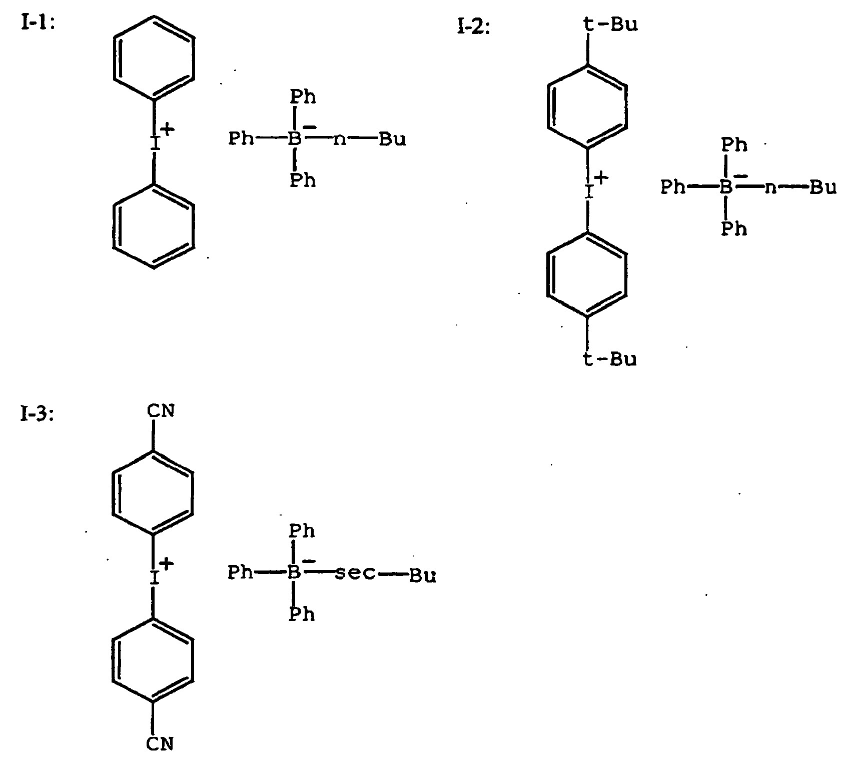

In addition, an iodonium organic boron complex such as diphenyliodonium (n-butyl)triphenylborate described in JP-A-3-704 is also preferred. 10) Sulfonium Organic Boron Complex-Based Polymerization Initiator

The sulfonium organic boron complex-based polymerization initiator is preferably represented by the following formula (17):

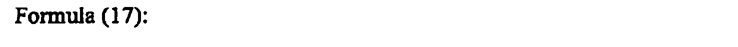

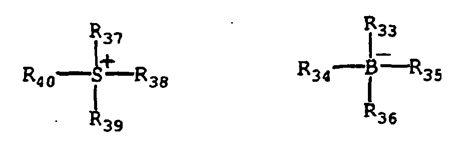

In formula (17), R₃₃, R₃₄, R₃₅ and R₃₆ have the same meanings as in formula (15), R₃₇, R₃₈ and R₃₉ each independently represents an alkyl group, an aryl group, an alkenyl group, an alkynyl group, a cycloalkyl group, an alkoxy group, an aryloxy group, an alkylthio group, an arylthio group or an amino group (preferred examples of these groups are the same as those of the substituent on Za¹), preferably an alkyl group, a phenacyl group, an aryl group or an alkenyl group, R₃₇, R₃₈ and R₃₉ may combine with each other to form a ring, and R₄₀ represents an oxygen atom or a lone electron pair.

Specific examples of the sulfonium organic boron complex-based polymerization initiator include the following I-4 to I-10.

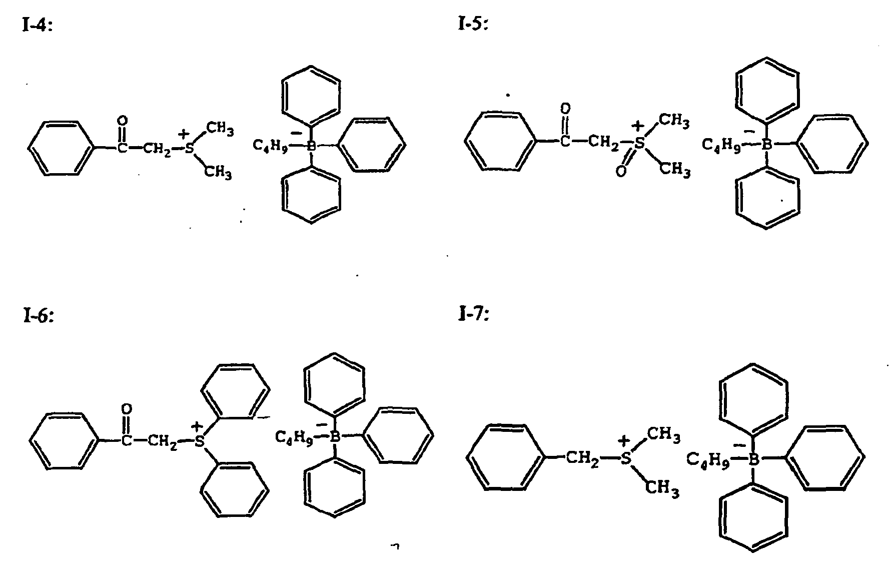

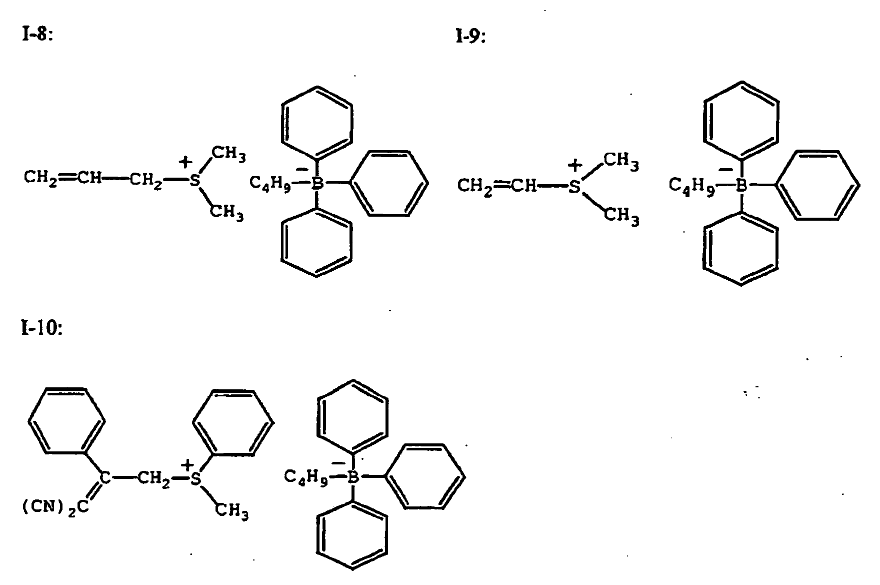

In addition, sulfonium organic boron complexes described in JP-A-5-255347 and JP-A-5-213861 are also preferred. 11) Cationic Two-photon Absorption Compound Organic Boron Complex-Based Polymerization Initiator

When the polymerization initiator for use in the present invention is a cationic two-photon absorption compound organic boron complex-based polymerization initiator, the cationic two-photon absorption compound thereof may play the role of the two-photon absorption compound for use in the present invention.

The cationic two-photon absorption compound organic boron complex-based polymerization initiator is preferably represented by formula (18):

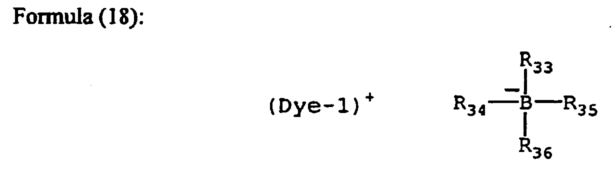

In formula (18), (Dye-1)⁺ is a cationic compound of undergoing non-resonant two-photon absorption and preferred examples thereof are described above. R₃₃, R₃₄, R₃₅ and R₃₆ have the same meanings as in formula (15).

Specific examples of the cationic two-photon absorption compound organic boron complex-based polymerization initiator include the following I-11, I-12, I-13 and I-14.

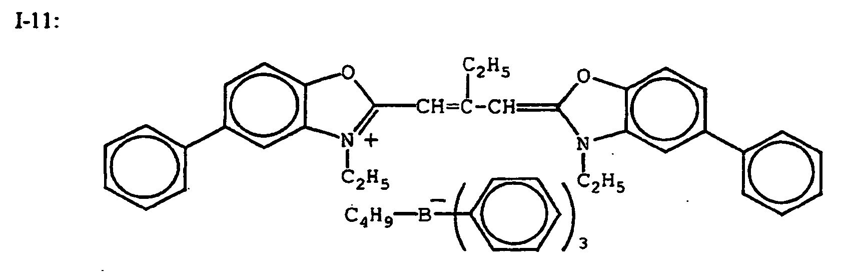

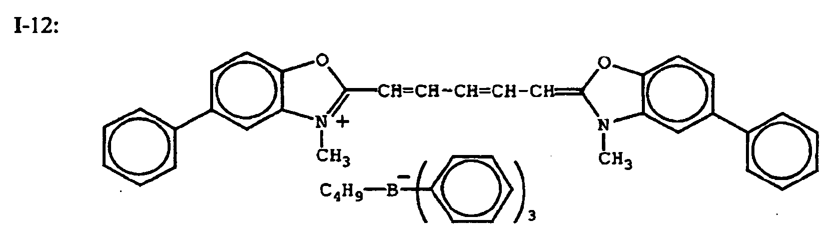

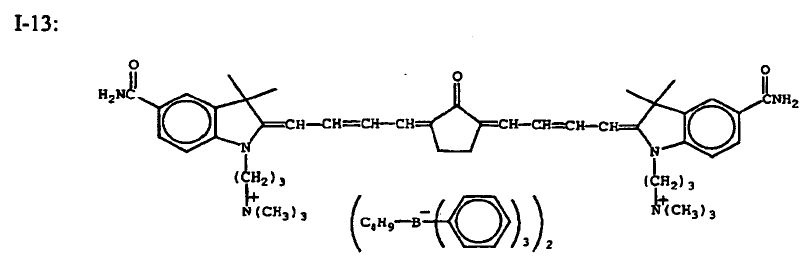

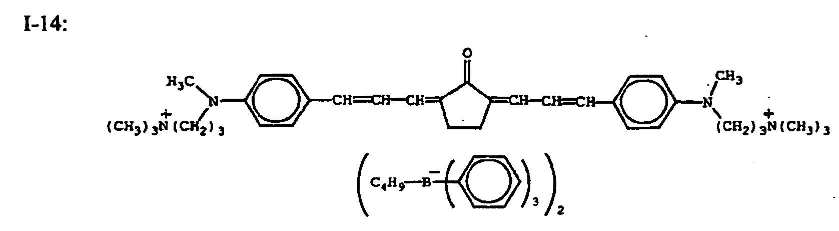

Other specific examples include cationic dye-borate anion complexes described in JP-A-62-143044 and JP-A-62-150242. 12) Anionic Two-photon Absorption Compound Onium Salt Complex-Based

### Polymerization Initiator

When the polymerization initiator for use in the present invention is an anionic two-photon absorption compound onium salt complex-based polymerization initiator, the anionic two-photon absorption compound thereof may play the role of the two-photon absorption compound for use in the present invention.

The anionic two-photon absorption compound onium salt complex-based polymerization initiator is preferably represented by formula (19):

Formula (19): (Dye-2)⁻X₂₃⁺

In formula (19), (Dye-2)⁻ represents an anionic compound of undergoing non-resonant two-photon absorption, and preferred examples thereof are as described above. X₂₃⁺ represents a cation moiety of the diazonium salt of formula (12), a cation moiety of the diaryliodonium salt of formula (13) or a cation moiety of the sulfonium salt of formula (14) (preferred examples thereof are as described above), preferably a cation moiety of the diaryliodonium salt of formula (13) or a cation moiety of the sulfonium salt of formula (14).

Specific examples of the anionic two-photon absorption compound onium salt complex-based polymerization initiator include the following I-15 to I-32.

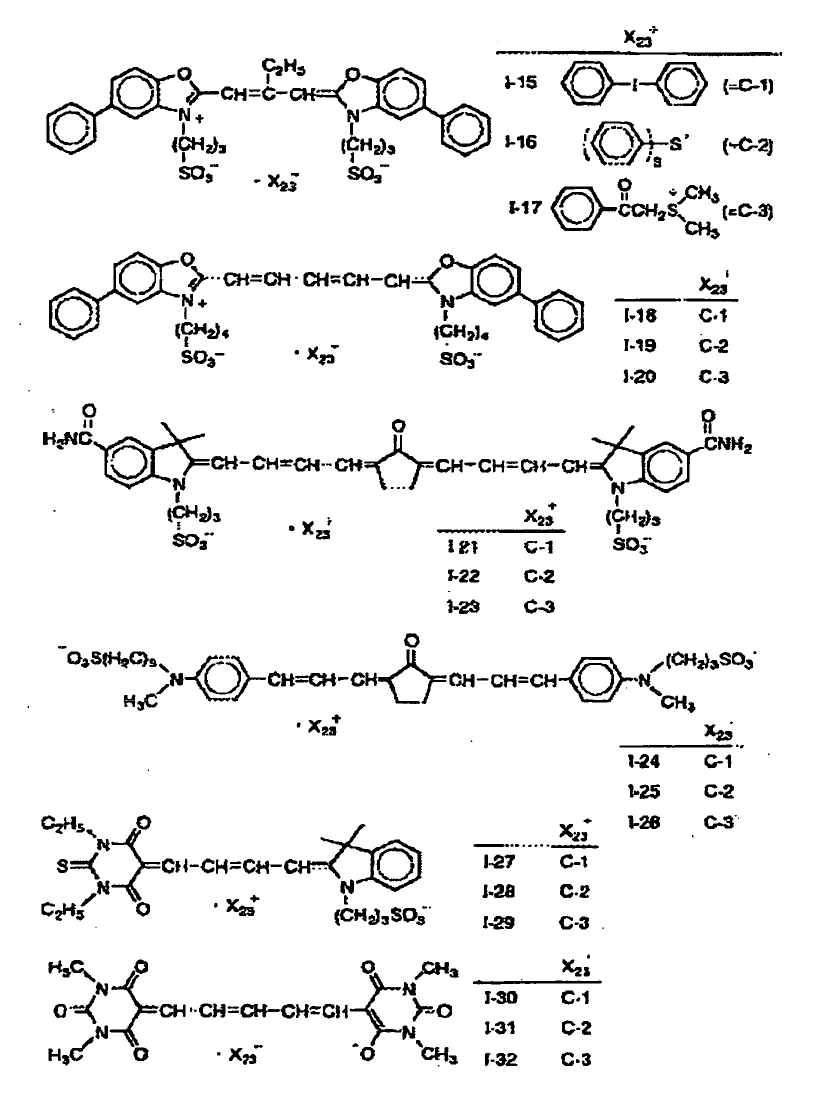

### 13) Metal Arene Complex-Based Polymerization Initiator

The metal arene complex-based polymerization initiator is preferably a metal, iron or titanium. Specific preferred examples thereof include iron arene complexes described in JP-A-1-54440, European Patent Nos. 109851 and 126712, and J. Imag. Sci., Vol. 30, page 174 (1986), iron arene organic boron complexes described in Organometallics, Vol. 8, page 2737 (1989), iron arene complex salts described in Prog. Polym. Sci., Vol. 21, pp. 7-8 (1996), and titanocenes described in JP-A-61-151197. 14) Sulfonic Acid Ester-Based Polymerization Initiator

Preferred examples of the sulfonic acid ester-based polymerization initiator include sulfonic acid esters, nitrobenzyl sulfonates and imidosulfonates.

Specific preferred examples of the sulfonic acid esters include benzoin tosylate and pyrogallol trimesylate; specific preferred examples of the nitrobenzyl sulfonates include o-nitrobenzyl tosylate, 2,6-dinitrobenzyl tosylate, 2',6'-dinitrobenzyl-4-nitrobenzenesulfonate, p-nitrobenzyl-9,10-diethoxyanthracene-2-sulfonate and 2-nitrobenzyltrifluoromethyl sulfonate; and specific preferred examples of the imidosulfonates include N-tosylphthalic acid imide, 9-fluorenylidene aminotosylate and α-cyanobenzylidene tosylamine.

### 15) Other Polymerization Initiators

Examples of the polymerization initiator other than 1) to 14) above include an organic azide compound such as 4,4'-diazidochalcone, an aromatic carboxylic acid such as N-phenylglycine, a polyhalogen compound (e.g., CI₄, CHI₃, CBrCI₃), a pyridinium salt such as 1-benzyl-2-cyanopyridinium hexafluoroantimonate, a phenylisoxazolone, a silanol aluminum complex, and an aluminate complex described in JP-A-3-209477.

The polymerization initiators for use in the present invention can be classified into:
a) polymerization initiator capable of activating radical polymerization,
b) polymerization initiator capable of activating only cationic polymerization, and
c) polymerization initiator capable of activating radical polymerization and cationic polymerization at the same time.

The polymerization initiator a) capable of activating radical polymerization is a polymerization initiator capable of performing energy transfer or electron transfer (giving an electron to the two-photon absorption compound or accepting an electron from the two-photon absorption compound) from the excited state of the two-photon absorption compound, produced through non-resonant two-photon absorption, to generate a radical and thereby initiate radical polymerization of the polymerizable compound.

Out of the above-described systems, the following systems come under the polymerization initiator capable of activating radical polymerization:
1) ketone-based polymerization initiator,
2) organic peroxide-based polymerization initiator,
3) bisimidazole-based polymerization initiator,
4) trihalomethyl-substituted triazine-based polymerization initiator,
5) diazonium salt-based polymerization initiator,
6) diaryliodonium salt-based polymerization initiator,
7) sulfonium salt-based polymerization initiator,
8) borate-based polymerization initiator,
9) diaryliodonium organic boron complex-based polymerization initiator,
10) sulfonium organic boron complex-based polymerization initiator,
11) cationic two-photon absorption compound organic boron complex-based polymerization initiator,
12) anionic two-photon absorption compound onium salt complex-based polymerization initiator, and
13) metal arene complex-based polymerization initiator.

Among these polymerization initiators capable of activating radical polymerization, preferred are
1) ketone-based polymerization initiator,
3) bisimidazole-based polymerization initiator,
4) trihalomethyl-substituted triazine-based polymerization initiator,
6) diaryliodonium salt-based polymerization initiator,
7) sulfonium salt-based polymerization initiator,
11) cationic two-photon absorption compound organic boron complex-based polymerization initiator, and
12) anionic two-photon absorption compound onium salt complex-based polymerization initiator,
and more preferred are
3) bisimidazole-based polymerization initiator,
6) diaryliodonium salt-based polymerization initiator,
7) sulfonium salt-based polymerization initiator,
11) cationic two-photon absorption compound organic boron complex-based polymerization initiator, and
12) anionic two-photon absorption compound onium salt complex-based polymerization initiator.

The polymerization initiator capable of activating only cationic polymerization is a polymerization initiator capable of performing energy transfer or electron transfer from the excited state of the two-photon absorption compound, produced through non-resonant two-photon absorption, to generate an acid (Broensted acid or Lewis acid) without generating a radical and initiate cationic polymerization of the polymerizable compound under the action of the acid.

Out of the above-described systems, the following system comes under the polymerization initiator capable of activating only cationic polymerization:
14) sulfonic acid ester-based polymerization initiator.

Here, as the cationic polymerization initiator, those described, for example, in S. Peter Pappas (compiler), UV Curing; Science and Technology, pp. 23-76, A Technology Marketing Publication, and B. Klingert, M. Riediker and A. Roloff, Comments Inorg. Chem., Vol. 7, No. 3, pp. 109-138 (1988) can also be used.

The polymerization initiator capable of activating radical polymerization and cationic polymerization at the same time is a polymerization initiator capable of performing energy transfer or electron transfer from the excited state of the two-photon absorption compound, produced through non-resonant two-photon absorption, to generate a radical and an acid (Broensted acid or Lewis acid) at the same time and initiate radical polymerization of the polymerizable compound under the action of the radical generated and also cationic polymerization of the polymerizable compound under the action of the acid generated.

Out of the above-described systems, the following systems come under the polymerization initiator capable of activating radical polymerization and cationic polymerization at the same time:
4) trihalomethyl-substituted triazine-based polymerization initiator,
5) diazonium salt-based polymerization initiator,
6) diaryliodonium salt-based polymerization initiator,
7) sulfonium salt-based polymerization initiator, and
13) metal arene complex-based polymerization initiator.

Among these polymerization initiators capable of activating radical polymerization and cationic polymerization, preferred are
6) diaryliodonium salt-based polymerization initiator, and
7) sulfonium salt-based polymerization initiator.

### <Polymerizable Compound>

The binder preferably contains a polymerizable compound not coming under the dye having a polymerizable group. The polymerizable compound not coming under the dye having a polymerizable group, which is preferably contained in the two-photon absorption three-dimensional recording medium of the present invention, is described below.

The polymerizable compound for use in the present invention is a compound capable of causing addition polymerization under the action of a radical or acid (Broensted acid or Lewis acid) generated upon irradiation of light on the two-photon absorption compound and polymerization initiator and thereby undertaking oligomerization or polymerization.

The polymerizable compound for use in the present invention may be monofunctional or polyfunctional, may comprise one component or multiple components, and may be a monomer, a prepolymer (e.g., dimer, oligomer) or a mixture thereof.

The form thereof may be liquid or solid.

The polymerizable compounds for use in the present invention are roughly classified into a polymerizable compound capable of radical polymerization and a polymerizable compound capable of cationic polymerization.

The radical polymerizable compound for use in the present invention is preferably a compound having at least one ethylenically unsaturated double bone in the molecule, and specific examples thereof include the polymerizable monomers described below and prepolymers (e.g., dimer, oligomer) composed of such a polymerizable monomer.

For example, a non-halogen aliphatic compound is described below. Specific examples of the monofunctional type include an unsaturated acid compound such as (meth)acrylic acid, itaconic acid and maleic acid; an alkyl (meth)acrylate such as methyl (meth)acrylate, ethyl (meth)acrylate, n-butyl (meth)acrylate, tert-butyl (meth)acrylate, isobutyl (meth)acrylate, isoamyl (meth)acrylate, 2-ethylhexyl (meth)acrylate, isodecyl (meth)acrylate, 2-hydroxyethyl (meth)acrylate, 2-hydroxypropyl (meth)acrylate, 2-hydroxybutyl (meth)acrylate, 2-ethoxyethyl (meth)acrylate, 2-(2-ethoxyethoxy)ethyl (meth)acrylate, n-butoxyethyl (meth)acrylate and morpholinoethyl (meth)acrylate; an alkoxyalkylene glycol (meth)acrylate such as methoxydiethy(propy)lene glycol (meth)acrylate, methoxytriethy(propy)lene glycol (meth)acrylate, methoxytetraethy(propy)lene glycol (meth)acrylate, methoxypolyethy(propy)lene glycol (meth)acrylate, ethoxydiethy(propy)lene glycol (meth)acrylate, ethoxytriethy(propy)lene glycol (meth)acrylate and ethoxypolyethy(propy)lene glycol (meth)acrylate; an alicyclic (meth)acrylate such as cyclohexyl (meth)acrylate, tetrahydrofuryl (meth)acrylate, isobornyl (meth)acrylate, dicyclopentanyl (meth)acrylate, tricyclopentanyl (meth)acrylate, dicyclopentadienyl (meth)acrylate and pinanyl (meth)acrylate; an amine-type (meth)acrylate such as N,N-dimethylaminoethyl (meth)acrylate, N,N-diethylaminoethyl (meth)acrylate, (meth)acrylamide and diacetone (meth)acrylamide; and a functional group-containing (meth)acrylate such as allyl (meth)acrylate and glycidyl (meth)acrylate.

Specific examples of the polyfunctional type include an alkyl-type (meth)acrylate such as 1,3-propanediol di(meth)acrylate, 1,4-butanediol di(meth)acrylate, 1,6-hexanediol di(meth)acrylate, neopentyl glycol di(meth)acrylate, bis(acryloxyneopentyl glycol) adipate, bis(methacryloxyneopentyl glycol) adipate, epichlorohydrin-modified 1,6-hexanediol di(meth)acrylate (e.g., Kayarad R-167 produced by Nippon Kayaku Co., Ltd.), hydroxypivalic acid neopentyl glycol di(meth)acrylate and caprolactone-modified hydroxypivalic acid neopentyl glycol di(meth)acrylate (e.g., Kayarad HX series produced by Nippon Kayaku Co., Ltd.); an alkylene glycol-type (meth)acrylate such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, epichlorohydrin-modified ethylene glycol di(meth)acrylate (e.g., Denacol DA(M)-811 produced by Nagase & Co., Ltd.), epichlorohydrin-modified ethylene glycol di(meth)acrylate (e.g., Denacol DA(M)-851 produced by Nagase & Co., Ltd.), propylene glycol di(meth)acrylate, dipropylene glycol di(meth)acrylate, tripropylene glycol di(meth)acrylate, tetrapropylene glycol di(meth)acrylate, polypropylene glycol di(meth)acrylate and epichlorohydrin-modified propylene glycol di(meth)acrylate (e.g., DA(M)-911 produced by Nagase & Co., Ltd.); a trimethylolpropane-type (meth)acrylate such as trimethylolpropane tri(meth)acrylate, ditrimethylolpropane tri(meth)acrylate, neopentyl glycol-modified trimethylolpropane di(meth)acrylate (e.g., Kayarad R-604 produced by Nippon Kayaku Co., Ltd.), ethylene oxide-modified trimethylolpropane tri(meth)-acrylate (e.g., Sartomer SR-454), propylene oxide-modified trimethylolpropane tri(meth)acrylate (e.g., TPA-310 produced by Nippon Kayaku Co., Ltd.) and epichlorohydrin-modified trimethylolpropane tri(meth)acrylate (e.g., DA(M)-321 produced by Nagase & Co., Ltd.); a pentaerythritol-type (meth)acrylate such as pentaerythritol tri(meth)acrylate, pentaerythritol tetra(meth)acrylate, stearic acid-modified pentaerythritol di(meth)acrylate (e.g., Aronix M-233 produced by Toagosei Chemical Industry Co., Ltd.), dipentaerythritol hexa(meth)acrylate, dipentaerythritol monohydroxypenta(meth)acrylate, alkyl-modified dipentaerythritol poly(meth)acrylates (e.g., Kayarad D-310, 320 and 330 produced by Nippon Kayaku Co., Ltd.) and caprolactone-modified dipentaerythritol poly(meth)acrylates (e.g., Kayarad DPCA-20, 30, 60 and 120 produced by Nippon Kayaku Co., Ltd.); a glycerol-type (meth)acrylate such as glycerol di(meth)acrylate, epichlorohydrin-modified glycerol tri(meth)acrylate (e.g., Denacol DA(M)-314 produced by Nagase & Co., Ltd.) and triglycerol di(meth)acrylate; an alicyclic (meth)acrylate such as dicyclopentanyl di(meth)acrylate, tricyclopentanyl di(meth)acrylate, cyclohexyl di(meth)acrylate and methoxylated cyclohexyl di(meth)acrylate (e.g., CAM-200 produced by Sanyo Kokusaku Pulp Co., Ltd.); and an isocyanurate-type (meth)acrylate such as tris(acryloxyethyl) isocyanurate (e.g., Aronix M-315 produced Toagosei Chemical Industry Co., Ltd.), tris(methacryloxyethyl) isocyanurate, caprolactone-modified tris(acryloxyethyl) isocyanurate and caprolactone-modified tris(methacryloxyethyl) isocyanurate.

Out of the compounds comprising only an aliphatic group and having a polymerizable ethylenically unsaturated group, for example, a compound further containing a sulfur atom in the molecule is described below. Examples of the monofunctional type include an alkoxyalkylene glycol thio(meth)acrylate such as methoxydiethy(propy)lene glycol thio(meth)acrylate, methoxytriethy(propy)lene glycol thio(meth)acrylate, methoxytetraethy(propy)lene glycol thio(meth)acrylate, methoxypolyethy(propy)lene glycol thio(meth)acrylate, ethoxydiethy(propy)lene glycol thio(meth)acrylate, ethoxytriethy(propy)lene glycol thio(meth)acrylate and ethoxypolyethy(propy)lene glycol thio(meth)acrylate; and an alicyclic thio(meth)acrylate such as cyclohexyl thio(meth)acrylate, tetrahydrofuryl thio(meth)acrylate, isobornyl thio(meth)acrylate, dicyclopentanyl thio(meth)acrylate, tricyclopentanyl thio(meth)acrylate, dicyclopentadienyl thio(meth)acrylate and pinanyl thio(meth)acrylate.

Examples of the polyfunctional type include an alkyl-type thio(meth)acrylate such as 1,3-propanediol dithio(meth)acrylate, 1,4-butanediol dithio(meth)acrylate, 1,6-hexanediol dithio(meth)acrylate, neopentyl glycol dithio(meth)acrylate, bis(thioacryloxyneopentyl glycol) adipate, bis(thiomethacryloxyneopentyl glycol) adipate, epichlorohydrin-modified 1,6-hexanediol dithio(meth)acrylate, hydroxypivalic acid neopentyl glycol dithio(meth)acrylate and caprolactone-modified hydroxypivalic acid neopentyl glycol dithio(meth)acrylate; an alkylene glycol-type thio(meth)acrylate such as ethylene glycol dithio(meth)acrylate, diethylene glycol dithio(meth)acrylate, triethylene glycol dithio(meth)acrylate, tetraethylene glycol dithio(meth)acrylate, polyethylene glycol dithio(meth)acrylate, epichlorohydrin-modified ethylene glycol dithio(meth)acrylate, epichlorohydrin-modified diethylene glycol dithio(meth)acrylate, propylene glycol dithio(meth)acrylate, dipropylene glycol dithio(meth)acrylate, tripropylene glycol dithio(meth)acrylate, tetrapropylene glycol dithio(meth)acrylate, polypropylene glycol dithio(meth)acrylate and epichlorohydrin-modified propylene glycol dithio(meth)acrylate; a trimethylolpropane-type thio(meth)acrylate such as trimethylolpropane trithio(meth)acrylate, ditrimethylolpropane trithio(meth)acrylate, neopentyl glycol-modified trimethylolpropane dithio(meth)acrylate, ethylene oxide-modified trimethylolpropane trithio(meth)acrylate, propylene oxide-modified trimethylolpropane trithio(meth)acrylate and epichlorohydrin-modified trimethylolpropane trithio(meth)acrylate; a pentaerythritol-type thio(meth)acrylate such as pentaerythritol trithio(meth)acrylate, pentaerythritol tetrathio(meth)acrylate, stearic acid-modified pentaerythritol dithio(meth)acrylate, dipentaerythritol hexathio(meth)acrylate, dipentaerythritol monohydroxypentathio(meth)acrylate, alkyl-modified dipentaerythritol polythio(meth)acrylate and caprolactone-modified dipentaerythritol polythio(meth)acrylates; a glycerol-type thio(meth)acrylate such as glycerol dithio(meth)acrylate, epichlorohydrin-modified glycerol trithio(meth)acrylate and triglycerol dithio(meth)acrylate; an alicyclic thio(meth)acrylate such as dicyclopentanyl dithio(meth)acrylate, tricyclopentanyl dithio(meth)acrylate, cyclohexyl dithio(meth)acrylate, methoxylated cyclohexyl dithio(meth)acrylate; and an isocyanurate-type thio(meth)acrylate such as tris(thioacryloxyethyl) isocyanurate, tris(thiomethacryloxyethyl) isocyanurate, caprolactone-modified tris(thioacryloxyethyl) isocyanurate and caprolactone-modified tris(thiomethacryloxyethyl) isocyanurate. One of these compounds may be used alone, or a plurality thereof may be mixed and used.

Out of the compounds having an ethylenically unsaturated group, examples of the compound having an aromatic ring or(and) a halogen atom in the molecule include styrenes such as styrene, α-methylstyrene and 4-methoxy(or ethoxy)styrene; a di- or poly-(meth)acrylate compound such as phenyl (meth)acrylate, 4-phenylethyl (meth)acrylate, 4-methoxycarbonylphenyl (meth)acrylate, 4-ethoxycarbonylphenyl (meth)acrylate, 4-butoxycarbonylphenyl (meth)acrylate, 4-tert-butylphenyl (meth)acrylate, benzyl (meth)acrylate, phenoxy (meth)acrylate, phenoxyhydroxypropyl (meth)acrylate, 4-phenoxyethyl (meth)acrylate, 4-phenoxydiethylene glycol (meth)acrylate, 4-phenoxytetraethylene glycol (meth)acrylate, 4-phenoxyhexaethylene glycol (meth)acrylate, EO-modified phenoxylated phosphoric acid (meth)acrylate, EO-modified phthalic acid (meth)acrylate, 4-biphenylyl (meth)acrylate and aromatic polyhydroxy compound (e.g., hydroquinone, resorcin, catechol, pyrogallol); a (meth)acrylate compound having an aromatic group, such as bisphenol A di(meth)acrylate, ethy(propy)lene oxide-modified bisphenol A di(meth)acrylate, bisphenol F di(meth)acrylate, ethy(propy)lene oxide-modified bisphenol F di(meth)acrylate, bisphenol S di(meth)acrylate, ethy(propy)lene oxide-modified bisphenol S di(meth)acrylate and epichlorohydrin-modified phthalic acid di(meth)acrylate; styrenes and a (meth)acrylate compound, each having an aromatic group substituted by a halogen atom having an atomic weight of chlorine or more, such as p-chlorostyrene, p-bromostyrene, p-chlorophenoxyethyl (meth)acrylate, p-bromophenoxyethyl (meth)acrylate, trichlorophenolethy(propy)lene oxide-modified (meth)acrylate, tribromophenolethy(propy)lene oxide-modified (meth)acrylate, tetrachlorobisphenol A ethy(propy)lene oxide-modified di(meth)acrylate, tetrabromobisphenol A ethy(propy)lene oxide-modified di(meth)acrylate, tetrachlorobisphenol S ethy(propy)lene oxide-modified di(meth)acrylate and tetrabromobisphenol S ethy(propy)lene oxide-modified di(meth)acrylate; a vinyl compound having a heteroaromatic group, such as N-vinylcarbazole and 3-methyl(or ethyl)-N-vinylcarbazole; and a (meth)acrylate compound substituted by a halogen atom, such as 3-chloro-2-hydroxypropyl (meth)acrylate, 3-bromo-2-hydroxypropyl (meth)acrylate, 2,3-dichloropropyl (meth)acrylate and 2,3-dibromopropyl (meth)acrylate.

Examples of the compound having an aromatic ring or(and) a halogen atom in the molecule and further having a sulfur atom in the molecule include a dithio- or polythio-(meth)acrylate compound such as phenyl thio(meth)acrylate, 4-phenylethyl thio(meth)acrylate, 4-methoxycarbonylphenyl thio(meth)acrylate, 4-ethoxycarbonylphenyl thio(meth)acrylate, 4-butoxycarbonylphenyl thio(meth)acrylate, 4-tert-butylphenyl thio(meth)acrylate, benzyl thio(meth)acrylate, 4-phenoxydiethylene glycol thio(meth)acrylate, 4-phenoxytetraethylene glycol thio(meth)acrylate, 4-phenoxyhexaethylene glycol thio(meth)acrylate, 4-biphenylyl thio(meth)acrylate and aromatic polyhydroxy compound (e.g., hydroquinone, resorcin, catechol, pyrogallol); a thio(meth)acrylate compound having an aromatic group, such as bisphenol A dithio(meth)acrylate, ethy(propy)lene oxide-modified bisphenol A dithio(meth)acrylate, bisphenol F dithio(meth)acrylate, ethy(propy)lene oxide-modified bisphenol F dithio(meth)acrylate, bisphenol S dithio(meth)acrylate, ethy(propy)lene oxide-modified bisphenol S dithio(meth)acrylate and epichlorohydrin-modified phthalic acid dithio(meth)acrylate; a thio(meth)acrylate compound having an aromatic group substituted by a halogen atom having an atomic weight of chlorine or more, such as trichlorophenolethy(propy)lene oxide-modified thio(meth)acrylate, tribromophenolethy(propy)lene oxide-modified thio(meth)acrylate, tetrachlorobisphenol A ethy(propy)lene oxide-modified dithio(meth)acrylate, tetrabromobisphenol A ethy(propy)lene oxide-modified dithio(meth)acrylate, tetrachlorobisphenol S ethy(propy)lene oxide-modified dithio(meth)acrylate and tetrabromobisphenol S ethy(propy)lene oxide-modified dithio(meth)acrylate; and a thio(meth)acrylate compound substituted by a halogen atom, such as 3-chloro-2-hydroxypropyl thio(meth)acrylate, 3-bromo-2-hydroxypropyl thio(meth)acrylate, 2,3-dichloropropyl thio(meth)acrylate and 2,3-dibromopropyl thio(meth)acrylate.

Other examples of the compound having an ethylenically unsaturated bond include an addition-polymerizable compound of undergoing polymerization through ring-opening sigma bond cleavage. This compound is described in K.J. Ivin and T. Saegusa (compilers), Chap. 1 "General Thermodynamics and Mechanistic Aspects of Ring-Opening Polymerization", pp. 1-82, and Chap. 2 "Ring Opening Polymerization via Carbon-Carbon Sigma Bond Cleavage", pp. 83-119, Elsevier, New York (1984), W.J. Bailey et al., J. Macromol. Sci. -Chem., Vol. A21, pp. 1611-1639 (1984), and I. Cho and K.-D. Ahn, J. Polym. Sci., Polym. Lett. Ed., Vol. 15, pp. 751-753 (1977). Specific examples thereof include a vinylcyclopropane such as 1,1-dicyano-2-vinylcyclopropane, 1,1-dichloro-2-vinylcyclopropane, diethyl 2-vinylcyclopropane-1,1-dicarboxylate (EVCD), ethyl 1-acetyl-2-vinyl-1-cyclopropanecarboxylate (EAVC) and ethyl 1-benzoyl-2-vinyl-1-cyclopropanecarboxylate (EBVC). One of these compounds may be used alone, a plurality thereof may be mixed and used, or a mixture with the above-described (meth)acryl compound or vinyl compound may be used.

Specific examples of the amide monomer of an unsaturated carboxylic acid and an aliphatic polyvalent amine compound include methylenebisacrylamide, methylenebismethacrylamide, 1,6-hexamethylenebisacrylamide, 1,6-hexamethylenebismethacrylamide, diethylenetriaminetrisacrylamide, xylylenebisacrylamide, xylylenebismethacrylamide, N-phenylmethacrylamide and diacetoneacrylamide.

Other examples include a polyisocyanate compound having two or more isocyanate groups in one molecule described in JP-B-48-41708, and a vinyl urethane compound having two or more polymerizable vinyl groups in one molecule where a hydroxy group-containing vinyl monomer represented by the formula CH₂=C(R)COOCH₂CH(R')OH (wherein R and R' each represents hydrogen or a methyl group) is added.

Also, urethane acrylates described in JP-A-51-37193, and polyester acrylates and polyfunctional acrylates or methacrylates obtained from epoxy resin and (meth)acrylic acid or the like, described in JP-A-48-64183, JP-B-49-43191 and JP-B-52-30490, may be used.

Furthermore, those described as a photocurable monomer or oligomer in Nippon Secchaku Kyokaishi (Journal of the Adhesion Society of Japan), Vol. 20, No. 7, pp. 300-308 may be used.

In addition, examples of the phosphorus-containing monomer include mono(2-acryloyloxyethyl) acid phosphate (Light Ester PA, trade name, produced by Kyoeisha Chemical Co., Ltd.) and mono(2-methacryloyloxyethyl) acid phosphate (Light Ester PM, trade name, produced by Kyoeisha Chemical Co., Ltd.), and examples of the epoxy acrylate monomer include Ripoxy VR-60 (trade name, produced by Showa Highpolymer Co., Ltd.) and Ripoxy VR-90 (trade name, produced by Showa Highpolymer Co., Ltd.).

Also, NK Ester M-230G (trade name, produced by Shin-Nakamura Chemical Co., Ltd.) and NK Ester 23G (trade name, produced by Shin-Nakamura Chemical Co., Ltd.) may be used.

Other examples include triacrylates (Aronix M-315, trade name, produced by Toa Gosei Chemical Industry Co., Ltd.; Aronix M-325, trade name, produced by Toa Gosei Chemical Industry Co., Ltd.), 2,2'-bis(4-acryloxy-diethoxyphenyl)propane (NK Ester A-BPE-4, trade name, produced by Shin-Nakamura Chemical Co., Ltd.), and tetramethylolmethane tetraacrylate (NK Ester A-TMMT, trade name, produced by Shin-Nakamura Chemical Co., Ltd.).

As the polymerizable urethane acrylate resin, TSR-1920B, TSR-1938 (produced by Teijin Limited) and SCR-500 (produced by Japan Synthetic Rubber Co., Ltd.) are also preferred in view of thermal and mechanical properties.

The cationic polymerizable compound for use in the present invention is a compound of starting its polymerization under the action of an acid generated by the two-photon absorption compound and a cationic polymerization initiator, and examples thereof include the compounds described in J.V. Crivello, Chemtech. Oct., page 624 (1980), JP-A-62-149784, and Nippon Secchaku Kyokaishi (Journal of the Adhesion Society of Japan), Vol. 26, No. 5, pp. 179-187 (1990).

The cationic polymerizable compound for use in the present invention is preferably a compound having at least one oxirane ring, oxetane ring or vinyl ether group moiety in the molecule, more preferably a compound having an oxirane ring moiety.

Specifically, the cationic polymerizable compound includes the following cationic polymerizable monomers and prepolymers (e.g., dimer, oligomer) comprising such a cationic polymerizable monomer.

Specific examples of the cationic polymerizable monomer having an oxirane ring include compounds such as glycerol diglycidyl ether, glycerol triglycidyl ether, diglycerol triglycidyl ether, diglycerol polyglycidyl ether, pentaerythritol polyglycidyl ether, 1,4-bis(2,3-epoxypropoxyperfluoroisopropyl)cyclohexane, sorbitol tetraglycidyl ether, trimethylolpropane diglycidyl ether, trimethylolpropane monoglycidyl ether, trimethylolpropane triglycidyl ether, resorcin diglycidyl ether, 1,6-hexanediol diglycidyl ether, ethylene glycol diglycidyl ether, ethylene glycol monoglycidyl ether, polyethylene glycol diglycidyl ether, propylene glycol diglycidyl ether, propylene glycol monoglycidyl ether, neopentyl glycol diglycidyl ether, neopentyl glycol monoglycidyl ether, phenyl glycidyl ether, p-tert-butylphenyl glycidyl ether, diglycidyl adipate, diglycidyl phthalate, dibromophenyl glycidyl ether, dibromoneopentyl glycol diglycidyl ether, 1,2,7,8-diepoxyoctane, 1,6-dimethylolperfluorohexanediglycidyl ether, 4,4'-bis(2,3-epoxypropoxyperfluoroisopropyl)diphenyl ether, vinylcyclohexene dioxide, 3,4-epoxycyclohexylmethyl-3',4'-epoxycyclohexane carboxylate, 3,4-epoxycyclohexyloxirane, bis(3,4-epoxycyclohexyl) adipate, bis(3,4-epoxy-6-methyl-cyclohexylmethyl) adipate, 2,2-bis[4-(2,3-epoxypropoxy)cyclohexyl]propane, 2,2-bis[4-(2,3-epoxypropoxy)cyclohexyl]hexafluoropropane, 1,2,5,6-diepoxy-4,7-methanoperhydroindene, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methylcyclohexylmethyl-4,5-epoxy-2-methylcyclohexane carboxylate, ethylene glycol-bis(3,4-epoxycyclohexane carboxylate), bis-(3,4-epoxycyclohexylmethyl) adipate, di-2,3-epoxycyclopentyl ether, vinyl glycidyl ether, allyl glycidyl ether, 2-ethylhexyl glycidyl ether, styrene oxide, p-bromostyrene oxide, bisphenol-A-diglycidyl ether, tetrabromobisphenol-A-diglycidyl ether and bisphenol-F-diglycidyl ether.

Also, HS-681 (produced by Asahi Denka Co., Ltd.), SOMOS8100 (produced by DMS-SOMOS), SCR-8100 series (produced by Japan Synthetic Rubber Co., Ltd.), SL-7540 (produced by Vantico) and SCR-701 (produced by D-MEC Ltd. and Japan Synthetic Rubber Co., Ltd.) can be used as the polymerizable epoxy-based resin.

Specific examples of the cationic polymerizable monomer having an oxetane ring include the compounds described above as specific examples of the cationic polymerizable monomers having an oxirane ring, where the oxirane ring is replaced by an oxetane ring.

Specific examples of the cationic polymerizable monomer having a vinyl ether group moiety include compounds such as vinyl-2-chloroethyl ether, vinyl-n-butyl ether, vinyl-tert-butyl ether, ethylene glycol divinyl ether, ethylene glycol monovinyl ether, propylene glycol divinyl ether, propylene glycol monovinyl ether, neopentyl glycol divinyl glycol, neopentyl glycol monovinyl glycol, glycerol divinyl ether, glycerol trivinyl ether, triethylene glycol divinyl ether, trimethylolethane trivinyl ether, trimethylolpropane monovinyl ether, trimethylolpropane divinyl ether, trimethylolpropane trivinyl ether, diglycerol trivinyl ether, sorbitol tetravinyl ether, allyl vinyl ether, 2,2-bis(4-cyclohexanol)propane divinyl ether, 2,2-bis(4-cyclohexanol)trifluoropropane divinyl ether, 1,4-cyclohexanedimethanol divinyl ether, 4-vinyl ether styrene, hydroquinone divinyl ether, phenyl vinyl ether, bisphenol A divinyl ether, tetrabromobisphenol A divinyl ether, bisphenol F divinyl ether, phenoxyethylene vinyl ether and p-bromophenoxyethylene vinyl ether.

Generally, the ratio of respective components in the two-photon absorption three-dimensional recording material of the present invention is preferably in the following range of mass ratio (%) based on the entire mass of the composition.

### Binder:

Preferably from 0 to 90 mass%, more preferably from 45 to 75 mass%.

### Polymerizable Compound:

Preferably from 5 to 60%, more preferably from 15 to 50 mass%.

### Two-photon absorption Compound:

Preferably from 0.01 to 10 mass%, more preferably from 0.1 to 7 mass%.

### Polymerization Initiator:

Preferably from 0.01 to 10 mass%, more preferably from 0.1 to 7 mass%.

### <Other Constituent Components in Recording Layer>

In the two-photon absorption three-dimensional recording material for use in the present invention, additives such as chain transfer agent, heat stabilizer, plasticizer and solvent may be appropriately used, if desired.

A polymer soluble in an organic solvent and comprising, as the copolymerization component, one unsaturated monomer or two or more unsaturated monomers selected from a hydroxy vinyl ether, an olefin, a haloolefin, an unsaturated carboxylic acid or an ester thereof, and a vinyl carboxylate, may be used. This polymer preferably has a weight average molecular weight of 5,000 to 200,000 and a fluorine atom content of 5 to 70 mass%.

Examples of the fluoroolefin in the fluorine atom-containing polymer include tetrafluoroethylene, chlorotrifluoroethylene, vinyl fluoride and vinylidene fluoride. Examples of the alkyl vinyl ether as the other copolymerization component include ethyl vinyl ether, isobutyl vinyl ether and n-butyl vinyl ether. Examples of the alicyclic vinyl ether include cyclohexyl vinyl ether and its derivatives. Examples of the hydroxy vinyl ether include hydroxybutyl vinyl ether. Examples of the olefin and haloolefin include ethylene, propylene, isobutylene, vinyl chloride and vinylidene chloride. Examples of the vinyl carboxylate include vinyl acetate and n-vinyl butyrate. Examples of the unsaturated carboxylic acid or an ester thereof include an unsaturated carboxylic acid such as (meth)acrylic acid and crotonic acid; C1-C18 alkyl esters of (meth)acrylic acid, such as methyl (meth)acrylate, ethyl (meth)acrylate, propyl (meth)acrylate, isopropyl (meth)acrylate, butyl (meth)acrylate, hexyl (meth)acrylate, octyl (meth)acrylate and lauryl (meth)acrylate, C2-C8 hydroxyalkyl esters of (meth)acrylic acid, such as hydroxyethyl (meth)acrylate and hydroxypropyl (meth)-acrylate; an N,N-dimethylaminoethyl (meth)acrylate; and an N,N-diethylaminoethyl (meth)acrylate. One of these radical polymerizable monomers may be used alone, or two or more kinds thereof may be used in combination. Also, if desired, a part of the monomer may be replaced by another radical polymerizable monomer, for example, a vinyl compound such as styrene, α-methylstyrene, vinyltoluene and (meth)acrylonitrile. Furthermore, other monomer derivatives such as carboxylic acid group-containing fluoroolefin and glycidyl group-containing vinyl ether may also be used.

Specific examples of the above-described fluorine atom-containing polymer include "Lumifron" series having a hydroxyl group and being soluble in an organic solvent (for example, Lumifron LF200, weight average molecular weight: about 50,000, produced by Asahi Glass Company, Ltd.). In addition, a fluorine atom-containing polymer soluble in an organic solvent is commercially available, for example, from Daikin Kogyo Co., Ltd., Central Glass Co., Ltd. and Penwalt, and these can also be used.

In the two-photon absorption polymerizable composition for use in the present invention, a chain transfer agent is preferably used in some cases. Preferred examples of the chain transfer agent include thiols such as 2-mercaptobenzoxazole, 2-mercaptobenzothiazole, 2-mercaptobenzimidazole, 4-methyl-4H-,1,2,4-triazole-3-thiol, 4,4-thiobisbenzenethiol, p-bromobenzenethiol, thiocyanuric acid, 1,4-bis(mercaptomethyl)benzene and p-tolucnethiol; thiols described in U.S. Patent 4,414,312 and JP-A-64-13144; disulfides described in JP-A-2-291561; thions described in U.S. Patent 3,558,322 and JP-A-64-17048; and O-acylthiohydroxamate and N-alkoxypyridine thions described in JP-A-2-291560.

Particularly, in the case where the polymerization initiator is a 2,4,5-triphenylimidazolyl dimer, a chain transfer agent is preferably used.

The amount of the chain transfer agent used is preferably from 1.0 to 30 mass% based on the entire composition.

In the two-photon absorption polymerizable composition for use in the present invention, a heat stabilizer (thermal polymerization inhibitor) may be added for the purpose of preventing the polymerization during storage and maintaining the storage stability.

Useful examples of the heat stabilizer include hydroquinone, phenidone, p-methoxyphenol, alkyl- or aryl-substituted hydroquinone or quinone, catechol, tert-butyl catechol, pyrogallol, 2-naphthol, 2,6-di-tert-butyl-p-cresol, phenothiazine and chloranil. Also, dinitroso dimers described in U.S. Patents 4,168,982 by Pazos are useful.

The heat stabilizer is preferably added in a range from 0.001 to 5 parts by mass per 100 parts by mass of the compound having an unsaturated bond.

The plasticizer is used for varying the adhesive property, flexibility, hardness and other various mechanical properties of the two-photon polymerizable recording layer. Examples of the plasticizer include triethylene glycol dicaprylate, triethylene glycol bis(2-ethylhexanoate), tetraethylene glycol diheptanoate, diethyl sebacate, dibutyl suberate, tris(2-ethylhexyl)phosphate, tricresyl phosphate and dibutyl phthalate.

In the present invention, the two-photon absorption polymerizable composition may be prepared by an ordinary method, for example, by mixing the above-described essential components and arbitrary components with or without a solvent.

Examples of the solvent include a ketone-based solvent such as methyl ethyl ketone, methyl isobutyl ketone, acetone and cyclohexanone, an ester-based solvent such as ethyl acetate, butyl acetate, ethylene glycol diacetate, ethyl lactate and cellosolve acetate, a hydrocarbon-based solvent such as cyclohexane, toluene and xylene, an ether-based solvent such as tetrahydrofuran, dioxane and diethyl ether, a cellosolve-based solvent such as methyl cellosolve, ethyl cellosolve, butyl cellosolve and dimethyl cellosolve, an alcohol-based solvent such as methanol, ethanol, n-propanol, 2-propanol, n-butanol and diacetone alcohol, a fluorine-based solvent such as 2,2,3,3-tetrafluoropropanol, a halogenated hydrocarbon-based solvent such as dichloromethane, chloroform and 1,2-dichloroethane, and an amide-based solvent such as N,N-dimethylformamide.

The two-photon absorption polymerizable composition may be directly coated or spin-coated on a substrate or may be cast as a film and then laminated on a substrate by an ordinary method. The solvent used can be removed by evaporation at the drying.

### [Examples]

The present invention is specifically described below by referring to Examples based on experimental results, but the present invention is of course not limited to these Examples.

### [Preparation of Polymerization Composition for Two-photon Absorption Recording Medium]

### [Comparative Example 1]

Sample 101 in Example of JP-A-2004-346238 is prepared by the method described in the same patent publication and used as the sample of Comparative Example 1. However, in this Comparative Example, a prepared slide is used in place of PET film used in the patent publication above.

### [Polymerization Compositions 101, 102 and 103 for Two-photon Absorption Recording Medium]

Polymerization Compositions 101, 102 and 103 for Two-photon Absorption Recording Medium are prepared by decreasing the weight ratio of Polymerizable Compound M-1 used in Comparative Example 1 to 23% and adding instead 20% of Dye DM-2, DM-15 or DM-51 having a polymerizable group.

### [Production of Two-photon Absorption Recording Material]

Polymerization Compositions 101, 102 and 103 for Two-photon Absorption Recording Medium each is bar-coated on a prepared slide and dried, and a prepared slide is put thereon to produce two-photon absorption recording materials of Examples 1, 2 and 3.

### [Recording and Readout on Two-photon Absorption Recording Medium]

For the information recording on the two-photon absorption recording material of the present invention, a Ti:sapphire laser (pulse width: 100 fs, repetition: 80 MHz, average output: 1 W, peak power: 100 kW) is used, and the two-photon absorption recording material is irradiated with the laser light converged through an NA=0.6 lens, whereby information recording is performed. At the two-photon recording, recording pits are previously formed in each two-photon absorption recording material by stepwise varying the recording power from a lower power to a higher power, and the recording power of forming a recording pit having a diameter of 1 µm in the plane is taken as the recording power in each recording material. In the recording process, a polymerization reaction of the polymerizable compound is induced in the light-irradiated portion by the irradiation of recording light and a polymer substance is produced, as a result, a refractive index difference is generated between the light-irradiated portion and the light-unirradiated portion. In the information readout process, the refractive index difference between the recorded area and the unrecorded area, generated by the recording, is read out as a difference in the reflected light intensity of readout light.

### [Evaluation of Two-Photon Recording Material]

Information is recorded in each of two-photon absorption recording materials of Examples 1 to 3 and Comparative Example 1 by irradiating laser light according to the above-described method and immediately after the completion of recording, the recorded portion is read out by using a change in the reflected light intensity.

Assuming that the reflected light intensity obtained from the recording pit observed in Comparative Example 1 is 1, reflected light intensities from recording pits in two-photon recording materials of Examples 1 to 3 are shown in Table 1.

**Table 1**

| | Recording Wavelength/nm | Relative Reflected Light Intensity |
|---|---|---|
| Example 1 | 800 | 1.1 |
| Example 2 | 700 | 1.2 |
| Example 3 | 700 | 1.1 |
| Comparative Example 1 | 800 | 1.0 |

In the case of using a dye having a polymerizable group, the amount of change in the refractive index between before and after the recording becomes large in all samples and since this allows reflection to readily occur, an increase in the reflected light intensity is observed.

The two-photon absorption three-dimensional recording material of the present invention can produce a large refractive index difference between the recorded pit area and the unrecorded area in optical recording using non-resonant two-photon absorption and therefore, is assured of high readout sensitivity.

## Claims

1. A simultaneous two-photon absorption three-dimensional recording material comprising at least one kind of dye having at least one polymerizable group,
further comprising a two-photon absorption compound, a polymerization initiator and a binder, in addition to said dye having at least one polymerizable group.

2. The simultaneous two-photon absorption three-dimensional recording material as claimed in claim 1, wherein
the dye having at least one polymerizable group has an absorption spectrum showing that linear absorption of said dye is not present in a wavelength region corresponding to a recording wavelength of recording light that induces simultaneous two-photon absorption; a wavelength region in which the molar extinction coefficient of linear absorption of said dye is 10,000 or more is present in a shorter wavelength region than the wavelength of said recording light; and the molar extinction coefficient of linear absorption of said dye at the wavelength of readout light of a simultaneous two-photon absorption three-dimensional recording medium obtained from said two-photon recording material is 100 or less.

3. The simultaneous two-photon absorption three-dimensional recording material as claimed in claim 1, wherein
the refractive index of said dye having at least one polymerizable group at a readout wavelength of a two-photon recording medium obtained from the simultaneous two-photon absorption three-dimensional recording material is larger than the refractive index of the binder.

4. The simultaneous two-photon absorption three-dimensional recording material as claimed in claim 2, comprising a compound not having the absorption properties specified in claim 2 and having at least one polymerizable group, in addition to the dye having at least one polymerizable group specified in claim 2.

5. The simultaneous two-photon absorption three-dimensional recording material as claimed claim 4, wherein
the refractive index at a readout wavelength of said compound not having said absorption properties and having at least one polymerizable group is larger than the refractive index of the binder at said wavelength.

6. The simultaneous two-photon absorption three-dimensional recording material as claimed in claim 1, wherein
said binder does not contain an aryl group, an aromatic heterocyclic group, a chlorine atom, a bromine atom, an iodine atom or a sulfur atom.

7. The simultaneous two-photon absorption three-dimensional recording material as claimed in claim wherein
said binder comprises at least one polymer compound selected from the group consisting of cellulose esters, polyvinyl alcohols, polyvinyl acetate, polyvinyl butyral, polyvinyl formal, and fluorine-containing polymer compounds.

8. The simultaneous two-photon absorption three-dimensional recording material as claimed in claim 1, wherein
said binder is a polymer compound having a three-dimensional crosslinked structure formed form a thermal crosslinking compound.

9. The simultaneous two-photon absorption three-dimensional recording material as claimed in claim 1, wherein
said binder is a polymer compound having a three-dimensional crosslinked structure of a polyurethane compound obtained by thermal crosslinking of polyisocyanates and polyalcohols.

10. A simultaneous two-photon absorption three-dimensional recording medium made from the simultaneous two-photon absorption three-dimensional recording material as claimed in claim 1, which has a recording layer where the coexisting compound having a polymerizable group is polymerized by energy or electron transfer between the polymerization initiator and the excited state of a two-photon absorption compound produced through simultaneous two-photon absorption of recording light in the light-irradiated portion and a refractive index difference is thereby created between the light-irradiated portion and the light-unirradiated portion.

11. The simultaneous two-photon absorption three-dimensional recording material as claimed in any one of claim 1, wherein
said two-photon absorption compound is an organic dye.

12. The simultaneous two-photon absorption three-dimensional recording material as claimed in claim 1, wherein
said two-photon absorption compound is a methine dye or a phthalocyanine dye.

13. The simultaneous two-photon absorption three-dimensional recording material as claimed in claim 1, wherein
said two-photon absorption compound is a cyanine dye, a merocyanine dye, an oxonol dye, a phthalocyanine dye or a compound represented by the following formula (1): 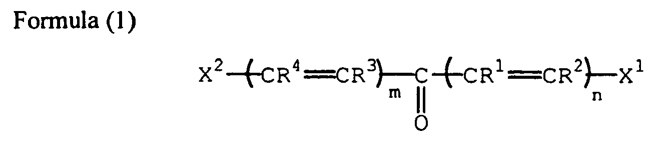 wherein
R¹, R², R³ and R⁴ each independently represents a hydrogen atom or a substituent and some of R¹, R², R³ and R⁴ may combine with each other to form a ring,
n and m each independently represents an integer of 0 to 4 and when n and m each is 2 or more, the plurality of R¹'s, R²'s, R³'s or R⁴'s may be the same or different, provided that n and m are not 0 at the same time, and
X¹ and X² each independently represents an aryl group, a heterocyclic group or a group represented by formula (2): 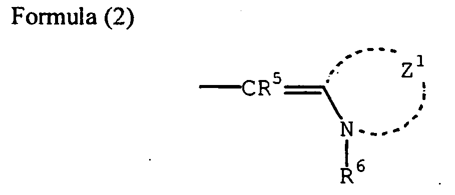 wherein
R⁵ represents a hydrogen atom or a substituent,
R⁶ represents a hydrogen atom, an alkyl group, an alkenyl group, an aryl group or a heterocyclic group, and
Z¹ represents an atomic group for forming a 5- or 6-membered ring.

14. The simultaneous two-photon absorption three-dimensional recording material as claimed in claim 13, wherein
the cyanine dye is represented by the following formula (3), the merocyanine dye is represented by the following formula (4) and the oxonol dye is represented by formula (5): 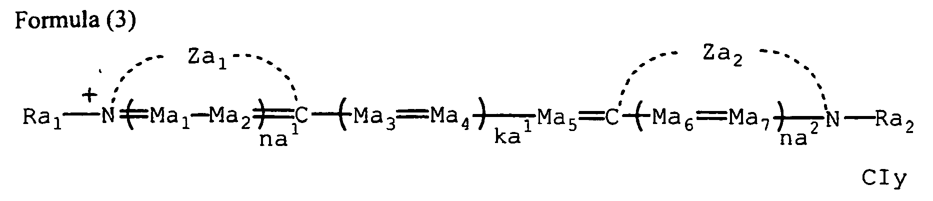 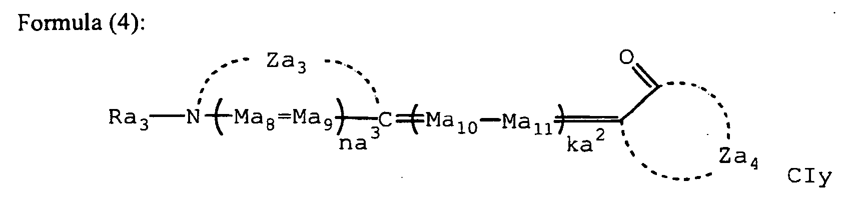 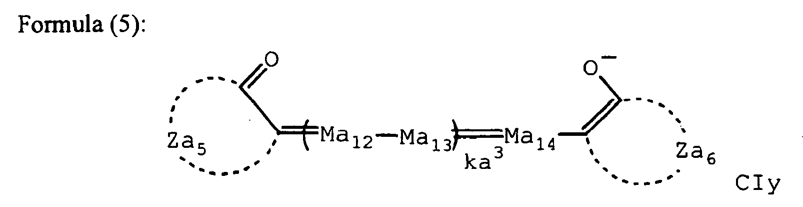 wherein
Za₁, Za₂ and Za₃ each represents an atomic group for forming a 5- or 6-membered nitrogen-containing heterocyclic ring,
Za₄, Za₅ and Za₆ each represents an atomic group for forming a 5- or 6-membered ring,
Ra₁, Ra₂ and Ra₃ each independently represents a hydrogen atom, an alkyl group, an alkenyl group, an aryl group or a heterocyclic group,
Ma₁ to Ma₁₄ each independently represents a methine group which may have a substituent or may form a ring together with another methine group,
na¹, na² and na³ each represents 0 or 1,
ka¹ and ka³ each represents an integer of 0 to 3, provided that when ka¹ is 2 or more, the plurality of Ma₃'s or Ma₄'s may be the same or different and when ka³ is 2 or more, the plurality of Ma₁₂'s or Ma₁₃'s may be the same or different,
ka² represents an integer of 0 to 8, provided that when ka² is 2 or more, the plurality of Ma₁₀'s or Ma₁₁'s may be the same or different,
CI represents an ion for neutralizing the electric charge, and
y represents a number necessary for the neutralization of electric charge.

15. The simultaneous two-photon absorption three-dimensional recording material as claimed in claim 1, wherein
said polymerization initiator contains a polymerization initiator that generates at least one kind of radical, and
the polymerizable compound contains a radical polymerizable compound that is polymerized under the action of the at least one kind of radical.

16. The simultaneous two-photon absorption three-dimensional recording material as claimed in claim 1, wherein
said polymerization initiator contains a polymerization initiator that generates at least one kind of acid, and
the polymerizable compound contains a cationic polymerizable compound that is polymerized under the action of the at least one kind of acid.

17. A three-dimensional recording method utilizing three-dimensional refractive index modulation caused by simultaneous two-photon absorption induced polymerization of the recording material claimed in any of the claims 1 to 16 with simultaneous two-photon excitation by laser light at the wavelength that is longer than the linear absorption bands of the two-photon absorption compound and that linear absorption of the recording material is not present at.

18. The three-dimensional recording method as claimed in claim 17, wherein
the three-dimensional refractive index modulation is generated by change of the compositional ratio of the polymerizable compound and its polymerization reaction product to the binder between the laser-irradiated portion and the laser-unirradiated portion.

## Patentansprüche

1. Material für die dreidimensionale Aufzeichnung mittels simultaner Zwei-Photonen-Absorption, umfassend mindestens eine Art von Farbstoff, der mindestens eine polymerisierbare Gruppe aufweist,
ferner umfassend eine Zwei-Photonen-Absorptionsverbindung, einen Polymerisationsinitiator und ein Bindemittel, zusätzlich zu dem Farbstoff, der mindestens eine polymerisierbare Gruppe aufweist.

2. Material für die dreidimensionale Aufzeichnung mittels simultaner Zwei-Photonen-Absorption gemäß Anspruch 1, worin
der Farbstoff, der mindestens eine polymerisierbare Gruppe aufweist, ein Absorptionsspektrum aufweist, welches zeigt, dass keine lineare Absorption des Farbstoffs in einem Wellenlängenbereich vorliegt, der einer Aufzeichnungswellenlänge von Aufzeichnungslicht entspricht, welches die simultane Zwei-Photonen-Absorption induziert;
eine Wellenlängenregion, worin der molare Extinktionskoeffizient der linearen Absorption des Farbstoffs 10.000 oder größer ist, in einem kürzeren Wellenlängenbereich vorliegt, als die Wellenlänge des Aufzeichnungslichts;
und der molare Extinktionskoeffizient der linearen Absorption des Farbstoffs bei der Wellenlänge des Ausleselichts für ein dreidimensionales Aufzeichnungsmedium der simultanen Zwei-Photonen-Absorption, das aus den Material für die Zwei-Photonen-Aufzeichnung erhalten wird, 100 oder weniger beträgt.

3. Material für die dreidimensionale Aufzeichnung mittels simultaner Zwei-Photonen-Absorption gemäß Anspruch 1, worin
der Brechungsindex des Farbstoffs, der mindestens eine polymerisierbare Gruppe aufweist, bei einer Auslesewellenlänge des Zwei-Photonen-Aufzeichnungsmediums, das aus dem Material für die dreidimensionale Aufzeichnung mittels simultaner Zwei-Photonen-Absorption erhalten wurde, größer ist als der Brechungsindex des Bindemittels.

4. Material für die dreidimensionale Aufzeichnung mittels simultaner Zwei-Photonen-Absorption gemäß Anspruch 2, umfassend eine Verbindung, die nicht die in Anspruch 2 spezifizierten Absorptionseigenschaften aufweist und die mindestens eine polymerisierbare Gruppe aufweist, zusätzlich zu dem Farbstoff, der mindestens eine polymerisierbare Gruppe aufweist, der in Anspruch 2 spezifiziert ist.

5. Material für die dreidimensionale Aufzeichnung mittels simultaner Zwei-Photonen-Absorption gemäß Anspruch 4, worin
der Brechungsindex der Verbindung, die die Absorptionseigenschaften nicht aufweist und die mindestens eine polymerisierbare Gruppe aufweist, bei einer Auslesewellenlänge größer ist als der Brechungsindex des Bindemittels bei dieser Wellenlänge.

6. Material für die dreidimensionale Aufzeichnung mittels simultaner Zwei-Photonen-Absorption gemäß Anspruch 1, worin
das Bindemittel kein(e) Arylgruppe, aromatische heterocyclische Gruppe, Chloratom, Bromatom, Jodatom oder Schwefelatom enthält.

7. Material für die dreidimensionale Aufzeichnung mittels simultaner Zwei-Photonen-Absorption gemäß Anspruch 1, worin
das Bindemittel mindestens eine Polymerverbindung umfasst, ausgewählt aus der Gruppe bestehend aus Celluloseestern, Polyvinylalkoholen, Polyvinylacetat, Polyvinylbutyral, Polyvinylformal und Fluor-haltigen Polymerverbindungen.

8. Material für die dreidimensionale Aufzeichnung mittels simultaner Zwei-Photonen-Absorption gemäß Anspruch 1, worin
das Bindemittel eine Polymerverbindung ist, die eine dreidimensional vernetzte Struktur aufweist, gebildet aus einer thermisch vernetzenden Verbindung.

9. Material für die dreidimensionale Aufzeichnung mittels simultaner Zwei-Photonen-Absorption gemäß Anspruch 1, worin
das Bindemittel eine Polymerverbindung, die eine dreidimensional vernetzte Struktur aufweist, aus einer Polyurethanverbindung ist, erhalten durch thermisches Vernetzen von Polyisocyanaten und Polyalkoholen.

10. Simultanes Zwei-Photonen-Absorptions-dreidimensionales Aufzeichnungsmedium, hergestellt aus dem Material für die dreidimensionale Aufzeichnung mittels simultaner Zwei-Photonen-Absorption gemäß Anspruch 1, welches eine Aufzeichnungsschicht aufweist, worin die koexistierende Verbindung, die eine polymerisierbare Gruppe aufweist, durch Energie- oder Elektronentransfer zwischen dem Polymerisationsinitiator und dem angeregten Zustand der Zwei-Photonen-Absorptionsverbindung, bereitgestellt durch simultane Zwei-Photonen-Absorption von Aufzeichnungslicht, in dem mit Licht bestrahlten Bereich polymerisiert ist und hierdurch ein Unterschied im Brechungsindex zwischen dem mit Licht bestrahlten Bereich und dem nicht mit Licht bestrahlten Bereich verursacht wird.

11. Material für die dreidimensionale Aufzeichnung mittels simultaner Zwei-Photonen-Absprption gemäß Anspruch 1, worin
die Zwei-Photonen-Absorptionsverbindung ein organischer Farbstoff ist.

12. Material für die dreidimensionale Aufzeichnung mittels simultaner Zwei-Photonen-Absorption gemäß Anspruch 1, worin
die Zwei-Photonen-Absorptionsverbindung ein Methinfarbstoff oder ein Phthalocyaninfarbstoff ist.

13. Material für die dreidimensionale Aufzeichnung mittels simultaner Zwei-Photonen-Absorption gemäß Anspruch 1, worin
die Zwei-Photonen-Absorptionsverbindung ein Cyaninfarbstoff, ein Merocyaninfarbstoff, ein Oxonolfarbstoff, ein Phthalocyaninfarbstoff oder eine durch die folgende Formel (1) dargestellte Verbindung ist: 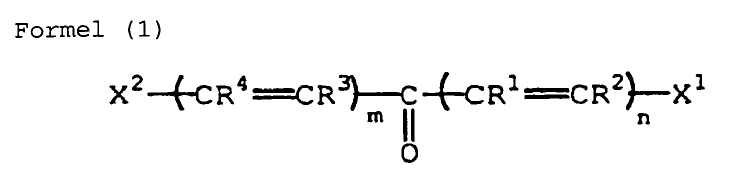 worin
R¹, R², R³ und R⁴ jeweils unabhängig voneinander ein Wasserstoffatom oder einen Substituenten darstellen und einige von R¹, R², R³ und R⁴ miteinander binden können, um einen Ring zu bilden,
n und m jeweils unabhängig voneinander eine ganze Zahl von 0 bis 4 darstellen, und wenn n und m jeweils 2 oder größer sind, die mehreren R¹, R², R³ oder R⁴ gleich oder verschieden sein können, vorausgesetzt, dass n und m nicht gleichzeitig 0 sind, und
X¹ und X² jeweils unabhängig voneinander eine Arylgruppe, eine heterocyclische Gruppe oder eine durch die Formel (2) dargestellte Gruppe darstellen: 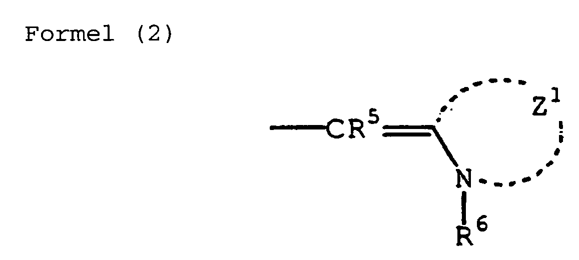 worin
R⁵ ein Wasserstoffatom oder einen Substituenten darstellt,
R⁶ ein Wasserstoffatom, eine Alkylgruppe, eine Alkenylgruppe, eine Arylgruppe oder eine heterocyclische Gruppe darstellt, und
Z¹ eine Atomgruppe zum Bilden eines 5- oder 6-gliedrigen Rings darstellt.

14. Material für die dreidimensionale Aufzeichnung mittels simultaner Zwei-Photonen-Absorption gemäß Anspruch 13, worin
der Cyaninfarbstoff durch die folgende Formel (3) dargestellt wird, der Merocyaninfarbstoff durch die folgende Formel (4) dargestellt wird und der Oxonolfarbstoff durch die Formel (5) dargestellt wird: 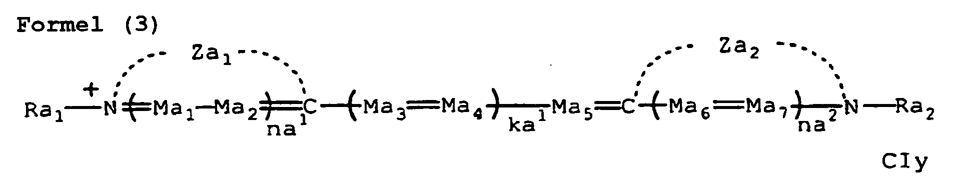 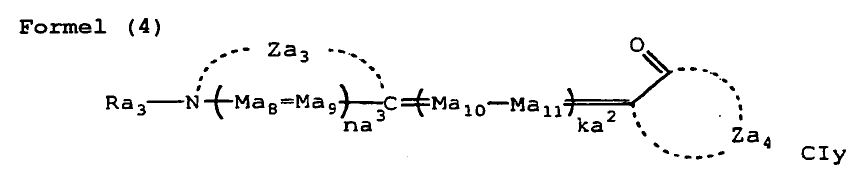 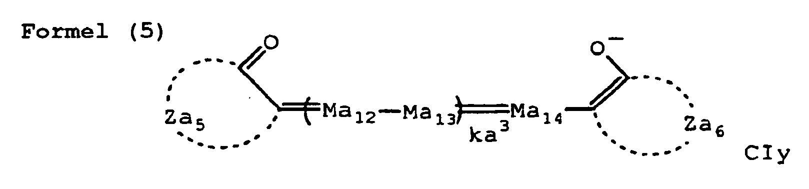 worin
Za₁, Za₂ und Za₃ jeweils eine Atomgruppe zum Bilden eines 5- oder 6-gliedrigen stickstoffhaltigen heterocyclischen Rings darstellen,
Za₄, Za₅ und Za₆ jeweils eine Atomgruppe zum Bilden eines 5- oder 6-gliedrigen Rings darstellen,
Ra₁, Ra₂ und Ra₃ jeweils unabhängig voneinander ein Wasserstoffatom, eine Alkylgruppe, eine Alkenylgruppe, eine Arylgruppe oder eine heterocyclische Gruppe darstellen,
Ma₁ bis Ma₁₄ jeweils unabhängig voneinander eine Methingruppe darstellen, die einen Substituenten aufweisen kann oder einen Ring zusammen mit einer anderen Methingruppe bilden kann,
na¹, na² und na³ jeweils 0 oder 1 darstellen,
ka¹ und ka³ jeweils eine ganze Zahl von 0 bis 3 darstellen, vorausgesetzt, dass, wenn ka¹ 2 oder größer ist, die mehreren Ma₃ oder Ma₄ gleich oder verschieden sein können, und wenn ka³ 2 oder größer ist, die mehreren Ma₁₂ oder Ma₁₃ gleich oder verschieden sein können,
ka² eine ganze Zahl von 0 bis 8 darstellt, vorausgesetzt, dass, wenn ka² 2 oder größer ist, die mehreren Ma₁₀ oder Ma₁₁ gleich oder verschieden sein können,
CI ein Ion zum Neutralisieren der elektrischen Ladung darstellt und
y eine Zahl darstellt, die zur Neutralisation der elektrischen Ladung notwendig ist.

15. Material für die dreidimensionale Aufzeichnung mittels simultaner Zwei-Photonen-Absorption gemäß Anspruch 1, worin
der Polymerisationsinitiator einen Polymerisationsinitiator enthält, der mindestens eine Art Radikal bildet, und
die polymerisierbare Verbindung eine radikalisch polymerisierbare Verbindung enthält, die durch die Wirkung der mindestens einen Art von Radikal polymerisiert wird.

16. Material für die dreidimensionale Aufzeichnung mittels simultaner Zwei-Photonen-Absorption gemäß Anspruch 1, worin
der Polymerisationsinitiator einen Polymerisationsinitiator enthält, der mindestens eine Art Säure bildet, und
die polymerisierbare Verbindung eine kationisch polymerisierbare Verbindung enthält, die durch die Wirkung der mindestens einen Art Säure polymerisiert wird.

17. Dreidimensionales Aufzeichnungsverfahren, bei dem eine dreidimensionale Modulation des Brechungsindex ausgenutzt wird, die durch eine durch die simultane Zwei-Photonen-Absorption induzierte Polymerisation des Aufzeichnungsmaterials gemäß irgendeinem der Ansprüche 1 bis 16 verursacht wird, mit simultaner Zwei-Photonen-Anregung durch Laserlicht bei einer Wellenlänge, die länger ist als die linearen Absorptionsbanden der Zwei-Photonen-Absorptionsverbindung und bei der eine lineare Absorption des Aufzeichnungsmaterials nicht vorliegt.

18. Dreidimensionales Aufzeichnungsverfahren gemäß Anspruch 17, worin
die dreidimensionale Modulation des Brechungsindex durch eine Veränderung des Zusammensetzungsverhältnisses der polymerisierbaren Verbindung und ihrem Polymerisationsreaktionsprodukt zu dem Bindemittel zwischen dem mit Laser bestrahlten Bereich und dem nicht mit Laser bestrahlten Bereich generiert wird.

## Revendications

1. Matériau d'enregistrement tridimensionnel à absorption de deux photons simultanée comprenant au moins un type de colorant ayant au moins un groupe polymérisable,
comprenant en outre un composé à absorption de deux photons, un initiateur de polymérisation et un liant, en plus dudit colorant ayant au moins un groupe polymérisable.

2. Matériau d'enregistrement tridimensionnel à absorption de deux photons simultanée selon la revendication 1, où
le colorant ayant au moins un groupe polymérisable à un spectre d'absorption montrant que l'absorption linéaire dudit colorant n'est pas présente dans une région de longueurs d'onde correspondant à une longueur d'onde d'enregistrement d'une lumière d'enregistrement qui induit une absorption de deux photons simultanée ; une région de longueurs d'onde dans laquelle le coefficient d'extinction molaire de l'absorption linéaire dudit colorant est 10 000 ou plus est présent dans une région de longueurs d'onde plus courtes que la longueur d'onde de ladite lumière d'enregistrement ; et le coefficient d'extinction molaire de l'absorption linéaire dudit colorant à la longueur d'onde de la lumière de lecture d'un support d'enregistrement tridimensionnel à absorption de deux photons simultanée obtenu à partir dudit matériau d'enregistrement de deux photons est 100 ou moins.

3. Matériau d'enregistrement tridimensionnel à absorption de deux photons simultanée selon la revendication 1, où
l'indice de réfraction dudit colorant ayant au moins un groupe polymérisable à une longueur d'onde de lecture d'un support d'enregistrement à deux photons obtenu à partir du matériau d'enregistrement tridimensionnel à absorption de deux photons simultanée est plus grand que l'indice de réfraction du liant.

4. Matériau d'enregistrement tridimensionnel à absorption de deux photons simultanée selon la revendication 2 comprenant un composé n'ayant pas les propriétés d'absorption spécifiées dans la revendication 2 et ayant au moins un groupe polymérisable, en plus du colorant ayant au moins un groupe polymérisable spécifié dans la revendication 2.

5. Matériau d'enregistrement tridimensionnel à absorption de deux photons simultanée selon la revendication 4, où
l'indice de réfraction à une longueur d'onde de lecture dudit composé n'ayant pas lesdites propriétés d'absorption et ayant au moins un groupe polymérisable est supérieur à l'indice de réfraction du liant à ladite longueur d'onde.

6. Matériau d'enregistrement tridimensionnel à absorption de deux photons simultanée selon la revendication 1, où
ledit liant ne contient pas de groupe aryle, de groupe hétérocyclique aromatique, d'atome de chlore, d'atome de brome, d'atome d'iode ou d'atome de soufre.

7. Matériau d'enregistrement tridimensionnel à absorption de deux photons simultanée selon la revendication 1, où
ledit liant comprend au moins un composé polymère choisi dans le groupe consistant en les esters cellulosiques, les poly(alcools vinyliques), le poly(acétate de vinyle), le polyvinylbutyral, le polyvinylformal et les composés polymères contenant du fluor.

8. Matériau d'enregistrement tridimensionnel à absorption de deux photons simultanée selon la revendication 1, où
ledit liant est un composé polymère ayant une structure réticulée tridimensionnelle formée à partir d'un composé de réticulation thermique.

9. Matériau d'enregistrement tridimensionnel à absorption de deux photons simultanée selon la revendication 1, où
ledit liant est un composé polymère ayant une structure réticulée tridimensionnelle d'un composé polyuréthane obtenu par réticulation thermique de polyisocyanates et de polyalcools.

10. Support d'enregistrement tridimensionnel à absorption de deux photons simultanée produit à partir du matériau d'enregistrement tridimensionnel à absorption de deux photons simultanée selon la revendication 1, qui a une couche d'enregistrement où le composé coexistant ayant un groupe polymérisable est polymérisé par transfert d'énergie ou d'électrons entre l'initiateur de polymérisation et l'état excité d'un composé à absorption de deux photons produit par l'absorption de deux photons simultanée d'une lumière d'enregistrement dans la partie irradiée avec la lumière et une différence d'indice de réfraction est ainsi créée entre la partie irradiée avec la lumière et la partie non irradiée avec la lumière.

11. Matériau d'enregistrement tridimensionnel à absorption de deux photons simultanée selon l'une quelconque de la revendication 1, où
ledit composé à absorption de deux photons est un colorant organique.

12. Matériau d'enregistrement tridimensionnel à absorption de deux photons simultanée selon la revendication 1, où
ledit composé à absorption de deux photons est un colorant méthyne ou un colorant phtalocyanine.

13. Matériau d'enregistrement tridimensionnel à absorption de deux photons simultanée selon la revendication 1, où ledit composé à absorption de deux photons est un colorant cyanine, un colorant mérocyanine, un colorant oxonol ou un colorant phtalocyanine ou un composé représenté par la formule (1) suivante : 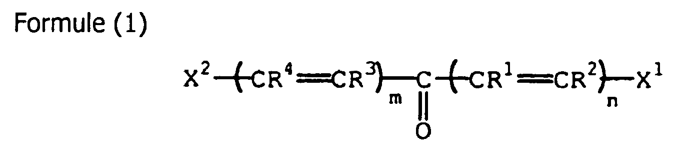 où
R¹, R², R³ et R⁴ représentent chacun indépendamment un atome d'hydrogène ou un substituant et certains de R¹, R², R³ et R⁴ peuvent se combiner entre eux pour former un cycle,
n et m représentent chacun indépendamment un entier de 0 à 4 et quand n et m sont chacun 2 ou plus, la pluralité de R¹, R², R³ ou R⁴ peuvent être identiques ou différents, à condition que n et m ne soient pas 0 en même temps, et
X¹ et X² représentent chacun indépendamment un groupe aryle, un groupe hétérocyclique ou un groupe représenté par la formule (2) : 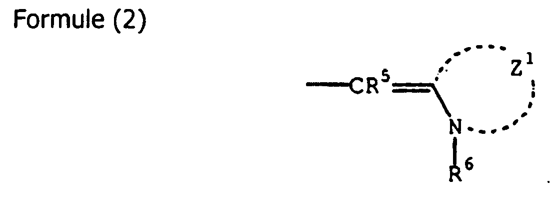 où
R⁵ représente un atome d'hydrogène ou un substituant,
R⁶ représente un atome d'hydrogène, un groupe alkyle, un groupe alcényle, un groupe aryle ou un groupe hétérocyclique, et
Z¹ représente un groupe atomique pour former un cycle à 5 ou 6 chaînons.

14. Matériau d'enregistrement tridimensionnel à absorption de deux photons simultanée selon la revendication 13, où
le colorant cyanine est représenté par la formule (3) suivante, le colorant mérocyanine est représenté par la formule (4) suivante et le colorant oxonol est représenté par la formule (5) : 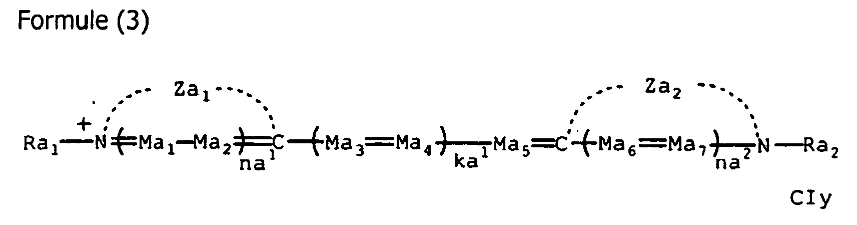 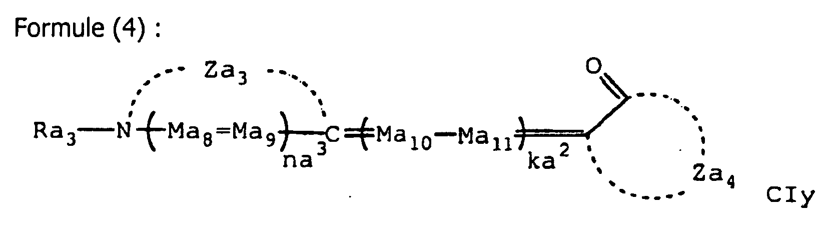 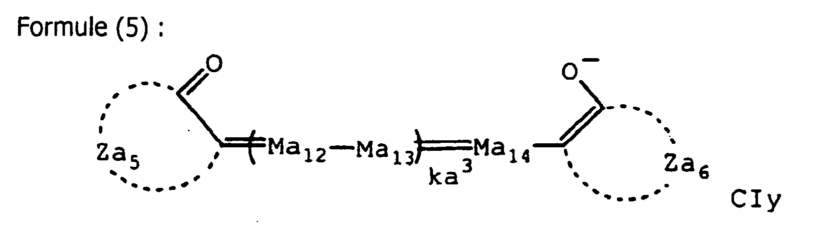 où
Za₁, Za₂, et Za₃ représentent chacun un groupe atomique pour former un cycle hétérocyclique azoté à 5 ou 6 chaînons,
Za₄, Za₅ et Za₆ représentent chacun un groupe atomique pour former un cycle à 5 ou 6 chaînons,
Ra₁, Ra₂ et Ra₃ représentent chacun indépendamment un atome d'hydrogène, un groupe alkyle, un groupe alcényle, un groupe aryle ou un groupe hétérocyclique,
Ma₁ à Ma₁₄ représentent chacun indépendamment un groupe méthyne qui peut avoir un substituant ou peut former un cycle avec un autre groupe méthyne,
na¹, na² et na³ représentent chacun 0 ou 1,
ka¹ et ka³ représentent chacun un entier de 0 à 3, à condition que, quand ka¹ est 2 ou plus, la pluralité de Ma₃ ou Ma₄ peuvent être identiques ou différents et quand ka³ est 2 ou plus, la pluralité de Ma₁₂ ou Ma₁₃ peuvent être identiques ou différents,
ka² représente un entier de 0 à 8, à condition que, quand ka² est 2 ou plus, la pluralité de Ma₁₀ ou Ma₁₁ peuvent être identiques ou différents,
CI représente un ion pour neutraliser la charge électrique, et
y représente un nombre nécessaire pour la neutralisation de la charge électrique.

15. Matériau d'enregistrement tridimensionnel à absorption de deux photons simultanée selon la revendication 1, où
ledit initiateur de photopolymérisation contient un initiateur de polymérisation qui génère au moins un type de radical, et
le composé polymérisable contient un composé polymérisable par polymérisation radicalaire qui est polymérisé sous l'action du au moins un type de radical.

16. Matériau d'enregistrement tridimensionnel à absorption de deux photons simultanée selon la revendication 1, où
ledit initiateur de polymérisation contient un initiateur de polymérisation qui génère au moins un type d'acide, et
le composé polymérisable contient un composé polymérisable par polymérisation cationique qui est polymérisé sous l'action du au moins un type d'acide.

17. Procédé d'enregistrement tridimensionnel utilisant la modulation d'indice de réfraction tridimensionnelle causée par la polymérisation induite par l'absorption de deux photons simultanée du matériau d'enregistrement selon l'une quelconque des revendications 1 à 16 avec excitation de deux photons simultanée par de la lumière laser à la longueur d'onde qui est plus grande que les bandes d'absorption linéaires du composé à absorption de deux photons et où une absorption linéaire du matériau d'enregistrement n'est pas présente.

18. Procédé d'enregistrement tridimensionnel selon la revendication 17, où
la modulation d'indice de réfraction tridimensionnelle est générée par un changement du rapport de composition du composé polymérisable et de son produit de réaction de polymérisation au liant entre la partie irradiée par laser et la partie non irradiée par laser.
